# EUROPEAN PATENT APPLICATION

(11) **EP 4 497 774 A1**
(43) Date of publication of application: **29.01.2025**
(21) Application number: 23774717.5
(22) Date of filing: 16.03.2023
(51) Int. Cl.: C08J 3/22, A61L 29/14, A61L 31/04, A61L 31/12, C08K 5/55, C08L 101/00, C09K 11/06

(54) **MASTERBATCH, RESIN COMPOSITION INCLUDING SAME, AND METHOD FOR PRODUCING MOLDED OBJECT**

(30) Priority: 22.03.2022 JP 2022045216
(71) Applicant: DIC Corporation, Tokyo 174-8520 (JP)
(72) Inventor: TAKEZAWA, Yutaka, Ichihara-shi, Chiba 290-8585 (JP); SAKURAI, Naoto, Sakura-shi, Chiba 285-8668 (JP); TOYOMURA, Kyouichi, Tokyo 103-8233 (JP)
(74) Representative: Kraus & Lederer PartGmbB
(86) International application number: PCT/JP2023/010218
(87) International publication number: WO 2023/182121

(57) **Abstract**

The present invention provides a resin composition which emits near-infrared fluorescence, has high light emitting efficiency, and is relatively easy to produce, and a method for producing a molded object obtained from the resin composition, and further provides a masterbatch capable of producing the resin composition, and a method for producing the masterbatch. More specifically, the present invention provides a masterbatch containing a near-infrared fluorescent material (A), a thermoplastic resin (B) other than a polyamide resin, and a resin (C) different from the thermoplastic resin (B), in which the resin (C) forms a continuous phase, and a dispersed phase containing the near-infrared fluorescent material (A) and the thermoplastic resin (B) is formed in the continuous phase, and a method for producing a resin composition and a molded object, including a step of blending a diluting resin (D) to the masterbatch.

## Description

### TECHNICAL FIELD

The present invention relates to a masterbatch, a method for producing a resin composition using the masterbatch, and a method for producing a molded object obtained from the resin composition. More specifically, the present invention relates to a resin composition which emits near-infrared fluorescence, has high light emitting efficiency, and is relatively easy to produce, a method for producing a molded object obtained from the resin composition, a masterbatch capable of producing the resin composition, and a method for producing the masterbatch.

### BACKGROUND ART

Near-infrared fluorescent dyes are used in industrial products focusing on identification of various products and prevention of counterfeiting, and in recent years, they are also used in medical applications such as probes for living body imaging and test agents. As the characteristics of the near-infrared wavelength region, it is known that the near-infrared wavelength region cannot be visually observed with the naked eye of a human, has little influence on a living body, and has high permeability to a living body such as the skin. Such characteristics can be utilized by incorporating a near-infrared fluorescent dye into the medical device itself. For example, a system has been disclosed in which a near-infrared fluorescent dye is contained in a medical device such as a shunt tube, and the position of the medical device implanted in a living body is checked by irradiating the medical device with near-infrared light from outside the living body (see, for example, PTL 1).

In order to visualize a medical implant embedded under the skin or the like, excitation with near-infrared light having high skin permeability is required, and fluorescence emitted from the medical implant also needs to be in the near-infrared region having high skin permeability. That is, usually, in order to ensure visibility, the near-infrared fluorescent dye itself contained in the medical implant must strongly absorb light in the near-infrared region, and in addition, must emit strong fluorescence. Therefore, as a near-infrared fluorescent dye contained in a resin composition used as a raw material of a medical implant, it is preferable that the maximum absorption wavelength in the resin is in the near-infrared region.

Near-infrared fluorescent dyes include inorganic fluorescent dyes and organic fluorescent dyes. In general, the inorganic near-infrared fluorescent dye has an advantage that the emission wavelength is easily adjusted within a desired range by using various metals, but requires rare earth such as rare earth which is rare and expensive, and nanoparticles having a uniform particle diameter. On the other hand, the organic near-infrared fluorescent dyes are characterized in that they can be relatively easily synthesized and the wavelength thereof can be easily adjusted, but almost no organic near-infrared fluorescent dyes which can be stably mixed in a resin are known.

If a near-infrared fluorescent dye can be mixed and dispersed in a resin, various molded objects emitting near-infrared fluorescence can be produced from the resin as a raw material. As the resin in which the near-infrared fluorescent dye is dispersed, for example, PTL 2 discloses a near-infrared fluorescent resin in which a reactive group-containing near-infrared fluorescent dye obtained by introducing a polyester reactive group into a phthalocyanine dye, a naphthalocyanine dye, or a squaraine dye is copolymerized in polyethylene terephthalate (PET).

On the other hand, as an organic fluorescent dye having a high light emission quantum yield, a boron complex of a π-conjugated compound is known. For example, BODIPY dyes having a boron dipyrromethene skeleton in which a disubstituted boron atom and dipyrromethene (or a derivative thereof) form a complex are known (see, for example, NPL 1). In addition, as BODIPY dyes that emit near-infrared fluorescence, PTL 3 discloses a BODIPY dye having a heterocyclic ring in a BODIPY skeleton. Further, NPL 2 discloses a near-infrared fluorescent dye of a diketopyrrolopyrrole (DPP)-based boron complex having two boron complex units in the molecule, which is obtained by boron-complexing a DPP derivative. These BODIPY dyes and DPP-based boron complexes are mainly used as biomarkers for labeling biomolecules such as nucleic acids and proteins, tumor tissues, and the like, and resins containing BODIPY dyes and DPP-based boron complexes have hardly been reported. As a resin composition containing a BODIPY dye, PTL 4 discloses that a resin emitting fluorescence in a visible light region is obtained by copolymerizing a siloxane-containing BODIPY dye in which an organosiloxanyl group is introduced via an alkylene group into a silicone resin. In addition, PTL 5 discloses a composition that emits fluorescence in a visible light region, in which a BODIPY dye is mixed with a polymer together with a solvent in order to enhance the compatibility of the BODIPY dye that emits visible light. In addition, PTL 6 discloses an optical filter which contains a BODIPY dye having at least one electron-withdrawing group and a resin and has high absorption of light in a visible light region, and PTL 7 discloses a color conversion material which contains a BODIPY dye and a resin and converts short-wavelength light into long-wavelength light.

In addition, PTL 8 discloses a DPP-based boron complex as a compound having absorption in an infrared region and no absorption in a visible light region, and PTL 9 discloses an infrared-absorbing composition containing the compound and a hydrophobic polymer.

### CITATION LIST

### PATENT LITERATURE

PTL 1: JP 2012-115535 A
PTL 2: JP 2003-176289 A
PTL 3: JP 5177427 B
PTL 4: JP 2013-060399 A
PTL 5: US2013/0249137
PTL 6: US2013/0252000
PTL 7: JP 2011-241160 A
PTL 8: JP 5380019 B
PTL 9: JP 2010-090313 A

### NON-PATENT LITERATURE

NPL 1: Tomimori et al., Tetrahedron, 2011, Vol. 67, pp. 3187-3193
NPL 2: Fischer et al., Angewandte Chemie International Edition, 2007, Vol. 46, pp. 3750-3753

### SUMMARY OF INVENTION

### TECHNICAL PROBLEM

Although PTL 3 discloses BODIPY dyes that emit near-infrared fluorescence, it does not describe whether these can be contained in a resin.

On the other hand, since phthalocyanine dyes and the like have a low light emission quantum yield of the dye skeleton itself, the reactive group-containing near-infrared fluorescent material described in PTL 2, which is composed of these dyes, has a problem that a sufficient light emission intensity cannot be obtained.

In addition, the siloxane-containing BODIPY dye described in PTL 4 has good compatibility with a silicone monomer solution before curing, and a silicone resin in which the dye is uniformly dispersed is obtained by curing, but there is a problem in that the compatibility with other resins and resin solutions is low. In addition, the resin composition described in PTL 5 has a problem of safety because the solvent may remain in the resin. In addition, PTL 4, PTL 5, PTL 6, and PTL 7 do not describe a BODIPY dye that emits near-infrared fluorescence, and do not describe application to medical use. Similarly, PTL 8 and PTL 9 do not describe a DPP-based boron complex that emits near-infrared light, and do not report on its application to medical use.

Further, the fluorescent dyes directly covalently bonded to a polymer of a resin, such as those described in PTL 2 and PTL 4, are difficult to produce and have low versatility. In addition, the introduction of a reactive group into a dye has a problem in that the synthetic route is complicated, and thus the production cost is increased, which is not very suitable for industrial mass production. In view of versatility, it is preferable that a resin emitting near-infrared fluorescence can be produced only by mixing and dispersing a near-infrared fluorescent dye in a resin. In particular, when the dye is dispersed in a thermoplastic resin or the like, a method of melt-kneading the resin and the dye may be considered. However, even when the melt-kneading is performed at a temperature lower than the decomposition point of the dye, depending on the type of the resin or the dye and the kneading conditions, the dye may not emit fluorescence due to a cause such as poor dispersion or decomposition of the dye. For example, it has been found that when the dye is kneaded with a resin having an amino group such as a polyamide resin or a thermosetting resin, the dye may be deactivated.

Thus, it is difficult to predict whether the above-described dye can be dispersed in a thermoplastic resin or the like from the thermophysical properties and the like of the dye.

Therefore, an object of the present invention is to provide a resin composition which emits near-infrared fluorescence, has high light emitting efficiency, and is relatively easy to produce, and a method for producing a molded object obtained from the resin composition, and further to provide a masterbatch capable of producing the resin composition, and a method for producing the masterbatch.

### SOLUTION TO PROBLEM

The masterbatch, the resin composition using the same, and the method for producing a molded object according to the present invention are the following [1] to [12].
[1] A masterbatch containing: a near-infrared fluorescent material (A); a thermoplastic resin (B) other than a polyamide resin; and a resin (C) different from the thermoplastic resin (B), in which the resin (C) forms a continuous phase, and a dispersed phase containing the near-infrared fluorescent material (A) and the thermoplastic resin (B) is formed in the continuous phase.
[2] The masterbatch according to [1], in which the near-infrared fluorescent material (A) is at least one compound selected from the group consisting of a compound represented by the following general formula (II₁), a compound represented by the following general formula (II₂), a compound represented by the following general formula (II₃), and a compound represented by the following general formula (II₄): 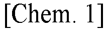 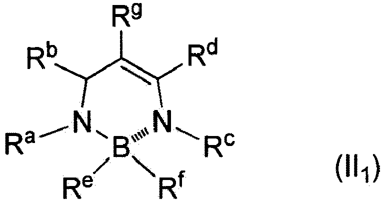 in which
   R^{a} and R^{b} form an aromatic 5-membered ring, an aromatic 6-membered ring, or a condensed aromatic ring formed by condensation of two or three 5-membered rings or 6-membered rings, together with the nitrogen atom to which R^{a} is bonded and the carbon atom to which R^{b} is bonded;
   R^{c} and R^{d} form an aromatic 5-membered ring, an aromatic 6-membered ring, or a condensed aromatic ring formed by condensation of two or three 5-membered rings or 6-membered rings, together with the nitrogen atom to which R^{c} is bonded and the carbon atom to which R^{d} is bonded;
   each of R^{e} and R^{f} independently represents a halogen atom or an oxygen atom; and R^{g} represents a hydrogen atom or an electron withdrawing group,
   provided that, in a case where each of R^{e} and R^{f} is an oxygen atom, R^{e}, the boron atom bonded to R^{e}, R^{a}, and the nitrogen atom bonded to R^{a} may together form a ring, and R^{f}, the boron atom bonded to R^{f}, R^{c}, and the nitrogen atom bonded to R^{c} may together form a ring, in a case where R^{e} is an oxygen atom and does not form a ring, R^{e} is an oxygen atom having a substituent, and in a case where R^{f} is an oxygen atom and does not form a ring, R^{f} is an oxygen atom having a substituent; 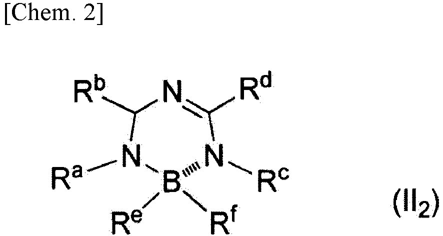 in which each of R^{a} to R^{f} is the same as in the formula (II₁); 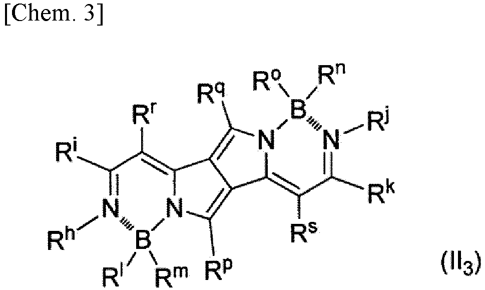 in which
      R^{h} and Rⁱ form an aromatic 5-membered ring, an aromatic 6-membered ring, or a condensed aromatic ring formed by condensation of two or three 5-membered rings or 6-membered rings, together with the nitrogen atom to which R^{h} is bonded and the carbon atom to which R' is bonded;
      R^{j} and R^{k} form an aromatic 5-membered ring, an aromatic 6-membered ring, or a condensed aromatic ring formed by condensation of two or three 5-membered rings or 6-membered rings, together with the nitrogen atom to which R^{j} is bonded and the carbon atom to which R^{k} is bonded;
      each of R^{l}, R^{m}, Rⁿ, and R^{o} independently represents a halogen atom, a C₁₋₂₀ alkyl group, a C₁₋₂₀ alkoxy group, an aryl group, or a heteroaryl group;
      each of R^{p} and R^{q} independently represents a hydrogen atom, a halogen atom, a C₁₋₂₀ alkyl group, a C₁₋₂₀ alkoxy group, an aryl group, or a heteroaryl group; and each of R^{r} and R^{s} independently represents a hydrogen atom or an electron withdrawing group; 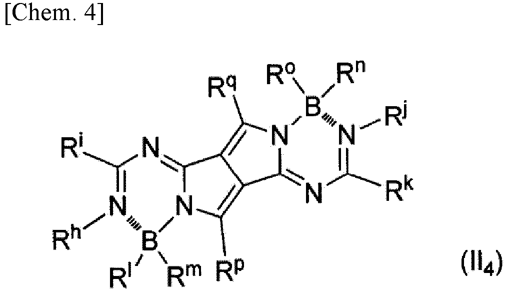
         in which each of R^{h} to R^{q} is the same as in the formula (II₃), and
         in which the masterbatch has a maximum fluorescence wavelength of 650 nm or longer.
[3] The masterbatch according to [2], in which the near-infrared fluorescent material (A) contains at least one compound selected from the group consisting of compounds represented by any of the following general formulae (II₃-1) to (II₃-6) and compounds represented by any of the following general formulae (II₄-1) to (II₄-6): 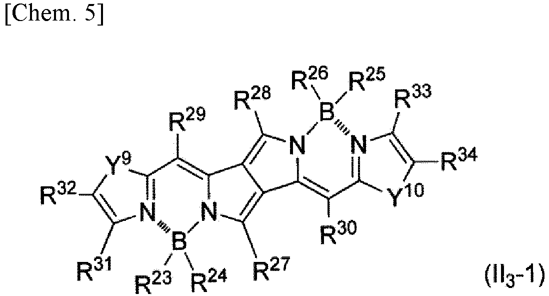 in which
   each of R²³, R²⁴, R²⁵, and R²⁶ independently represents a halogen atom, a C₁₋₂₀ alkyl group, a C₁₋₂₀ alkoxy group, an aryl group, or a heteroaryl group;
   each of R²⁷ and R²⁸ independently represents a hydrogen atom, a halogen atom, a C₁₋₂₀ alkyl group, a C₁₋₂₀ alkoxy group, an aryl group, or a heteroaryl group;
   each of R²⁹ and R³⁰ independently represents a hydrogen atom or an electron withdrawing group;
   each of Y⁹ and Y¹⁰ independently represents a sulfur atom, an oxygen atom, a nitrogen atom, or a phosphorus atom;
   (p4) each of R³¹ and R³² independently represents a hydrogen atom, a halogen atom, a C₁₋₂₀ alkyl group, a C₁₋₂₀ alkoxy group, an aryl group, or a heteroaryl group, or (p5) R³¹ and R³² together form an aromatic 5-membered ring which may have a substituent or an aromatic 6-membered ring which may have a substituent;
   (q4) each of R³³ and R³⁴ independently represents a hydrogen atom, a halogen atom, a C₁₋₂₀ alkyl group, a C₁₋₂₀ alkoxy group, an aryl group, or a heteroaryl group, or
   (q5) R³³ and R³⁴ together form an aromatic 5-membered ring which may have a substituent or an aromatic 6-membered ring which may have a substituent; 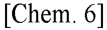 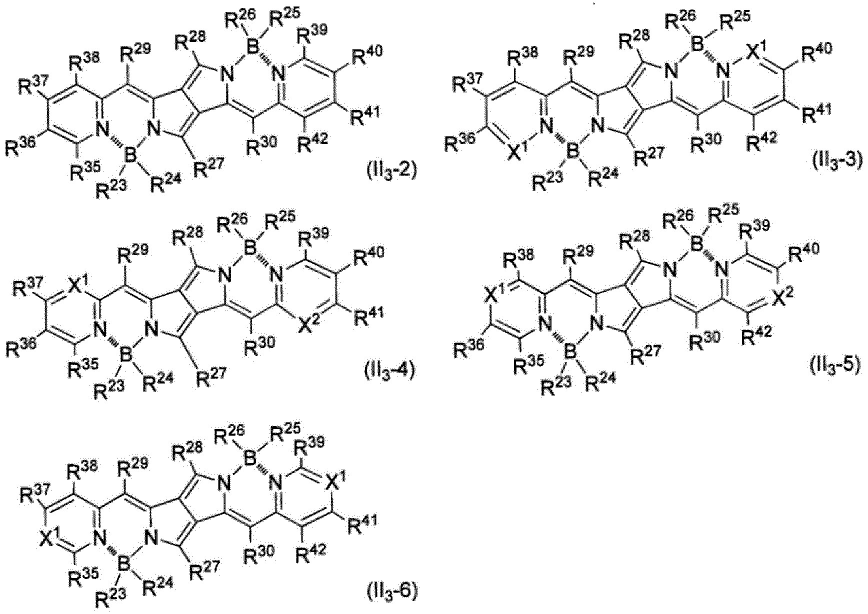
      in which each of R²³ to R³⁰ is the same as in the formula (II₃-1);
      each of X¹ and X² independently represents a nitrogen atom or a phosphorus atom;
      (p6) each of R³⁵, R³⁶, R³⁷, and R³⁸ independently represents a hydrogen atom, a halogen atom, a C₁₋₂₀ alkyl group, a C₁₋₂₀ alkoxy group, an aryl group, or a heteroaryl group, or (p7) R³⁵ and R³⁶ together form an aromatic 5-membered ring which may have a substituent or an aromatic 6-membered ring which may have a substituent, and each of R³⁷ and R³⁸ independently represents a hydrogen atom, a halogen atom, a C₁₋₂₀ alkyl group, a C₁₋₂₀ alkoxy group, an aryl group, or a heteroaryl group, or
      (p8) R³⁶ and R³⁷ together form an aromatic 5-membered ring which may have a substituent or an aromatic 6-membered ring which may have a substituent, and each of R³⁵ and R³⁸ independently represents a hydrogen atom, a halogen atom, a C₁₋₂₀ alkyl group, a C₁₋₂₀ alkoxy group, an aryl group, or a heteroaryl group, or
      (p9) R³⁷ and R³⁸ together form an aromatic 5-membered ring which may have a substituent or an aromatic 6-membered ring which may have a substituent, and each of R³⁵ and R³⁶ independently represents a hydrogen atom, a halogen atom, a C₁₋₂₀ alkyl group, a C₁₋₂₀ alkoxy group, an aryl group, or a heteroaryl group;
      (q6) each of R³⁹, R⁴⁰, R⁴¹, and R⁴² independently represents a hydrogen atom, a halogen atom, a C₁₋₂₀ alkyl group, a C₁₋₂₀ alkoxy group, an aryl group, or a heteroaryl group, or (q7) R³⁹ and R⁴⁰ together form an aromatic 5-membered ring which may have a substituent or an aromatic 6-membered ring which may have a substituent, and each of R⁴¹ and R⁴² independently represents a hydrogen atom, a halogen atom, a C₁₋₂₀ alkyl group, a C₁₋₂₀ alkoxy group, an aryl group, or a heteroaryl group, or
      (q8) R⁴⁰ and R⁴¹ together form an aromatic 5-membered ring which may have a substituent or an aromatic 6-membered ring which may have a substituent, and each of R³⁹ and R⁴² independently represents a hydrogen atom, a halogen atom, a C₁₋₂₀ alkyl group, a C₁₋₂₀ alkoxy group, an aryl group, or a heteroaryl group, or
      (q9) R⁴¹ and R⁴² together form an aromatic 5-membered ring which may have a substituent or an aromatic 6-membered ring which may have a substituent, and each of R³⁹ and R⁴⁰ independently represents a hydrogen atom, a halogen atom, a C₁₋₂₀ alkyl group, a C₁₋₂₀ alkoxy group, an aryl group, or a heteroaryl group; 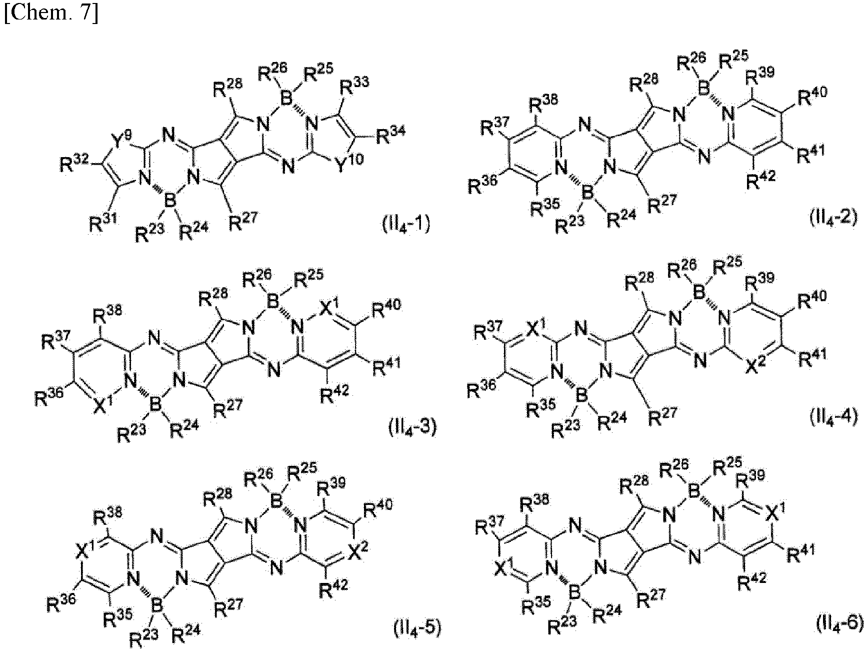
         in which each of R²³ to R²⁸ is the same as in the formula (II₃-1);
         each of R³¹ to R³⁴, Y⁹, and Y¹⁰ in the formula (II₄-1) is the same as in the formula (II₃-1), each of R³⁵ to R⁴² in the formulae (II₄-2) to (II₄-6) is the same as in the formula (II₃-2), and each of
         X¹ and X² in the formulae (II₄-3) to (II₄-6) is the same as in the formula (II₃-3).
[4] The masterbatch according to [3], in which the near-infrared fluorescent material (A) contains at least one compound selected from the group consisting of compounds represented by any of the following general formulae (II₃-7) to (II₃-9) and (II₄-7) to (II₄-9): 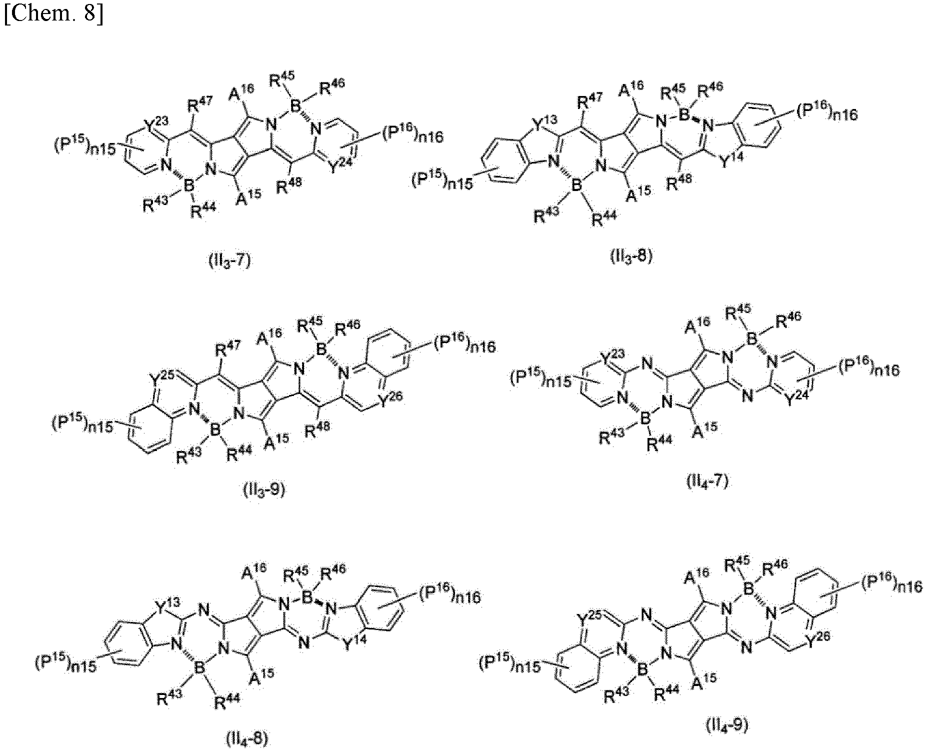
   in which each of Y²³ and Y²⁴ independently represents a carbon atom or a nitrogen atom; each of Y¹³ and Y¹⁴ independently represents an oxygen atom or a sulfur atom;
   each of Y²⁵ and Y²⁶ independently represents a carbon atom or a nitrogen atom;
   each of R⁴⁷ and R⁴⁸ independently represents a hydrogen atom or an electron withdrawing group;
   each of R⁴³, R⁴⁴, R⁴⁵, and R⁴⁶ independently represents a halogen atom or an aryl group which may have a substituent;
   each of P¹⁵ and P¹⁶ independently represents a halogen atom, a C₁₋₂₀ alkyl group, a C₁₋₂₀ alkoxy group, an amino group, a monoalkylamino group, or a dialkylamino group;
   each of n15 and n16 independently represents an integer of 0 to 3;
   each of A¹⁵ and A¹⁶ independently represents a hydrogen atom, a halogen atom, or a phenyl group which may have 1 to 3 substituents selected from the group consisting of a C₁₋₂₀ alkyl group, a C₁₋₂₀ alkoxy group, an amino group, a monoalkylamino group, and a dialkylamino group.
[5] The masterbatch according to any of [1] to [4], in which the content of the near-infrared fluorescent material (A) is 0.001% by mass or more and 0.5% by mass or less with respect to 100% by mass of a total of the near-infrared fluorescent material (A) and the thermoplastic resin (B) other than a polyamide resin.
[6] The masterbatch according to any of [1] to [5], in which the thermoplastic resin (B) other than a polyamide resin contains at least one selected from the group consisting of a thermoplastic polyurethane (TPU) resin, a polycarbonate (PC) resin, a vinyl chloride resin, an acrylic resin, a polyester resin, a polystyrene resin, an olefin resin, and a polyacetal (POM) resin.
[7] The masterbatch according to any of [1] to [6], in which the resin (C) contains at least one selected from the group consisting of a polyamide resin, a polyethylene resin, a polypropylene resin, and a thermosetting resin.
[8] The masterbatch according to [7], in which the resin (C) contains a polyamide resin.
[9] The masterbatch according to [7], in which the resin (C) contains a thermosetting resin.
[10] The masterbatch according to any one of [1] to [9], in which a total content of the near-infrared fluorescent material (A) and the thermoplastic resin (B) is in the range of 20% by mass or more and 80% by mass or less with respect to 100% by mass of a total of the near-infrared fluorescent material (A), the thermoplastic resin (B), and the resin (C).
[11] A method for producing a masterbatch, including: a step of melt-kneading a near-infrared fluorescent material (A) and a thermoplastic resin (B) other than a polyamide resin to obtain a kneaded product; a step of powdering the kneaded product obtained in the previous step to obtain particles containing the powdered near-infrared fluorescent material (A) and the powdered thermoplastic resin (B); and a step of mixing or kneading the particles obtained in the previous step with a resin (C), in which the resin (C) forms a continuous phase and a dispersed phase containing the near-infrared fluorescent material (A) and the thermoplastic resin (B) is formed in the continuous phase.
[12] A method for producing a resin composition, the method including a step of adding a diluting resin (D) to the masterbatch according to any of [1] to [10] and mixing or kneading the mixture, in which the resin composition contains a near-infrared fluorescent material (A), a thermoplastic resin (B) other than a polyamide resin, a resin (C) different from the thermoplastic resin (B), and a resin (D) different from the thermoplastic resin (B), the resins (C) and (D) form a continuous phase, and a dispersed phase containing the near-infrared fluorescent material (A) and the thermoplastic resin (B) is formed in the continuous phase.
[13] The method for producing a resin composition according to [12], in which the resin (C) and the resin (D) contain at least one selected from the group consisting of a polyamide resin, a polyethylene resin, a polypropylene resin, a thermosetting resin, and a crosslinked polyethylene resin.
[14] The method for producing a resin composition according to [12] or [13], in which the content of the resin (D) is in the range of 20% by mass or more and 80% by mass or less with respect to 100% by mass of a total of the near-infrared fluorescent material (A), the thermoplastic resin (B), the resin (C), and the resin (D).
[15] The method for producing a resin composition according to any of [12] to [14], in which the resin composition is used as a medical material.
[16] The method for producing a resin composition according to any of [12] to [15], in which at least a part of the resin composition is used as a material for a medical device used in a body of a patient.
[17] A method for producing a molded object, including a step of melt-molding the resin composition obtained by the production method according to any of [12] to [16].

### ADVANTAGEOUS EFFECTS OF INVENTION

According to the present invention, it is possible to provide a resin composition which emits near-infrared fluorescence, has high light emitting efficiency, and is relatively easy to produce, and a method for producing a molded object obtained from the resin composition, and further to provide a masterbatch capable of producing the resin composition, and a method for producing the masterbatch.

### BRIEF DESCRIPTION OF DRAWINGS

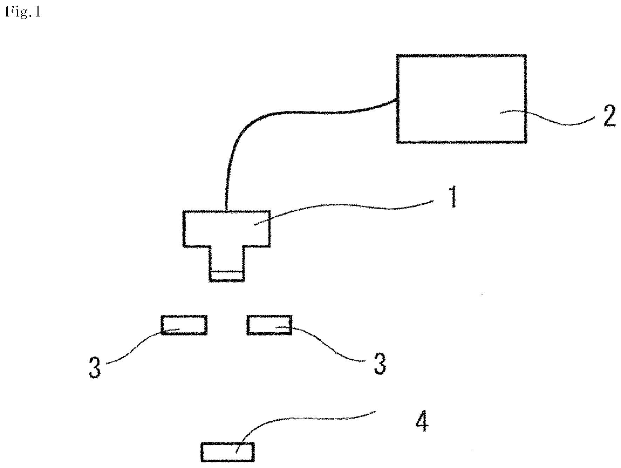

Fig. 1 is a schematic view of an apparatus used for measurement of light emitting efficiency.

### DESCRIPTION OF EMBODIMENTS

The present invention is a masterbatch containing a near-infrared fluorescent material (A), a thermoplastic resin (B) other than a polyamide resin (hereinafter, also simply referred to as a thermoplastic resin (B)), and a resin (C) different from the thermoplastic resin (B), in which the resin (C) forms a continuous phase, and a dispersed phase containing the near-infrared fluorescent material (A) and the thermoplastic resin (B) is formed in the continuous phase.

According to the masterbatch of the present invention having such a configuration, it is possible to provide a resin composition having excellent effects that the deactivation of the near-infrared fluorescent material (A) can be suppressed, the light emitting efficiency of near-infrared fluorescence is high, and the production is relatively easy. In addition, the molded object obtained from the resin composition produced via the masterbatch also has excellent effects that the light emitting efficiency of near-infrared fluorescence is high and the production is relatively easy.

In the masterbatch of the present invention, it can be checked by a digital microscope or the like that the near-infrared fluorescent material (A) and the thermoplastic resin (B) form a dispersed phase (so-called island portion of a sea-island structure) and the resin (C) forms a continuous phase (so-called sea portion of a sea-island structure).

Hereinafter, preferred embodiments of the present invention will be described. In the description herein, "X to Y" indicating a range means "X or more and Y or less". In addition, in the description herein, unless otherwise specified, the operation and the measurement of physical properties and the like are performed under the condition of room temperature (20 to 25°C)/relative humidity of 40 to 50% RH.

### [Configuration of Masterbatch]

### <Near-Infrared Fluorescent Material (A)>

The near-infrared fluorescent material (A) used in the present invention is a compound having a fluorescence maximum wavelength in a near- infrared region. When the resin composition produced via the masterbatch according to the present invention is used as a material for medical devices or security devices used in a living body, for example, the resin composition containing the near-infrared fluorescent material (A) and the molded object obtained therefrom can be excited and detected with light in the near-infrared region invisible to the eye, and therefore, the excitation light and the fluorescence can be detected without changing the color tone of living tissue or the like.

Examples of the near-infrared fluorescent material (A) include compounds such as polymethine-based dyes, anthraquinone-based dyes, dithiol metal salt-based dyes, cyanine-based dyes, phthalocyanine-based dyes, indophenol-based dyes, cyamine-based dyes, styryl-based dyes, aluminum-based dyes, diimmonium-based dyes, azo-based dyes, azo-boron-based dyes, boron dipyrromethene (BODIPY)-based dyes described in WO 2007/126052, diketopyrrolopyrrole (DPP)-based boron complexes, squarylium-based dyes, and perylene-based dyes. These near-infrared fluorescent materials (A) may be used alone or in combination of two or more.

The near-infrared fluorescent material (A) used in the present invention is preferably a cyanine-based dye, an azo-boron-based dye, a boron dipyrromethene (BODIPY)-based dye, a diketopyrrolopyrrole (DPP)-based boron complex, a phthalocyanine-based dye, or a squarylium-based dye among the above-described materials from the viewpoint of light emitting efficiency, and particularly preferably a BODIPY dye represented by the following general formula (II₁) or the following general formula (II₂), or a DPP-based boron complex represented by the following general formula (II₃) or the following general formula (II₄) from the viewpoint of heat resistance. In a case where the light emitting efficiency is low, sufficient light emission intensity may not be obtained, and in a case where the heat resistance is low, the material may be decomposed at the time of kneading with a resin.

### <Compound Represented by General Formula (II₁), General Formula (II₂), General Formula (II₃), or General Formula (II₄)>

As the near-infrared fluorescent material (A) used in the present invention, a compound represented by the following general formula (II₁) or general formula (II₂) is preferable. These compounds are hereinafter sometimes referred to as "BODIPY dyes used in the present invention".

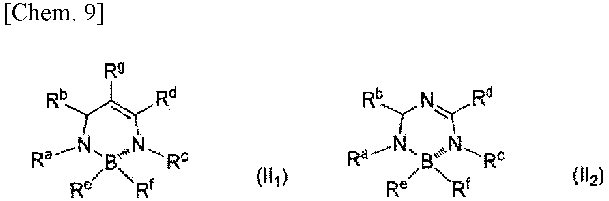

As the near-infrared fluorescent material used in the present invention, a compound represented by the following general formula (II₃) or general formula (II₄) is also preferable. These compounds are hereinafter sometimes referred to as "DPP-based boron complexes used in the present invention".

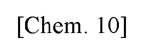

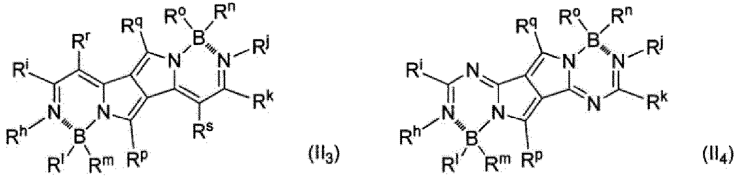

In the general formula (II₁) or the general formula (II₂), R^{a} and R^{b} form an aromatic ring consisting of 1 to 3 rings together with the nitrogen atom to which R^{a} is bonded and the carbon atom to which R^{b} is bonded. Similarly, in the general formula (II₁) or the general formula (II₂), R^{c} and R^{d} form an aromatic ring consisting of 1 to 3 rings together with the nitrogen atom to which R^{c} is bonded and the carbon atom to which R^{d} is bonded. Each ring of the aromatic ring formed by R^{a} and R^{b} and the aromatic ring formed by R^{c} and R^{d} is a 5-membered ring or a 6-membered ring. The compound represented by the general formula (II₁) or the general formula (II₂) has a ring structure in which an aromatic ring formed by R^{a} and R^{b} and an aromatic ring formed by R^{c} and R^{d} are condensed by a ring containing a boron atom bonded to two nitrogen atoms. That is, the compound represented by the general formula (II₁) or the general formula (II₂) has a rigid condensed ring structure configured of a wide conjugated plane.

In the general formula (II₃) or the general formula (II₄), R^{h} and Rⁱ form an aromatic ring consisting of 1 to 3 rings together with the nitrogen atom to which R^{h} is bonded and the carbon atom to which Rⁱ is bonded. Similarly, in the general formula (II₃) or the general formula (II₄), R^{j} and R^{k} form an aromatic ring consisting of 1 to 3 rings together with the nitrogen atom to which R^{j} is bonded and the carbon atom to which R^{k} is bonded. Each ring of the aromatic ring formed by R^{h} and Rⁱ and the aromatic ring formed by R^{j} and R^{k} is a 5-membered ring or a 6-membered ring. The compound represented by the general formula (II₃) or the general formula (II₄) has a ring structure in which three rings in which an aromatic ring formed by R^{h} and Rⁱ, a ring containing a boron atom bonded to two nitrogen atoms, and a 5-membered heterocyclic ring containing one nitrogen atom are condensed, and three rings in which an aromatic ring formed by R^{j} and R^{k}, a ring containing a boron atom bonded to two nitrogen atoms, and a 5-membered heterocyclic ring containing one nitrogen atom are condensed, are condensed between the 5-membered heterocyclic rings, that is, a ring structure in which at least six rings are condensed. As described above, the compound represented by the general formula (II₃) or the general formula (II₄) has a rigid condensed ring structure configured of a very wide conjugated plane.

Each of the aromatic ring formed by R^{a} and R^{b}, the aromatic ring formed by R^{c} and R^{d}, the aromatic ring formed by R^{h} and Rⁱ, and the aromatic ring formed by R^{j} and R^{k} is not particularly limited as long as it has aromaticity. Examples of the aromatic ring include a pyrrole ring, an imidazole ring, a pyrazole ring, an oxazole ring, a thiazole ring, a pyridine ring, a pyrimidine ring, a pyridazine ring, an isoindole ring, an indole ring, an indazole ring, a purine ring, a perimidine ring, a thienopyrrole ring, a furopyrrole ring, a pyrrolothiazole ring, and a pyrrolooxazole ring. Since the maximum fluorescence wavelength becomes a longer wavelength to the near-infrared region, in particular, in the case of the general formula (II₁) or the general formula (II₃), the number of condensed rings of the aromatic ring is preferably 2 or 3, and more preferably 2 from the viewpoint of complexity of synthesis. However, even when the number of condensed rings of the aromatic ring is 1, it is also possible to make the wavelength longer by devising the substituents on the ring and the substituents on boron. In particular, in the case of the general formula (II₂) or the general formula (II₄), the wavelength can be made longer to the near-infrared region only by bonding a substituted aryl group or a heteroaryl group.

Each of the aromatic ring formed by R^{a} and R^{b}, the aromatic ring formed by R^{c} and R^{d}, the aromatic ring formed by R^{h} and Rⁱ, and the aromatic ring formed by R^{j} and R^{k} may not have a substituent or may have one or plural substituents. The substituent which the aromatic ring has may be "any group which does not inhibit fluorescence of a compound".

In a case where the resin composition according to the present invention is used as a medical material (raw material for medical devices), the near-infrared fluorescent material to be contained is preferably negative in terms of mutagenicity, cytotoxicity, sensitization, skin irritation, and the like in a necessary biological safety test. In addition, from the viewpoint of safety, the near-infrared fluorescent material is preferably not eluted from a molded object obtained by processing the resin composition according to the present invention by body fluid such as blood or tissue fluid. Thus, the near-infrared fluorescent material used in the present invention preferably has a low solubility in biological components such as blood. Here, even when the near-infrared fluorescent material used in the present invention is watersoluble, in a case where the resin component itself in the resin composition according to the present invention is hardly eluted into the body fluid or the like and where the content of the near-infrared fluorescent material itself is a very small amount, the molded object of the resin composition according to the present invention can be used while avoiding elution of the near-infrared fluorescent material even in a living body. In consideration of these, in the BODIPY dye used in the present invention, it is preferable to select a substituent which is unlikely to cause mutagenicity or the like or which reduces water solubility as a substituent of the aromatic ring formed by R^{a} and R^{b} or the aromatic ring formed by R^{c} and R^{d}. Similarly, in the DPP-based boron complex used in the present invention, it is preferable to select a substituent which is unlikely to cause mutagenicity or the like or which reduces water solubility as a substituent of the aromatic ring formed by R^{h} and Rⁱ or the aromatic ring formed by R^{j} and R^{k}.

Examples of the substituent include a halogen atom, a nitro group, a cyano group, a hydroxy group, a carboxyl group, an aldehyde group, a sulfonic acid group, an alkylsulfonyl group, a halogenosulfonyl group, a thiol group, an alkylthio group, an isocyanate group, a thioisocyanate group, an alkyl group, an alkenyl group, an alkynyl group, an alkoxy group, an alkoxycarbonyl group, an alkyl amide carbonyl group, an alkyl carbonyl amide group, an acyl group, an amino group, a monoalkylamino group, a dialkylamino group, a silyl group, a monoalkylsilyl group, a dialkylsilyl group, a trialkylsilyl group, a monoalkoxysilyl group, a dialkoxysilyl group, a trialkoxysilyl group, an aryl group, and a heteroaryl group. The substituents of the aromatic ring formed by R^{a} and R^{b}, the aromatic ring formed by R^{c} and R^{d}, the aromatic ring formed by R^{h} and Rⁱ, or the aromatic ring formed by R^{j} and R^{k} are preferably a cyano group, a hydroxy group, a carboxyl group, an alkylthio group, an alkyl group, an alkoxy group, an alkoxycarbonyl group, an amide group, an alkylsulfonyl group, fluorine, chlorine, an aryl group, or a heteroaryl group, from the viewpoint of safety with respect to a living body, and these substituents may further have a substituent. However, even in the case of a substituent other than these substituents, safety can be improved by further introducing an appropriate substituent, and therefore the substituent is not limited to these substituents.

Examples of the halogen atom include a fluorine atom, a chlorine atom, a bromine atom, and an iodine atom, and a fluorine atom, a chlorine atom, or a bromine atom is preferable, and a fluorine atom is more preferable.

The alkyl group, the alkenyl group, and the alkynyl group may be linear, branched, or cyclic (aliphatic cyclic group). Each of these groups preferably has 1 to 20 carbon atoms, more preferably 1 to 12 carbon atoms, still more preferably 1 to 8 carbon atoms, and particularly preferably 1 to 6 carbon atoms. Examples of the alkyl group include a methyl group, an ethyl group, a propyl group, an isopropyl group, a n-butyl group, an isobutyl group, a t-butyl group (tert-butyl group), a pentyl group, an isoamyl group, a hexyl group, a heptyl group, an octyl group, a nonyl group, a decyl group, an undecyl group, and a dodecyl group. Examples of the alkenyl group include a vinyl group, an allyl group, a 1-propenyl group, an isopropenyl group, a 2-butenyl group, a 1,3-butadienyl group, a 2-pentenyl group, and a 2-hexenyl group. Examples of the alkynyl group include an ethynyl group, a 1-propynyl group, a 2-propynyl group, an isopropynyl group, a 1-butynyl group, and an isobutynyl group.

Examples of the alkyl group part in an alkylsulfonyl group, an alkylthio group, an alkoxy group, an alkoxycarbonyl group, an alkyl amide carbonyl group, an alkyl carbonyl amide group, a monoalkylamino group, a dialkylamino group, a monoalkylsilyl group, a dialkylsilyl group, a trialkylsilyl group, a monoalkoxysilyl group, a dialkoxysilyl group, and a trialkoxysilyl group include the same as the alkyl groups described above. Examples of the alkoxy group include a methoxy group, an ethoxy group, a propyloxy group, an isopropyloxy group, a n-butyloxy group, an isobutyloxy group, a t-butyloxy group, a pentyloxy group, an isoamyloxy group, a hexyloxy group, a heptyloxy group, an octyloxy group, a nonyloxy group, a decyloxy group, an undecyloxy group, and a dodecyloxy group. In addition, examples of the monoalkylamino group include a methylamino group, an ethylamino group, a propylamino group, an isopropylamino group, a butylamino group, an isobutyl amino group, a t-butylamino group, a pentylamino group, and a hexylamino group, and examples of the dialkylamino group include a dimethylamino group, a diethylamino group, a dipropylamino group, a diisopropylamino group, a dibutylamino group, a diisobutylamino group, a dipentylamino group, a dihexylamino group, an ethylmethylamino group, a methylpropylamino group, a butylmethylamino group, an ethylpropylamino group, and a butylethylamino group.

Examples of the aryl group include a phenyl group, a naphthyl group, an indenyl group, and a biphenyl group. The aryl group is preferably a phenyl group.

Examples of the heteroaryl group include 5-membered ring heteroaryl groups such as a pyrrolyl group, an imidazolyl group, a pyrazolyl group, a thienyl group, a furanyl group, an oxazolyl group, an isoxazolyl group, a thiazolyl group, an isothiazolyl group, and a thiadiazole group; 6-membered ring heteroaryl groups such as a pyridinyl group, a pyrazinyl group, a pyrimidinyl group, and a pyridazinyl group; and condensed heteroaryl groups such as an indolyl group, an isoindolyl group, an indazolyl group, a quinolizinyl group, a quinolinyl group, an isoquinolinyl group, a benzofuranyl group, an isobenzofuranyl group, a chromenyl group, a benzoxazolyl group, a benzisoxazolyl group, a benzothiazolyl group, and a benzisothiazolyl group.

Each of the alkyl group, the alkenyl group, the alkynyl group, the aryl group, and the heteroaryl group may be an unsubstituted group, or may be a group in which one or more hydrogen atoms are substituted with substituents. Examples of the substituent include a halogen atom, an alkyl group, an alkoxy group, a nitro group, a cyano group, a hydroxy group, an amino group, a thiol group, a carboxyl group, an aldehyde group, a sulfonic acid group, an isocyanate group, a thioisocyanate group, an aryl group, and a heteroaryl group.

The absorption wavelength and the fluorescence wavelength of the fluorescent material are dependent on the surrounding environment. Therefore, the absorption wavelength of the fluorescent material in the resin becomes shorter in some cases or becomes longer in some cases, than that in a solution. When the absorption wavelength of the BODIPY dye or DPP-based boron complex used in the present invention becomes a longer wavelength, the maximum absorption wavelength of the dye or complex is in the near-infrared region among various resins, and therefore such a dye or complex is preferred. The maximum absorption wavelength of the fluorescent material can become a longer wavelength by narrowing the band gap between the highest occupied molecular orbital (HOMO) and the lowest unoccupied molecular orbital (LUMO) by introducing an electron donating group and an electron withdrawing group into a suitable position in the molecule.

For example, in the compound represented by the general formula (II₁), the maximum absorption wavelength and the maximum fluorescence wavelength of the compound can become longer wavelengths by introducing electron donating groups into the aromatic ring formed by R^{a} and R^{b} and the aromatic ring formed by R^{c} and R^{d} and introducing an electron withdrawing group into R^{g}. Similarly, in the compound represented by the general formula (II₃), the maximum absorption wavelength and the maximum fluorescence wavelength of the compound can become longer wavelengths by introducing electron donating groups into the aromatic ring formed by R^{h} and Rⁱ and the aromatic ring formed by R^{j} and R^{k}, introducing, in a case where each of R^{p} and R^{q} has an aromatic ring, an electron donating group into the aromatic ring, or introducing an electron withdrawing group into R^{r} and R^{s}. By suitably combining these designs, it is possible to adjust to a target wavelength.

The compound represented by the general formula (II₂) having an aza BODIPY skeleton has a skeleton having absorption at a relatively long wavelength even in a case where the aromatic ring formed by R^{a} and R^{b} and the aromatic ring formed by R^{c} and R^{d} are unsubstituted. Unlike the compound represented by the general formula (II₁), in the skeleton, a substituent cannot be introduced onto nitrogen because the crosslinking moiety of pyrrole is a nitrogen atom, but by introducing an electron-donating group into the pyrrole moiety (the aromatic ring formed by R^{a} and R^{b} and the aromatic ring formed by R^{c} and R^{d}), the maximum absorption wavelength and the maximum fluorescence wavelength of the compound can be made longer. Similarly, in the case of the compound represented by the general formula (II₄), the maximum absorption wavelength and the maximum fluorescence wavelength of the compound can be made longer by introducing an electron donating group into the pyrrole moiety (the aromatic ring formed by R^{h} and Rⁱ and the aromatic ring formed by R^{j} and R^{k}), or in a case where each of R^{p} and R^{q} has an aromatic ring, introducing an electron donating group into the aromatic ring.

Therefore, as a substituent of the aromatic ring formed by R^{a} and R^{b}, the aromatic ring formed by R^{c} and R^{d}, the aromatic ring formed by R^{h} and Rⁱ, and the aromatic ring formed by R^{j} and R^{k}, a group which functions as an electron donating group with respect to the aromatic rings, among "any group which does not inhibit fluorescence of a compound", is preferable. By introducing an electron donating group into the aromatic ring, fluorescence of the compound represented by the general formula (II₁), the general formula (II₂), the general formula (II₃), or the general formula (II₄) becomes a longer wavelength side. Examples of the group which functions as an electron donating group include an alkyl group; an alkoxy group such as a methoxy group; an aryl group (aromatic ring group) such as a phenyl group, a p-alkoxyphenyl group, a p-dialkylaminophenyl group, or a dialkoxyphenyl group; and a heteroaryl group (heteroaromatic ring group) such as a 2-thienyl group or a 2-furanyl group. As the alkyl group, the alkyl group in a substituent of the phenyl group, and the alkyl group part in the alkoxy group, a linear or branched alkyl group having 1 to 10 carbon atoms is preferable. In addition, the number of carbon atoms in the alkyl group part or the presence or absence of a branch may be appropriately selected in view of the physical properties of the material. From the viewpoint of solubility, compatibility, or the like, it is preferable in some cases that the alkyl group part has 6 or more carbon atoms or it is preferable in some cases that the alkyl group part is branched. As a substituent of the aromatic ring formed by R^{a} and R^{b}, the aromatic ring formed by R^{c} and R^{d}, the aromatic ring formed by R^{h} and Rⁱ, and the aromatic ring formed by R^{j} and R^{k}, a C1-6 alkyl group, a C1-6 alkoxy group, an aryl group, or a heteroaryl group is preferable, a methyl group, an ethyl group, a methoxy group, a phenyl group, a p-methoxyphenyl group, a p-ethoxyphenyl group, a p-dimethylaminophenyl group, a dimethoxyphenyl group, a thienyl group, or a furanyl group is more preferable, and a methyl group, an ethyl group, a methoxy group, a phenyl group, or a p-methoxyphenyl group is still more preferable. Since the BODIPY skeleton and the DPP skeleton have high planarity, the molecules thereof are likely to be aggregated to each other by π-π stacking. By introducing an aryl group or heteroaryl group having a bulky substituent into the BODIPY skeleton or the DPP skeleton, it is possible to suppress aggregation of the molecules, and it is possible to increase the emission quantum yield of the resin composition according to the present invention and a molded object thereof.

In the general formula (II₁) or (II₂), the aromatic ring formed by R^{a} and R^{b} and the aromatic ring formed by R^{c} and R^{d} may be different from each other or the same type. In the general formula (II₃) or (II₄), the aromatic ring formed by R^{h} and Rⁱ and the aromatic ring formed by R^{j} and R^{k} may be different from each other or the same type. In the BODIPY dye or the DPP-based boron complex used in the present invention, it is preferable that the aromatic ring formed by R^{a} and R^{b} and the aromatic ring formed by R^{c} and R^{d}, or the aromatic ring formed by R^{h} and Rⁱ and the aromatic ring formed by R^{j} and R^{k} are the same type, since the synthesis is easy and the emission quantum yield tends to be higher.

In the general formula (II₁) or the general formula (II₂), each of R^{e} and R^{f} independently represents a halogen atom or an oxygen atom. In a case where each of R^{e} and R^{f} is a halogen atom, a fluorine atom, a chlorine atom, a bromine atom, or an iodine atom is preferable, a fluorine atom or a chlorine atom is more preferable, and a fluorine atom is particularly preferable since it has a strong bond to the boron atom. Since a compound in which each of R^{e} and R^{f} is a fluorine atom has high heat resistance, the compound is advantageous in the case of being melt-kneaded together with a resin at a high temperature. As the compound represented by the general formula (II₁) or the general formula (II₂), even in a case where each of R^{e} and R^{f} is not a halogen atom or an oxygen atom but is a substituent containing an atom capable of bonding to the boron atom, the compound can be contained in the resin in the same manner as the BODIPY dye used in the present invention. As the substituent, any substituent is acceptable as long as it does not inhibit fluorescence.

In the general formula (II₁) or the general formula (II₂), in a case where each of R^{e} and R^{f} is an oxygen atom, R^{e}, the boron atom bonded to R^{e}, R^{a}, and the nitrogen atom bonded to R^{a} may together form a ring, and R^{f}, the boron atom bonded to R^{f}, R^{c}, and the nitrogen atom bonded to R^{c} may together form a ring. That is, in the case of forming a ring structure, the ring formed by R^{e}, the boron atom bonded to R^{e}, and the nitrogen atom bonded to R^{a} is condensed with the aromatic ring formed by R^{a} and R^{b}, and the ring formed by R^{f}, the boron atom bonded to R^{f}, and the nitrogen atom bonded to R^{c} is condensed with the aromatic ring formed by R^{c} and R^{d}. The ring formed by R^{e} and the like and the ring formed by R^{f} and the like each is preferably a 6-membered ring.

In the general formula (II₁) or the general formula (II₂), in a case where R^{e} is an oxygen atom and R^{e} does not form a ring, R^{e} is an oxygen atom having a substituent (an oxygen atom bonded to a substituent). Examples of the substituent include a C₁₋₂₀ alkyl group, an aryl group, a heteroaryl group, an alkylcarbonyl group, an arylcarbonyl group, or a heteroarylcarbonyl group. Similarly, in the general formula (II₁) or the general formula (II₂), in a case where R^{f} is an oxygen atom and R^{f} does not form a ring, R^{f} is an oxygen atom having a substituent (an oxygen atom bonded to a substituent). Examples of the substituent include a C₁₋₂₀ alkyl group, an aryl group, a heteroaryl group, an alkylcarbonyl group, an arylcarbonyl group, or a heteroarylcarbonyl group. In addition, in a case where each of R^{e} and R^{f} is an oxygen atom having a substituent, the substituent of R^{e} and the substituent of R^{f} may be the same as or different from each other.

In the general formula (II₁) or the general formula (II₂), in a case where each of R^{e} and R^{f} is an oxygen atom, R^{e}, R^{f}, and the boron atom bonded to R^{e} and R^{f} may together form a ring. Examples of the ring structure include a structure in which R^{e} and R^{f} are connected to the same aryl ring or heteroaryl ring and a structure in which R^{e} and R^{f} are connected by an alkylene group.

In the general formula (II₃) or the general formula (II₄), each of R^{l}, R^{m}, Rⁿ, and R^{o} independently represents a halogen atom, a C₁₋₂₀ alkyl group, a C₁₋₂₀ alkoxy group, an aryl group, or a heteroaryl group. In a case where R^{l}, R^{m}, Rⁿ, or R^{o} is a halogen atom, a fluorine atom, a chlorine atom, a bromine atom, or an iodine atom is preferable, a fluorine atom or a chlorine atom is more preferable, and a fluorine atom is particularly preferable since it has a strong bond to the boron atom. Since a compound in which each of R^{l}, R^{m}, Rⁿ, and R^{o} is a fluorine atom has high heat resistance, the compound is advantageous in the case of being melt-kneaded together with a resin at a high temperature.

In addition, in the present invention and the description herein, the "C₁₋₂₀ alkyl group" means an alkyl group having 1 to 20 carbon atoms, and the "C₁₋₂₀ alkoxy group" means an alkoxy group having 1 to 20 carbon atoms.

In a case where R^{l}, R^{m}, Rⁿ, or R^{o} is a C₁₋₂₀ alkyl group, the alkyl group may be linear, branched, or cyclic (aliphatic cyclic group). Examples of the alkyl group include a methyl group, an ethyl group, a propyl group, an isopropyl group, a n-butyl group, an isobutyl group, a t-butyl group, a pentyl group, an isoamyl group, a hexyl group, a heptyl group, an octyl group, a nonyl group, a decyl group, an undecyl group, and a dodecyl group.

In a case where R^{l}, R^{m}, Rⁿ, or R^{o} is a C₁₋₂₀ alkoxy group, the alkyl group part of the alkoxy group may be linear, branched, or cyclic (aliphatic cyclic group). Examples of the alkoxy group include a methoxy group, an ethoxy group, a propyloxy group, an isopropyloxy group, a n-butyloxy group, an isobutyloxy group, a t-butyloxy group, a pentyloxy group, an isoamyloxy group, a hexyloxy group, a heptyloxy group, an octyloxy group, a nonyloxy group, a decyloxy group, an undecyloxy group, and a dodecyloxy group.

In a case where R^{l}, R^{m}, Rⁿ, or R^{o} is an aryl group, examples of the aryl group include a phenyl group, a naphthyl group, an indenyl group, and a biphenyl group.

In a case where R^{l}, R^{m}, Rⁿ, or R^{o} is a heteroaryl group, examples of the heteroaryl group include 5-membered ring heteroaryl groups such as a pyrrolyl group, an imidazolyl group, a pyrazolyl group, a thienyl group, a furanyl group, an oxazolyl group, an isoxazolyl group, a thiazolyl group, an isothiazolyl group, and a thiadiazole group; 6-membered ring heteroaryl groups such as a pyridinyl group, a pyrazinyl group, a pyrimidinyl group, and a pyridazinyl group; and condensed heteroaryl groups such as an indolyl group, an isoindolyl group, an indazolyl group, a quinolizinyl group, a quinolinyl group, an isoquinolinyl group, a benzofuranyl group, an isobenzofuranyl group, a chromenyl group, a benzoxazolyl group, a benzisoxazolyl group, a benzothiazolyl group, and a benzisothiazolyl group.

Each of the C₁₋₂₀ alkyl group, the C₁₋₂₀ alkoxy group, the aryl group, and the heteroaryl group represented by R^{l}, R^{m}, Rⁿ, or R^{o} may be an unsubstituted group, or may be a group in which one or more hydrogen atoms are substituted with substituents. Examples of the substituent include a halogen atom, an alkyl group, an alkoxy group, a nitro group, a cyano group, a hydroxy group, an amino group, a thiol group, a carboxyl group, an aldehyde group, a sulfonic acid group, an isocyanate group, a thioisocyanate group, an aryl group, and a heteroaryl group.

As the compound represented by the general formula (II₃) or (II₄), a compound in which each of R^{l}, R^{m}, Rⁿ, and R^{o} is a halogen atom, an unsubstituted aryl group, or an aryl group having a substituent is preferable, a compound in which each of R^{l}, R^{m}, Rⁿ, and R^{o} is a fluorine atom, a chlorine atom, a bromine atom, an unsubstituted phenyl group, or a phenyl group substituted with a C₁₋₂₀ alkyl group or a C₁₋₂₀ alkoxy group is preferable, a compound in which each of R^{l}, R^{m}, Rⁿ, and R^{o} is a fluorine atom, a chlorine atom, an unsubstituted phenyl group, or a phenyl group substituted with a C₁₋₁₀ alkyl or a C₁₋₁₀ alkoxy group is more preferable, and a compound in which each of R^{l}, R^{m}, Rⁿ, and R^{o} is a fluorine atom or an unsubstituted phenyl group is particularly preferable.

In the general formula (II₃) or (II₄), each of R^{p} and R^{q} independently represents a hydrogen atom, a halogen atom, a C₁₋₂₀ alkyl group, a C₁₋₂₀ alkoxy group, an aryl group, or a heteroaryl group. Examples of the halogen atom, the C₁₋₂₀ alkyl group, the C₁₋₂₀ alkoxy group, the aryl group, and the heteroaryl group represented by R^{p} and R^{q} include the same ones as those for R^{l}, R^{m}, Rⁿ, or R^{o} in the general formula (II₃).

As the compound represented by the general formula (II₃) or the general formula (II₄), a compound in which each of R^{p} and R^{q} is a hydrogen atom or an aryl group is preferable, a compound in which each of R^{p} and R^{q} is a hydrogen atom, an unsubstituted phenyl group, or a phenyl group substituted with a C₁₋₂₀ alkyl group or a C₁₋₂₀ alkoxy group is preferable, a compound in which each of R^{p} and R^{q} is a hydrogen atom, an unsubstituted phenyl group, or a phenyl group substituted with a C₁₋₂₀ alkoxy group is more preferable, and a compound in which each of R^{p} and R^{q} is a hydrogen atom, an unsubstituted phenyl group, or a phenyl group substituted with a C₁₋₁₀ alkoxy group is particularly preferable.

In the general formula (II₁), R^{g} represents a hydrogen atom or an electron withdrawing group. In addition, in the general formula (II₃), each of R^{r} and R^{s} independently represents a hydrogen atom or an electron withdrawing group. Examples of the electron withdrawing group include a methyl halide group such as a trifluoromethyl group; a nitro group; a cyano group; an aryl group; a heteroaryl group; an alkynyl group; an alkenyl group; a substituent having a carbonyl group such as a carboxyl group, an acyl group, a carbonyloxy group, an amide group, and an aldehyde group; a sulfoxide group; a sulfonyl group; an alkoxymethyl group; and an aminomethyl group, and an aryl group or a heteroaryl group having the electron withdrawing group as a substituent can also be used. Among these electron withdrawing groups, from the viewpoint of making the maximum fluorescence wavelength to be longer, a trifluoromethyl group, a nitro group, a cyano group, a phenyl group, a sulfonyl group, or the like capable of functioning as a strong electron withdrawing group is preferable.

As the BODIPY dye used in the present invention, a compound represented by the following general formula (II₁-0) or general formula (II₂-0) is preferable. A compound having a boron dipyrromethene skeleton is preferable because the maximum fluorescence wavelength becomes longer. Particularly, a compound satisfying the following (p2), (p3), (q2), or (q3), in which a pyrrole ring is condensed with an aromatic ring or a heteroaromatic ring, is preferable as the near-infrared fluorescent material used in the present invention because the maximum wave length becomes further longer.

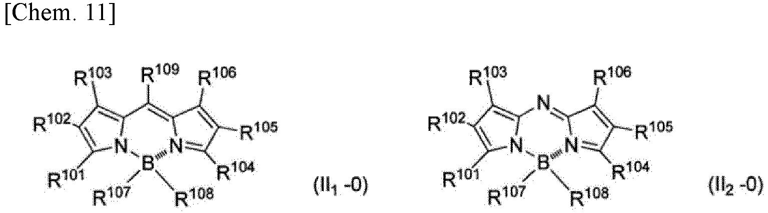

In the general formula (II₁-0) or the general formula (II₂-0), R¹⁰¹, R¹⁰², and R¹⁰³ satisfy any one of the following (p1) to (p3):
(p1) each of R¹⁰¹, R¹⁰², and R¹⁰³ independently represents a hydrogen atom, a halogen atom, a C₁₋₂₀ alkyl group, a C₁₋₂₀ alkoxy group, an aryl group, or a heteroaryl group;
(p2) R¹⁰¹ and R¹⁰² together form an aromatic 5-membered ring or an aromatic 6-membered ring, and R¹⁰³ represents a hydrogen atom, a halogen atom, a C₁₋₂₀ alkyl group, a C₁₋₂₀ alkoxy group, an aryl group, or a heteroaryl group; or
(p3) R¹⁰² and R¹⁰³ together form an aromatic 5-membered ring or an aromatic 6-membered ring, and R¹⁰¹ represents a hydrogen atom, a halogen atom, a C₁₋₂₀ alkyl group, a C₁₋₂₀ alkoxy group, an aryl group, or a heteroaryl group.

In the general formula (II₁-0) or the general formula (II₂-0), R¹⁰⁴, R¹⁰⁵, and R¹⁰⁶ satisfy any one of the following (q1) to (q3):
(q1) each of R¹⁰⁴, R¹⁰⁵, and R¹⁰⁶ independently represents a hydrogen atom, a halogen atom, a C₁₋₂₀ alkyl group, a C₁₋₂₀ alkoxy group, an aryl group, or a heteroaryl group;
(q2) R¹⁰⁴ and R¹⁰⁵ together form an aromatic 5-membered ring or an aromatic 6-membered ring, and R¹⁰⁶ represents a hydrogen atom, a halogen atom, a C₁₋₂₀ alkyl group, a C₁₋₂₀ alkoxy group, an aryl group, or a heteroaryl group; or
(q3) R¹⁰⁵ and R¹⁰⁶ together form an aromatic 5-membered ring or an aromatic 6-membered ring, and R¹⁰⁴ represents a hydrogen atom, a halogen atom, a C₁₋₂₀ alkyl group, a C₁₋₂₀ alkoxy group, an aryl group, or a heteroaryl group.

As the halogen atom, the C₁₋₂₀ alkyl group, the C₁₋₂₀ alkoxy group, the aryl group, and the heteroaryl group in (p1) to (p3) or (q1) to (q3), those exemplified as "any group which does not inhibit fluorescence of a compound" represented by each of R^{a} and R^{b} can be used.

In (p2) and (p3) or (q2) and (q3), as the aromatic 5-membered ring or the aromatic 6-membered ring which R¹⁰¹ and R¹⁰² together form, the aromatic 5-membered ring or the aromatic 6-membered ring which R¹⁰⁴ and R¹⁰⁵ together form, the aromatic 5-membered ring or the aromatic 6-membered ring which R¹⁰² and R¹⁰³ together form, and the aromatic 5-membered ring or the aromatic 6-membered ring which R¹⁰⁵ and R¹⁰⁶ together form, a ring represented by any one of the following general formulae (C-1) to (C-9) is preferable, and a ring represented by any one of the following general formulae (C-1), (C-2), and (C-9) is more preferable. In the following general formulae (C-1) to (C-9), the place to which an asterisk is attached is a portion to which the boron dipyrromethene skeleton in the general formula (II₁-0) or the general formula (II₂-0) is bonded.

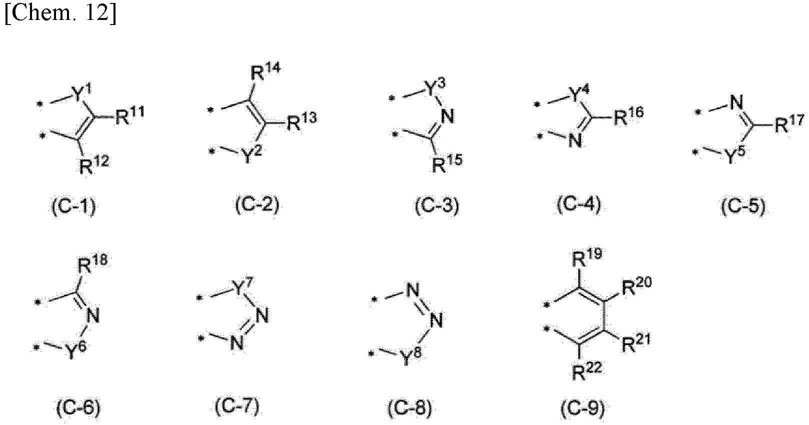

In the general formulae (C-1) to (C-8), each of Y¹ to Y⁸ independently represents a sulfur atom, an oxygen atom, a nitrogen atom, or a phosphorus atom. Each of Y¹ to Y⁸ is independently preferably a sulfur atom, an oxygen atom, or a nitrogen atom, and more preferably a sulfur atom or an oxygen atom.

In the general formulae (C-1) to (C-9), each of R¹¹ to R²² independently represents a hydrogen atom or any group which does not inhibit fluorescence of a compound described above. As "any group which does not inhibit fluorescence of a compound", those exemplified as "any group which does not inhibit fluorescence of a compound" represented by each of R^{a} and R^{b} can be used. Each of R¹¹ to R²² is independently preferably a hydrogen atom, an unsubstituted aryl group, an aryl group having a substituent, an unsubstituted heteroaryl group, or a heteroaryl group having a substituent, more preferably a hydrogen atom, an (unsubstituted) phenyl group, a p-methoxyphenyl group, a p-ethoxyphenyl group, a p-dimethylaminophenyl group, a dimethoxyphenyl group, a thienyl group, or a furanyl group, and still more preferably a hydrogen atom, an (unsubstituted) phenyl group, or a p-methoxyphenyl group. Since the electron donating property can be increased and aggregation of a BODIPY skeleton can be suppressed by a bulky substituent, the compound is particularly preferably substituted with at least one of the unsubstituted aryl group, the aryl group having a substituent, the unsubstituted heteroaryl group, and the heteroaryl group having a substituent.

In the compound of the general formula (II₁-0) or the general formula (II₂-0), R¹⁰¹ and R¹⁰⁴, R¹⁰² and R¹⁰⁵, and R¹⁰³ and R¹⁰⁶ may be different from each other, respectively, but are preferably the same group. That is, in a case where R¹⁰¹, R¹⁰², and R¹⁰³ satisfy the above (p1), R¹⁰⁴, R¹⁰⁵, and R¹⁰⁶ preferably satisfy the above (q1), in a case where R¹⁰¹, R¹⁰², and R¹⁰³ satisfy the above (p2), R¹⁰⁴, R¹⁰⁵, and R¹⁰⁶ preferably satisfy the above (q2), and in a case where R¹⁰¹, R¹⁰², and R¹⁰³ satisfy the above (p3), R¹⁰⁴, R¹⁰⁵, and R¹⁰⁶ preferably satisfy the above (q3).

As the compound of the general formula (II₁-0) or the general formula (II₂-0), a compound in which R¹⁰¹ and R¹⁰² form a ring, and R¹⁰⁴ and R¹⁰⁵ form a ring, or a compound in which R¹⁰² and R¹⁰³ form a ring, and R¹⁰⁵ and R¹⁰⁶ form a ring is preferable. That is, it is preferable that R¹⁰¹, R¹⁰², and R¹⁰³ satisfy the above (p2) or (p3), and R¹⁰⁴, R¹⁰⁵, and R¹⁰⁶ satisfy the above (q2) or (q3). This is because the maximum fluorescence wavelength becomes a longer wavelength side by further condensation of the aromatic ring or the heteroaromatic ring with the boron dipyrromethene skeleton.

In the general formula (II₁-0) or (II₂-0), each of R¹⁰⁷ and R¹⁰⁸ represents a halogen atom or an oxygen atom. In a case where each of R¹⁰⁷ and R¹⁰⁸ is an oxygen atom, R¹⁰⁷, the boron atom bonded to R¹⁰⁷, the nitrogen atom bonded to the boron atom, R¹⁰¹, and the carbon atom bonded to R¹⁰¹ may together form a ring, and R¹⁰⁸, the boron atom bonded to R¹⁰⁸, the nitrogen atom bonded to the boron atom, R¹⁰⁴, and the carbon atom bonded to R¹⁰⁴ may together form a ring. That is, each of the ring formed by R¹⁰⁷, the boron atom, R¹⁰¹, and the like and the ring formed by R¹⁰⁸, the boron atom, R¹⁰⁴, and the like is condensed with the boron dipyrromethene skeleton. Each of the ring formed by R¹⁰⁷, the boron atom, R¹⁰¹, and the like and the ring formed by R¹⁰⁸, the boron atom, R¹⁰⁴, and the like is preferably a 6-membered ring.

In the general formula (II₁-0) or the general formula (II₂-0), in a case where R¹⁰⁷ is an oxygen atom and does not form a ring, R¹⁰⁷ is an oxygen atom having a substituent (an oxygen atom bonded to a substituent). Examples of the substituent include a C₁₋₂₀ alkyl group, an aryl group, or a heteroaryl group. Similarly, in the general formula (II₁-0) or the general formula (II₂-0), in a case where R¹⁰⁸ is an oxygen atom and does not form a ring, R¹⁰⁸ is an oxygen atom having a substituent (an oxygen atom bonded to a substituent). Examples of the substituent include a C₁₋₂₀ alkyl group, an aryl group, or a heteroaryl group. In addition, in a case where each of R¹⁰⁷ and R¹⁰⁸ is an oxygen atom having a substituent, the substituent of R¹⁰⁷ and the substituent of R¹⁰⁸ may be the same as or different from each other.

In the general formula (II₁-0), R¹⁰⁹ represents a hydrogen atom or an electron withdrawing group. Examples of the electron withdrawing group include the same as the groups exemplified as R^{g}. Among these, from the viewpoint of making the maximum fluorescence wavelength to be longer, a fluoroalkyl group, a nitro group, a cyano group, an aryl group, or a sulfonyl group capable of functioning as a strong electron withdrawing group is preferable, a trifluoromethyl group, a nitro group, a cyano group, a phenyl group, or a sulfonyl group is more preferable, and from the viewpoint of safety with respect to a living body, a trifluoromethyl group, a cyano group, a phenyl group, or a sulfonyl group is still more preferable. However, the present invention is not limited to these substituents.

As the BODIPY dye used in the present invention, among the compounds represented by the general formula (II₁-0) or the general formula (II₂-0), a compound in which R¹⁰¹ and R¹⁰² together form a ring in which, in the ring represented by the general formula (C-1), any one of R¹¹ and R¹² is a hydrogen atom and the remaining one is a phenyl group, a thienyl group, or a furanyl group in which one to three hydrogen atoms are optionally substituted with a halogen atom, a C₁₋₂₀ alkyl group, or a C₁₋₂₀ alkoxy group, R¹⁰⁴ and R¹⁰⁵ together form a ring of the same type as the ring formed by R¹⁰¹ and R¹⁰², each of R¹⁰³ and R¹⁰⁶ is a hydrogen atom, and each of R¹⁰⁷ and R¹⁰⁸ is a halogen atom; a compound in which R¹⁰¹ and R¹⁰² together form a ring in which, in the ring represented by the general formula (C-2), any one of R¹³ and R¹⁴ is a hydrogen atom and the remaining one is a phenyl group, a thienyl group, or a furanyl group in which one to three hydrogen atoms are optionally substituted with a halogen atom, a C₁₋₂₀ alkyl group, or a C₁₋₂₀ alkoxy group in the ring represented by the general formula (C-2), R¹⁰⁴ and R¹⁰⁵ together form a ring of the same type as the ring formed by R¹⁰¹ and R¹⁰², each of R¹⁰³ and R¹⁰⁶ is a hydrogen atom, and each of R¹⁰⁷ and R¹⁰⁸ is a halogen atom; a compound in which R¹⁰² and R¹⁰³ together form a ring in which, in the ring represented by the general formula (C-1), any one of R¹¹ and R¹² is a hydrogen atom and the remaining one is a phenyl group, a thienyl group, or a furanyl group in which one to three hydrogen atoms are optionally substituted with a halogen atom, a C₁₋₂₀ alkyl group, or a C₁₋₂₀ alkoxy group, R¹⁰⁵ and R¹⁰⁶ together form a ring of the same type as the ring formed by R¹⁰² and R¹⁰³, each of R¹⁰¹ and R¹⁰⁴ is a hydrogen atom, and each of R¹⁰⁷ and R¹⁰⁸ is a halogen atom; a compound in which R¹⁰² and R¹⁰³ together form a ring in which, in the ring represented by the general formula (C-2), any one of R¹³ and R¹⁴ is a hydrogen atom and the remaining one is a phenyl group, a thienyl group, or a furanyl group in which one to three hydrogen atoms are optionally substituted with a halogen atom, a C₁₋₂₀ alkyl group, or a C₁₋₂₀ alkoxy group, R¹⁰⁵ and R¹⁰⁶ together form a ring of the same type as the ring formed by R¹⁰¹ and R¹⁰², each of R¹⁰¹ and R¹⁰⁴ is a hydrogen atom, and each of R¹⁰⁷ and R¹⁰⁸ is a halogen atom; or a compound in which R¹⁰² and R¹⁰³ together form a ring in which, in the ring represented by the general formula (C-9), any one of R¹⁹ to R²² is a phenyl group, a thienyl group, or a furanyl group in which one to three hydrogen atoms are optionally substituted with a halogen atom, a C₁₋₂₀ alkyl group, or a C₁₋₂₀ alkoxy group, and the remaining three each are a hydrogen atom, R¹⁰⁵ and R¹⁰⁶ together form a ring of the same type as the ring formed by R¹⁰¹ and R¹⁰², each of R¹⁰¹ and R¹⁰⁴ is a hydrogen atom, a halogen atom, or a phenyl group, a thienyl group or a furanyl group optionally substituted with a C₁₋₂₀ alkyl group or a C₁₋₂₀ alkoxy group, and each of R¹⁰⁷ and R¹⁰⁸ is a halogen atom is preferable. In a case where the compound is a compound represented by the general formula (II₁-0), R¹⁰⁹ is more preferably a trifluoromethyl group, a cyano group, a nitro group, or a phenyl group, and a trifluoromethyl group or a phenyl group is particularly preferable.

As the near-infrared fluorescent material according to the present invention, a compound represented by any one of the following general formulae (II₃-1) to (II₃-6) or a compound represented by any one of general formulae (II₄-1) to (II₄-6) is also preferable since the maximum fluorescence wavelength is a longer wavelength.

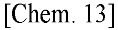

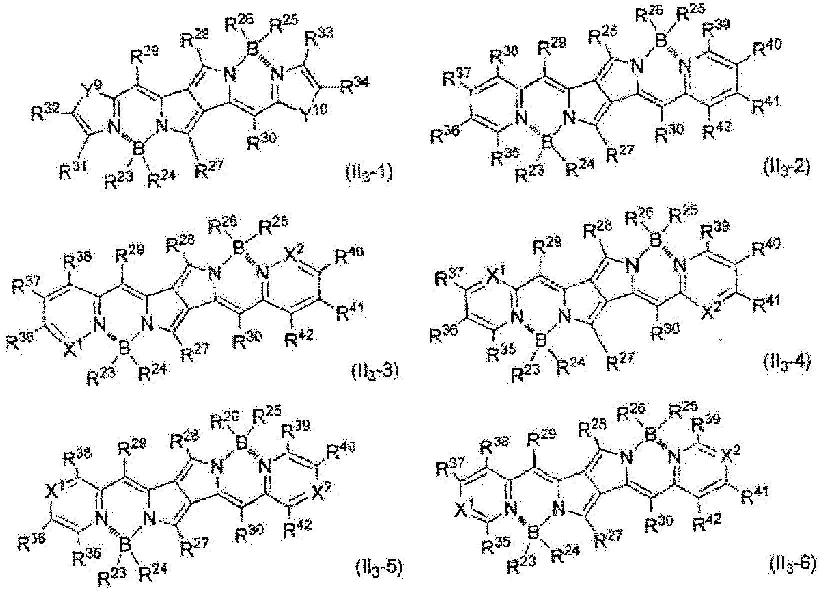

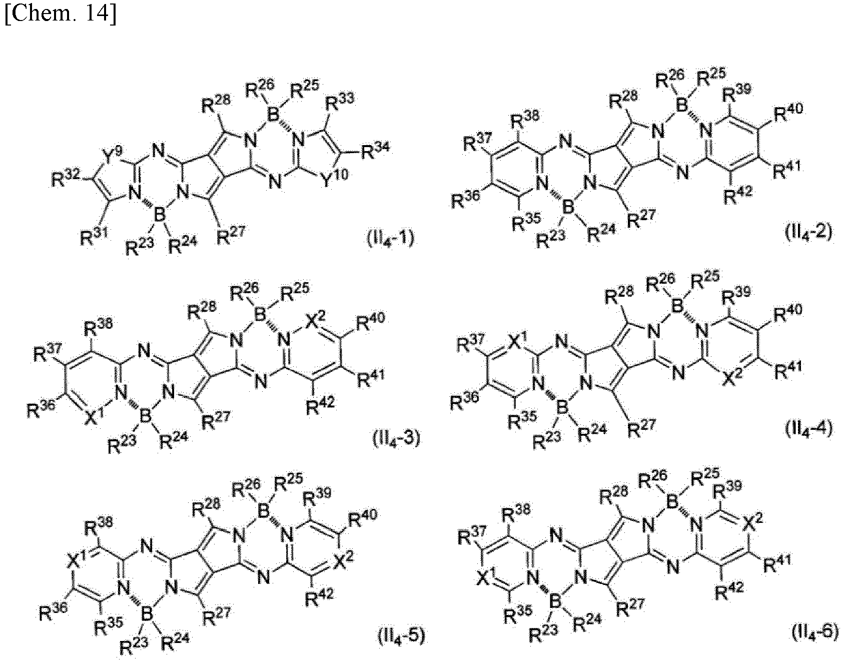

In the general formulae (II₃-1) to (II₃-6) and the general formulae (II₄-1) to (II₄-6), each of R²³, R²⁴, R²⁵, and R²⁶ independently represents a halogen atom, a C₁₋₂₀ alkyl group, a C₁₋₂₀ alkoxy group, an aryl group, or a heteroaryl group. Examples of the halogen atom, the C₁₋₂₀ alkyl group, the C₁₋₂₀ alkoxy group, the aryl group, and the heteroaryl group represented by R²³, R²⁴, R²⁵, and R²⁶ include the same ones as those for R^{l}, R^{m}, Rⁿ, or R^{o} in the general formula (II₃). As the compound represented by any one of the general formulae (II₃-1) to (II₃-6) or the compound represented by any one of the general formulae (II₄-1) to (II₄-6), a compound in which each of R²³, R²⁴, R²⁵, and R²⁶ is a halogen atom, an unsubstituted aryl group, or an aryl group having a substituent is preferable from the viewpoint of high thermal stability of the compound, specifically a compound in which each of R²³, R²⁴, R²⁵, and R²⁶ is a fluorine atom, a chlorine atom, a bromine atom, an unsubstituted phenyl group, or a phenyl group substituted with a C₁₋₂₀ alkyl group or a C₁₋₂₀ alkoxy group is preferable, a compound in which each of R²³, R²⁴, R²⁵, and R²⁶ is a fluorine atom, a chlorine atom, an unsubstituted phenyl group, or a phenyl group substituted with a C₁₋₁₀ alkyl or a C₁₋₁₀ alkoxy group is more preferable, and a compound in which each of R²³, R²⁴, R²⁵, and R²⁶ is a fluorine atom or an unsubstituted phenyl group is particularly preferable from the viewpoint of obtaining a compound having both high light emitting efficiency and thermal stability.

In the general formulae (II₃-1) to (II₃-6) and the general formulae (II₄-1) to (II₄-6), each of R²⁷ and R²⁸ independently represents a hydrogen atom, a halogen atom, a C₁₋₂₀ alkyl group, a C₁₋₂₀ alkoxy group, an aryl group, or a heteroaryl group. Examples of the halogen atom, the C₁₋₂₀ alkyl group, the C₁₋₂₀ alkoxy group, the aryl group, and the heteroaryl group represented by R²⁷ or R²⁸ include the same ones as those for R^{o} or R^{q} in the general formula (II₃). As the compound represented by any one of the general formulae (II₃-1) to (II₃-6) or the compound represented by any one of the general formulae (II₄-1) to (II₄-6), a compound in which each of R²⁷ and R²⁸ is a hydrogen atom or an aryl group is preferable, a compound in which each of R²⁷ and R²⁸ is a hydrogen atom, an unsubstituted phenyl group, or a phenyl group substituted with a C₁₋₂₀ alkyl group or a C₁₋₂₀ alkoxy group is preferable from the viewpoint of obtaining a compound having a high light emitting efficiency, a compound in which each of R²⁷ and R²⁸ is a hydrogen atom, an unsubstituted phenyl group, or a phenyl group substituted with a linear or branched C₁₋₂₀ alkoxy group is more preferable, and a compound in which each of R²⁷ and R²⁸ is a hydrogen atom, an unsubstituted phenyl group, or a phenyl group substituted with a linear or branched C₁₋₁₀ alkoxy group is particularly preferable from the viewpoint of obtaining a compound having a high light emitting efficiency and excellent compatibility with a resin.

In the general formulae (II₃-1) to (II₃-6), each of R²⁹ and R³⁰ independently represents a hydrogen atom or an electron withdrawing group. Examples of the electron withdrawing group represented by R²⁹ or R³⁰ include the same groups as those described above for R^{f} or R^{s} in the general formula (II₃). As the compound represented by any one of the general formulae (II₃-1) to (II₃-6), a compound in which each of R²⁹ and R³⁰ is a fluoroalkyl group, a nitro group, a cyano group, or an aryl group capable of functioning as a strong electron withdrawing group is preferable from the viewpoint of obtaining a compound having a high light emitting efficiency, a compound in which each of R²⁹ and R³⁰ is a trifluoromethyl group, a nitro group, a cyano group, or a phenyl group which may have a substituent is more preferable, and a compound in which each of R²⁹ and R³⁰ is a trifluoromethyl group or a cyano group is still more preferable from the viewpoint of obtaining a compound having a high light emitting efficiency and excellent compatibility with a resin.

In the general formula (II₃-1) and the general formula (II₄-1), each of Y⁹ and Y¹⁰ independently represents a sulfur atom, an oxygen atom, a nitrogen atom, or a phosphorus atom. As the compound represented by the general formula (II₃-1) or the general formula (II₄-1), a compound in which each of Y⁹ and Y¹⁰ independently represents a sulfur atom, an oxygen atom, or a nitrogen atom is preferable from the viewpoint of obtaining a compound having a high light emitting efficiency, a compound in which each of Y⁹ and Y¹⁰ independently represents a sulfur atom or an oxygen atom is more preferable, and a compound in which Y⁹ and Y¹⁰ are both a sulfur atom or an oxygen atom is still more preferable from the viewpoint of obtaining a compound having both high light emitting efficiency and thermal stability.

In the general formulae (II₃-3) to (II₃-6) and the general formulae (II₄-3) to (II₄-6), each of X¹ and X² independently represents a nitrogen atom or a phosphorus atom. As the compound represented by the general formulae (II₃-3) to (II₃-6) or the general formulae (II₄-3) to (II₄-6), a compound in which X¹ and X² are both a nitrogen atom or s phosphorus atom is preferable from the viewpoint of obtaining a compound having high light emitting efficiency, and a compound in which X¹ and X² are both a nitrogen atom is more preferable from the viewpoint of obtaining a compound having both high light emitting efficiency and thermal stability.

In the general formula (II₃-1) and the general formula (II₄-1), R³¹ and R³² satisfy the following (p4) or (p5):
(p4) each of R³¹ and R³² independently represents a hydrogen atom, a halogen atom, a C₁₋₂₀ alkyl group, a C₁₋₂₀ alkoxy group, an aryl group, or a heteroaryl group;
(p5) R³¹ and R³² together form an aromatic 5-membered ring which may have a substituent or an aromatic 6-membered ring which may have a substituent.

In the general formula (II₃-1) and the general formula (II₄-1), R³³ and R³⁴ satisfy the following (q4) or (q5):
(q4) each of R³³ and R³⁴ independently represents a hydrogen atom, a halogen atom, a C₁₋₂₀ alkyl group, a C₁₋₂₀ alkoxy group, an aryl group, or a heteroaryl group;
(q5) R³³ and R³⁴ together form an aromatic 5-membered ring which may have a substituent or an aromatic 6-membered ring which may have a substituent.

In the general formulae (II₃-2) to (II₃-6) and the general formulae (II₄-2) to (II₄-6), R³⁵, R³⁶, R³⁷, and R³⁸ satisfy any one of the following (p6) to (p9):
(p6) each of R³⁵, R³⁶, R³⁷, and R³⁸ independently represents a hydrogen atom, a halogen atom, a C₁₋₂₀ alkyl group, a C₁₋₂₀ alkoxy group, an aryl group, or a heteroaryl group;
(p7) R³⁵ and R³⁶ together form an aromatic 5-membered ring which may have a substituent or an aromatic 6-membered ring which may have a substituent, and each of R³⁷ and R³⁸ independently represents a hydrogen atom, a halogen atom, a C₁₋₂₀ alkyl group, a C₁₋₂₀ alkoxy group, an aryl group, or a heteroaryl group;
(p8) R³⁶ and R³⁷ together form an aromatic 5-membered ring which may have a substituent or an aromatic 6-membered ring which may have a substituent, and each of R³⁵ and R³⁸ independently represents a hydrogen atom, a halogen atom, a C₁₋₂₀ alkyl group, a C₁₋₂₀ alkoxy group, an aryl group, or a heteroaryl group;
(p9) R³⁷ and R³⁸ together form an aromatic 5-membered ring which may have a substituent or an aromatic 6-membered ring which may have a substituent, and each of R³⁵ and R³⁶ independently represents a hydrogen atom, a halogen atom, a C₁₋₂₀ alkyl group, a C₁₋₂₀ alkoxy group, an aryl group, or a heteroaryl group.

In the general formulae (II₃-2) to (II₃-6) and the general formulae (II₄-2) to (II₄-6), R³⁹, R⁴⁰, R⁴¹, and R⁴² satisfy any one of the following (q6) to (q9):
(q6) each of R³⁹, R⁴⁰, R⁴¹, and R⁴² independently represents a hydrogen atom, a halogen atom, a C₁₋₂₀ alkyl group, a C₁₋₂₀ alkoxy group, an aryl group, or a heteroaryl group;
(q7) R³⁹ and R⁴⁰ together form an aromatic 5-membered ring which may have a substituent or an aromatic 6-membered ring which may have a substituent, and each of R⁴¹ and R⁴² independently represents a hydrogen atom, a halogen atom, a C₁₋₂₀ alkyl group, a C₁₋₂₀ alkoxy group, an aryl group, or a heteroaryl group;
(q8) R⁴⁰ and R⁴¹ together form an aromatic 5-membered ring which may have a substituent or an aromatic 6-membered ring which may have a substituent, and each of R³⁹ and R⁴² independently represents a hydrogen atom, a halogen atom, a C₁₋₂₀ alkyl group, a C₁₋₂₀ alkoxy group, an aryl group, or a heteroaryl group;
(q9) R⁴¹ and R⁴² together form an aromatic 5-membered ring which may have a substituent or an aromatic 6-membered ring which may have a substituent, and each of R³⁹ and R⁴⁰ independently represents a hydrogen atom, a halogen atom, a C₁₋₂₀ alkyl group, a C₁₋₂₀ alkoxy group, an aryl group, or a heteroaryl group.

As the halogen atom, the C₁₋₂₀ alkyl group, the C₁₋₂₀ alkoxy group, the aryl group, and the heteroaryl group in (p4), (p6) to (p9) and (q4), (q6) to (q9), those exemplified as "any group which does not inhibit fluorescence of a compound" represented by each of R^{a} and R^{b} can be used.

In (p5), (p7) to (p9), (q5), and (q7) to (q9), as the aromatic 5-membered ring or the aromatic 6-membered ring which R³¹ and R³² together form, the aromatic 5-membered ring or the aromatic 6-membered ring which R³³ and R³⁴ together form, the aromatic 5-membered ring or the aromatic 6-membered ring which R³⁵ and R³⁶ together form, the aromatic 5-membered ring or the aromatic 6-membered ring which R³⁶ and R³⁷ together form, the aromatic 5-membered ring or the aromatic 6-membered ring which R³⁷ and R³⁸ together form, the aromatic 5-membered ring or the aromatic 6-membered ring which R³⁹ and R⁴⁰ together form, the aromatic 5-membered ring or the aromatic 6-membered ring which R⁴⁰ and R⁴¹ together form, and the aromatic 5-membered ring or the aromatic 6-membered ring which R⁴¹ and R⁴² together form, a ring represented by any one of the general formulae (C-1) to (C-9) is preferable, and a ring represented by the general formula (C-9) is more preferable from the viewpoint of obtaining a compound having a high thermal stability.

As the compound represented by (II₃-1), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; Y⁹ and Y¹⁰ are each a sulfur atom or an oxygen atom; R³¹ and R³² are each independently a hydrogen atom or a C₁₋₂₀ alkyl group, or R³¹ and R³² together form a phenyl group which may have a substituent; and R³³ and R³⁴ are each independently a hydrogen atom or a C₁₋₂₀ alkyl group, or R³³ and R³⁴ together form a phenyl group which may have a substituent is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; Y⁹ and Y¹⁰ are each a sulfur atom or an oxygen atom; R³¹ and R³² are each independently a hydrogen atom or a C₁₋₂₀ alkyl group, or R³¹ and R³² together form an unsubstituted phenyl group or a phenyl group substituted with a C₁₋₁₀ alkyl group; and R³³ and R³⁴ are each independently a hydrogen atom or a C₁₋₂₀ alkyl group, or R³³ and R³⁴ together form an unsubstituted phenyl group or a phenyl group substituted with a C₁₋₁₀ alkyl group is more preferable because the compound has high light emitting efficiency and excellent compatibility with a resin.

As the compound represented by (II₃-2), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; R³⁵, R³⁶, R³⁷, and R³⁸ are each independently a hydrogen atom or a C₁₋₂₀ alkyl group, or R³⁵ and R³⁶ together form a phenyl group which may have a substituent, and R³⁷ and R³⁸ are each independently a hydrogen atom or a C₁₋₂₀ alkyl group, or R³⁶ and R³⁷ together form a phenyl group which may have a substituent, and R³⁵ and R³⁸ are each independently a hydrogen atom or a C₁₋₂₀ alkyl group, or R³⁷ and R³⁸ together form a phenyl group which may have a substituent, and R³⁵ and R³⁶ are each independently a hydrogen atom or a C₁₋₂₀ alkyl group; and R³⁹, R⁴⁰, R⁴¹, and R⁴² are each independently a hydrogen atom or a C₁₋₂₀ alkyl group, or R³⁹ and R⁴⁰ together form a phenyl group which may have a substituent, and R⁴¹ and R⁴² are each independently a hydrogen atom or a C₁₋₂₀ alkyl group, or R⁴⁰ and R⁴¹ together form a phenyl group which may have a substituent, and R³⁹ and R⁴² are each independently a hydrogen atom or a C₁₋₂₀ alkyl group, or R⁴¹ and R⁴² together form a phenyl group which may have a substituent, and R³⁹ and R⁴⁰ are each independently a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; R³⁵, R³⁶, R³⁷, and R³⁸ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁷ and R³⁸ are each independently a hydrogen atom or a C₁₋₂₀ alkyl group, or R³⁶ and R³⁷ together form an unsubstituted phenyl group or a phenyl group substituted with a C₁₋₁₀ alkyl group, and R³⁵ and R³⁸ are each independently a hydrogen atom or a C₁₋₂₀ alkyl group, or R³⁷ and R³⁸ together form an unsubstituted phenyl group or a phenyl group substituted with a C₁₋₁₀ alkyl group, and R³⁵ and R³⁶ are each independently a hydrogen atom or a C₁₋₂₀ alkyl group; and R³⁹, R⁴⁰, R⁴¹, and R⁴² are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴¹ and R⁴² are each independently a hydrogen atom or a C₁₋₂₀ alkyl group, or R⁴⁰ and R⁴¹ together form an unsubstituted phenyl group or a phenyl group substituted with a C₁₋₁₀ alkyl group, and R³⁹ and R⁴² are each independently a hydrogen atom or a C₁₋₂₀ alkyl group, or R⁴¹ and R⁴² together form an unsubstituted phenyl group or a phenyl group substituted with a C₁₋₁₀ alkyl group, and R³⁹ and R⁴⁰ are each independently a hydrogen atom or a C₁₋₂₀ alkyl group is more preferable because the compound has high light emitting efficiency and excellent compatibility with a resin.

As the compound represented by (II₃-3), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; X¹ and X² are each a nitrogen atom; R³⁶, R³⁷, and R³⁸ are each independently a hydrogen atom or a C₁₋₂₀ alkyl group, or R³⁶ and R³⁷ together form a phenyl group which may have a substituent, and R³⁸ is a hydrogen atom or a C₁₋₂₀ alkyl group, or R³⁷ and R³⁸ together form a phenyl group which may have a substituent, and R³⁶ is a hydrogen atom or a C₁₋₂₀ alkyl group; and R⁴⁰, R⁴¹, and R⁴² are each independently a hydrogen atom or a C₁₋₂₀ alkyl group, or R⁴⁰ and R⁴¹ together form a phenyl group which may have a substituent, and R⁴² is a hydrogen atom or a C₁₋₂₀ alkyl group, or R⁴¹ and R⁴² together form a phenyl group which may have a substituent, and R⁴⁰ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; X¹ and X² are each a nitrogen atom; R³⁶, R³⁷, and R³⁸ are each independently a hydrogen atom or a C₁₋₂₀ alkyl group, or R³⁶ and R³⁷ together form an unsubstituted phenyl group or a phenyl group substituted with a C₁₋₁₀ alkyl group, and R³⁸ is a hydrogen atom or a C₁₋₂₀ alkyl group, or R³⁷ and R³⁸ together form an unsubstituted phenyl group or a phenyl group substituted with a C₁₋₁₀ alkyl group, and R³⁶ is a hydrogen atom or a C₁₋₂₀ alkyl group; and R⁴⁰, R⁴¹, and R⁴² are each independently a hydrogen atom or a C₁₋₂₀ alkyl group, or R⁴⁰ and R⁴¹ together form an unsubstituted phenyl group or a phenyl group substituted with a C₁₋₁₀ alkyl group, and R⁴² is a hydrogen atom or a C₁₋₂₀ alkyl group, or R⁴¹ and R⁴² together form an unsubstituted phenyl group or a phenyl group substituted with a C₁₋₁₀ alkyl group, and R⁴⁰ is a hydrogen atom or a C₁₋₂₀ alkyl group is more preferable because the compound has high light emitting efficiency and excellent compatibility with a resin.

As the compound represented by (II₃-4), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; X¹ and X² are each a nitrogen atom; R³⁵, R³⁶, and R³⁷ are each independently a hydrogen atom or a C₁₋₂₀ alkyl group, or R³⁵ and R³⁶ together form a phenyl group which may have a substituent, and R³⁷ is a hydrogen atom or a C₁₋₂₀ alkyl group, or R³⁶ and R³⁷ together form a phenyl group which may have a substituent, and R³⁵ is a hydrogen atom or a C₁₋₂₀ alkyl group; and R³⁹, R⁴⁰, and R⁴¹ are each independently a hydrogen atom or a C₁₋₂₀ alkyl group, or R³⁹ and R⁴⁰ together form a phenyl group which may have a substituent, and R⁴¹ is a hydrogen atom or a C₁₋₂₀ alkyl group, or R⁴⁰ and R⁴¹ together form a phenyl group which may have a substituent, and R³⁹ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; X¹ and X² are each a nitrogen atom; R³⁵, R³⁶, and R³⁷ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁷ is a hydrogen atom or a C₁₋₂₀ alkyl group, or R³⁶ and R³⁷ together form an unsubstituted phenyl group or a phenyl group substituted with a C₁₋₁₀ alkyl group, and R³⁵ is a hydrogen atom or a C₁₋₂₀ alkyl group; and R³⁹, R⁴⁰, and R⁴¹ are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴¹ is a hydrogen atom or a C₁₋₂₀ alkyl group, or R⁴⁰ and R⁴¹ together form an unsubstituted phenyl group or a phenyl group substituted with a C₁₋₁₀ alkyl group, and R³⁹ is a hydrogen atom or a C₁₋₂₀ alkyl group is more preferable because the compound has high light emitting efficiency and excellent compatibility with a resin.

As the compound represented by (II₃-5), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; X¹ and X² are each a nitrogen atom; R³⁵, R³⁶, and R³⁸ are each independently a hydrogen atom or a C₁₋₂₀ alkyl group, or R³⁵ and R³⁶ together form a phenyl group which may have a substituent, and R³⁸ is a hydrogen atom or a C₁₋₂₀ alkyl group; and R³⁹, R⁴⁰, and R⁴² are each independently a hydrogen atom or a C₁₋₂₀ alkyl group, or R³⁹ and R⁴⁰ together form a phenyl group which may have a substituent, and R⁴² is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; X¹ and X² are each a nitrogen atom; R³⁵, R³⁶, and R³⁸ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁸ is a hydrogen atom or a C₁₋₂₀ alkyl group; and R³⁹, R⁴⁰, and R⁴² are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴² is a hydrogen atom or a C₁₋₂₀ alkyl group is preferable because the compound has high light emitting efficiency and excellent compatibility with a resin.

As the compound represented by (II₃-6), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R²⁹ and R³⁰ are each a trifluoromethyl group, a nitro group, a cyano group, or a phenyl group; X¹ and X² are each a nitrogen atom; R³⁵, R³⁷, and R³⁸ are each independently a hydrogen atom or a C₁₋₂₀ alkyl group, or R³⁷ and R³⁸ together form a phenyl group which may have a substituent, and R³⁵ is a hydrogen atom or a C₁₋₂₀ alkyl group; and R³⁹, R⁴¹, and R⁴² are each independently a hydrogen atom or a C₁₋₂₀ alkyl group, or R⁴¹ and R⁴² together form a phenyl group which may have a substituent, and R³⁹ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R²⁹ and R³⁰ are each a trifluoromethyl group, a nitro group, or a cyano group; X¹ and X² are each a nitrogen atom; R³⁵, R³⁷, and R³⁸ are each independently a hydrogen atom or a C₁₋₂₀ alkyl group, or R³⁷ and R³⁸ together form an unsubstituted phenyl group or a phenyl group substituted with a C₁₋₁₀ alkyl group, and R³⁵ is a hydrogen atom or a C₁₋₂₀ alkyl group; and R³⁹, R⁴¹, and R⁴² are each independently a hydrogen atom or a C₁₋₂₀ alkyl group, or R⁴¹ and R⁴² together form an unsubstituted phenyl group or a phenyl group substituted with a C₁₋₁₀ alkyl group, and R³⁹ is a hydrogen atom or a C₁₋₂₀ alkyl group is more preferable because the compound has high light emitting efficiency and excellent compatibility with a resin.

As the compound represented by (II₄-1), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; Y⁹ and Y¹⁰ are each a sulfur atom or an oxygen atom; R³¹ and R³² are each independently a hydrogen atom or a C₁₋₂₀ alkyl group, or R³¹ and R³² together form a phenyl group which may have a substituent; and R³³ and R³⁴ are each independently a hydrogen atom or a C₁₋₂₀ alkyl group, or R³³ and R³⁴ together form a phenyl group which may have a substituent is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; Y⁹ and Y¹⁰ are each a sulfur atom or an oxygen atom; R³¹ and R³² are each independently a hydrogen atom or a C₁₋₂₀ alkyl group, or R³¹ and R³² together form an unsubstituted phenyl group or a phenyl group substituted with a C₁₋₁₀ alkyl group; and R³³ and R³⁴ are each independently a hydrogen atom or a C₁₋₂₀ alkyl group, or R³³ and R³⁴ together form an unsubstituted phenyl group or a phenyl group substituted with a C₁₋₁₀ alkyl group is more preferable because the compound has high light emitting efficiency and excellent compatibility with a resin.

As the compound represented by (II₄-2), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; R³⁵, R³⁶, R³⁷, and R³⁸ are each independently a hydrogen atom or a C₁₋₂₀ alkyl group, or R³⁵ and R³⁶ together form a phenyl group which may have a substituent, and R³⁷ and R³⁸ are each independently a hydrogen atom or a C₁₋₂₀ alkyl group, or R³⁶ and R³⁷ together form a phenyl group which may have a substituent, and R³⁵ and R³⁸ are each independently a hydrogen atom or a C₁₋₂₀ alkyl group, or R³⁷ and R³⁸ together form a phenyl group which may have a substituent, and R³⁵ and R³⁶ are each independently a hydrogen atom or a C₁₋₂₀ alkyl group; and R³⁹, R⁴⁰, R⁴¹, and R⁴² are each independently a hydrogen atom or a C₁₋₂₀ alkyl group, or R³⁹ and R⁴⁰ together form a phenyl group which may have a substituent, and R⁴¹ and R⁴² are each independently a hydrogen atom or a C₁₋₂₀ alkyl group, or R⁴⁰ and R⁴¹ together form a phenyl group which may have a substituent, and R³⁹ and R⁴² are each independently a hydrogen atom or a C₁₋₂₀ alkyl group, or R⁴¹ and R⁴² together form a phenyl group which may have a substituent, and R³⁹ and R⁴⁰ are each independently a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R³⁵, R³⁶, R³⁷, and R³⁸ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁷ and R³⁸ are each independently a hydrogen atom or a C₁₋₂₀ alkyl group, or R³⁶ and R³⁷ together form an unsubstituted phenyl group or a phenyl group substituted with a C₁₋₁₀ alkyl group, and R³⁵ and R³⁸ are each independently a hydrogen atom or a C₁₋₂₀ alkyl group, or R³⁷ and R³⁸ together form an unsubstituted phenyl group or a phenyl group substituted with a C₁₋₁₀ alkyl group, and R³⁵ and R³⁶ are each independently a hydrogen atom or a C₁₋₂₀ alkyl group; and R³⁹, R⁴⁰, R⁴¹, and R⁴² are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴¹ and R⁴² are each independently a hydrogen atom or a C₁₋₂₀ alkyl group, or R⁴⁰ and R⁴¹ together form an unsubstituted phenyl group or a phenyl group substituted with a C₁₋₁₀ alkyl group, and R³⁹ and R⁴² are each independently a hydrogen atom or a C₁₋₂₀ alkyl group, or R⁴¹ and R⁴² together form an unsubstituted phenyl group or a phenyl group substituted with a C₁₋₁₀ alkyl group, and R³⁹ and R⁴⁰ are each independently a hydrogen atom or a C₁₋₂₀ alkyl group is more preferable because the compound has high light emitting efficiency and excellent compatibility with a resin.

As the compound represented by (II₄-3), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; X¹ and X² are each a nitrogen atom; R³⁶, R³⁷, and R³⁸ are each independently a hydrogen atom or a C₁₋₂₀ alkyl group, or R³⁶ and R³⁷ together form a phenyl group which may have a substituent, and R³⁸ is a hydrogen atom or a C₁₋₂₀ alkyl group, or R³⁷ and R³⁸ together form a phenyl group which may have a substituent, and R³⁶ is a hydrogen atom or a C₁₋₂₀ alkyl group; and R⁴⁰, R⁴¹, and R⁴² are each independently a hydrogen atom or a C₁₋₂₀ alkyl group, or R⁴⁰ and R⁴¹ together form a phenyl group which may have a substituent, and R⁴² is a hydrogen atom or a C₁₋₂₀ alkyl group, or R⁴¹ and R⁴² together form a phenyl group which may have a substituent, and R⁴⁰ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; R³⁶, R³⁷, and R³⁸ are each independently a hydrogen atom or a C₁₋₂₀ alkyl group, or R³⁶ and R³⁷ together form an unsubstituted phenyl group or a phenyl group substituted with a C₁₋₁₀ alkyl group, and R³⁸ is a hydrogen atom or a C₁₋₂₀ alkyl group, or R³⁷ and R³⁸ together form an unsubstituted phenyl group or a phenyl group substituted with a C₁₋₁₀ alkyl group, and R³⁶ is a hydrogen atom or a C₁₋₂₀ alkyl group; and R⁴⁰, R⁴¹, and R⁴² are each independently a hydrogen atom or a C₁₋₂₀ alkyl group, or R⁴⁰ and R⁴¹ together form an unsubstituted phenyl group or a phenyl group substituted with a C₁₋₁₀ alkyl group, and R⁴² is a hydrogen atom or a C₁₋₂₀ alkyl group, or R⁴¹ and R⁴² together form an unsubstituted phenyl group or a phenyl group substituted with a C₁₋₁₀ alkyl group, and R⁴⁰ is a hydrogen atom or a C₁₋₂₀ alkyl group is more preferable because the compound has high light emitting efficiency and excellent compatibility with a resin.

As the compound represented by (II₄-4), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; X¹ and X² are each a nitrogen atom; R³⁵, R³⁶, and R³⁷ are each independently a hydrogen atom or a C₁₋₂₀ alkyl group, or R³⁵ and R³⁶ together form a phenyl group which may have a substituent, and R³⁷ is a hydrogen atom or a C₁₋₂₀ alkyl group, or R³⁶ and R³⁷ together form a phenyl group which may have a substituent, and R³⁵ is a hydrogen atom or a C₁₋₂₀ alkyl group; and R³⁹, R⁴⁰, and R⁴¹ are each independently a hydrogen atom or a C₁₋₂₀ alkyl group, or R³⁹ and R⁴⁰ together form a phenyl group which may have a substituent, and R⁴¹ is a hydrogen atom or a C₁₋₂₀ alkyl group, or R⁴⁰ and R⁴¹ together form a phenyl group which may have a substituent, and R³⁹ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; X¹ and X² are each a nitrogen atom; R³⁵, R³⁶, and R³⁷ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁷ is a hydrogen atom or a C₁₋₂₀ alkyl group, or R³⁶ and R³⁷ together form an unsubstituted phenyl group or a phenyl group substituted with a C₁₋₁₀ alkyl group, and R³⁵ is a hydrogen atom or a C₁₋₂₀ alkyl group; and R³⁹, R⁴⁰, and R⁴¹ are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴¹ is a hydrogen atom or a C₁₋₂₀ alkyl group, or R⁴⁰ and R⁴¹ together form an unsubstituted phenyl group or a phenyl group substituted with a C₁₋₁₀ alkyl group, and R³⁹ is a hydrogen atom or a C₁₋₂₀ alkyl group is more preferable because the compound has high light emitting efficiency and excellent compatibility with a resin.

As the compound represented by (II₄-5), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; X¹ and X² are each a nitrogen atom; R³⁵, R³⁶, and R³⁸ are each independently a hydrogen atom or a C₁₋₂₀ alkyl group, or R³⁵ and R³⁶ together form a phenyl group which may have a substituent, and R³⁸ is a hydrogen atom or a C₁₋₂₀ alkyl group; and R³⁹, R⁴⁰, and R⁴² are each independently a hydrogen atom or a C₁₋₂₀ alkyl group, or R³⁹ and R⁴⁰ together form a phenyl group which may have a substituent, and R⁴² is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; X¹ and X² are each a nitrogen atom; R³⁵, R³⁶, and R³⁸ are each independently a hydrogen atom or a C₁₋₂₀ alkyl group, or R³⁵ and R³⁶ together form an unsubstituted phenyl group or a phenyl group substituted with a C₁₋₁₀ alkyl group, and R³⁸ is a hydrogen atom or a C₁₋₂₀ alkyl group; and R³⁹, R⁴⁰, and R⁴² are each independently a hydrogen atom or a C₁₋₂₀ alkyl group, or R³⁹ and R⁴⁰ together form an unsubstituted phenyl group or a phenyl group substituted with a C₁₋₁₀ alkyl group, and R⁴² is a hydrogen atom or a C₁₋₂₀ alkyl group is more preferable because the compound has high light emitting efficiency and excellent compatibility with a resin.

As the compound represented by (II₄-6), a compound in which R²³, R²⁴, R²⁵, and R²⁶ are each a halogen atom, an unsubstituted phenyl group, or a phenyl group substituted with a C₁₋₁₀ alkyl group or a C₁₋₁₀ alkoxy group; R²⁷ and R²⁸ are each a hydrogen atom, an unsubstituted phenyl group, or a phenyl group substituted with a C₁₋₂₀ alkyl group or a C₁₋₂₀ alkoxy group; X¹ and X² are each a nitrogen atom; R³⁵, R³⁷, and R³⁸ are each independently a hydrogen atom or a C₁₋₂₀ alkyl group, or R³⁷ and R³⁸ together form a phenyl group which may have a substituent, and R³⁵ is a hydrogen atom or a C₁₋₂₀ alkyl group; and R³⁹, R⁴¹, and R⁴² are each independently a hydrogen atom or a C₁₋₂₀ alkyl group, or R⁴¹ and R⁴² together form a phenyl group which may have a substituent, and R³⁹ is a hydrogen atom or a C₁₋₂₀ alkyl group is preferable, and a compound in which R²³, R²⁴, R²⁵, and R²⁶ are each a halogen atom or an unsubstituted phenyl group; R²⁷ and R²⁸ are each a hydrogen atom, an unsubstituted phenyl group, or a phenyl group substituted with a linear or branched C₁₋₂₀ alkoxy group; X¹ and X² are each a nitrogen atom; R³⁵, R³⁷, and R³⁸ are each independently a hydrogen atom or a C₁₋₂₀ alkyl group, or R³⁷ and R³⁸ together form an unsubstituted phenyl group or a phenyl group substituted with a C₁₋₁₀ alkyl group, and R³⁵ is a hydrogen atom or a C₁₋₂₀ alkyl group; and R³⁹, R⁴¹, and R⁴² are each independently a hydrogen atom or a C₁₋₂₀ alkyl group, or R⁴¹ and R⁴² together form an unsubstituted phenyl group or a phenyl group substituted with a C₁₋₁₀ alkyl group, and R³⁹ is a hydrogen atom or a C₁₋₂₀ alkyl group is more preferable because the compound has high light emitting efficiency and excellent compatibility with a resin.

The compound represented by any of (II₃-1) to (II₃-6) is preferably a compound represented by any of the following general formulae (II₃-7) to (II₃-9), and the compound represented by any of (II₄-I) to (II₄-6) is preferably a compound represented by any of the following general formulae (II₄-7) to (II₄-9).

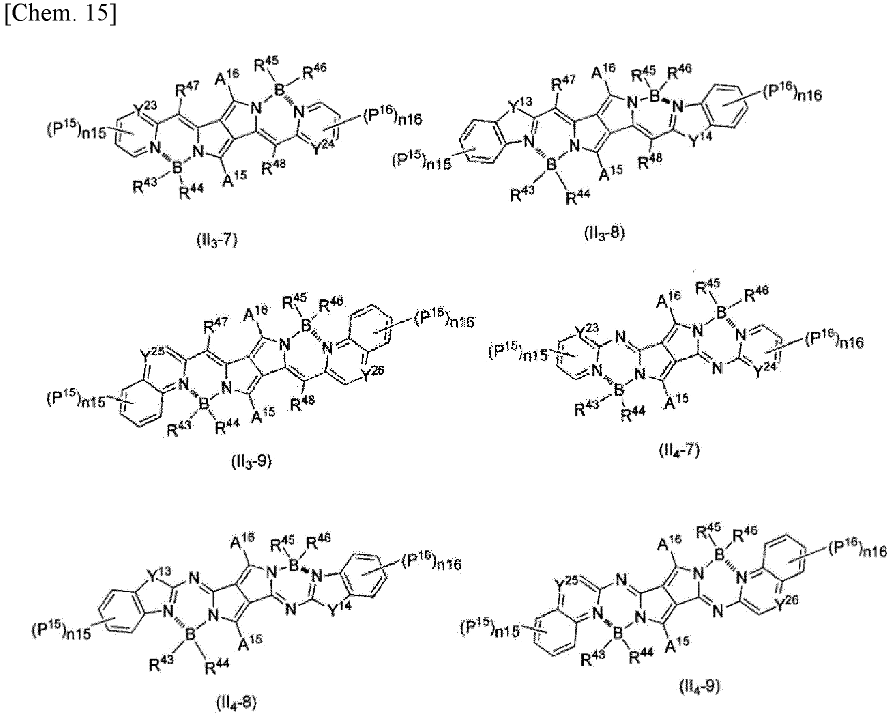

In the general formulae (II₃-7) and (II₄-7), each of Y²³ and Y²⁴ independently represents a carbon atom or a nitrogen atom. In the general formula (II₃-7) and the like, Y²³ and Y²⁴ are preferably the same kind of atoms.

In the general formulae (II₃-8) and (II₄-8), each of Y¹³ and Y¹⁴ independently represents an oxygen atom or a sulfur atom. In the general formula (II₃-8) and the like, Y²³ and Y²⁴ are preferably the same kind of atoms.

In the general formulae (II₃-9) and (11₄-9), each of Y²⁵ and Y²⁶ independently represents a carbon atom or a nitrogen atom. In the general formula (II₃-9) and the like, Y²⁵ and Y²⁶ are preferably the same kind of atoms.

In the general formulae (II₃-7) to (II₃-9), each of R⁴⁷ and R⁴¹ independently represents a hydrogen atom or an electron withdrawing group, and from the viewpoint of increasing fluorescence intensity, a trifluoromethyl group, a cyano group, a nitro group, a sulfonyl group, or a phenyl group is preferable, and a trifluoromethyl group or a cyano group is particularly preferable. In the general formula (II₃-7) and the like, R⁴⁷ and R⁴⁸ are preferably the same kind of functional groups.

In the general formulae (II₃-7) to (II₃-9) and (II₄-7) to (11₄-9), R⁴³, R⁴⁴, R ⁴¹, and R⁴⁶ represent a halogen atom or an aryl group which may have a substituent. As the aryl group, those exemplified as "any group which does not inhibit fluorescence of a compound" represented by each of R^{a} and R^{b} can be used. Further, the substituents which the aryl group may have may be "any group which does not inhibit fluorescence of a compound", and examples thereof include a C₁₋₆ alkyl group, a C₁₋₆ alkoxy group, an aryl group, and a heteroaryl group. In the general formulae (II₃-7) to (II₃-9) and (II₄-7) to (11₄-9), R⁴³ to R⁴⁶ may be groups different from each other, but are preferably all groups of the same kind. As the compound represented by any of the general formulae (II₃-7) to (II₃-9) and (II₄-7) to (II₄-9), a compound in which R⁴³ to R⁴⁶ are all halogen atoms of the same kind or are all phenyl groups which may have substituents of the same kind is preferable, a compound in which R⁴³ to R⁴⁶ are all fluorine atoms or unsubstituted phenyl groups is more preferable, and a compound in which R⁴³ to R⁴⁶ are all fluorine atoms is particularly preferable.

In the general formulae (II₃-7) to (II₃-9) and (II₄-7) to (11₄-9), each of P¹⁵ and P¹⁶ independently represents a halogen atom, a C₁₋₂₀ alkyl group, a C₁₋₂₀ alkoxy group, an amino group, a monoalkylamino group, or a dialkylamino group. Examples of the C₁₋₂₀ alkyl group, the C₁₋₂₀ alkoxy group, the monoalkylamino group, and the dialkylamino group of P¹⁵ and P¹⁶ include the same groups as those exemplified for R^{g}, (p1) to (p3), and (q1) to (q3), respectively. As P¹⁵ and P¹⁶, a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group is preferable, and from the viewpoint of safety to a living body, a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group is more preferable, and these substituents may further have a substituent. However, even in the case of a substituent other than these substituents, safety can be improved by further introducing an appropriate substituent, and therefore the substituent is not limited to these substituents.

In the general formulae (II₃-7) to (II₃-9) and (II₄-7) to (11₄-9), each of n15 and n16 independently represents an integer of 0 to 3. In a case where a plurality of P¹⁵ groups are present in one molecule (that is, in a case where n15 is 2 or 3), all of the plurality of P¹⁵ groups may be the same kind of functional groups or may be different kinds of functional groups, and the same applies to P¹⁶ groups.

In the general formulae (II₃-7) to (II₃-9) and (II₄-7) to (11₄-9), each of A¹⁵ and A¹⁶ independently represents a hydrogen atom, a halogen atom, or a phenyl group which may have 1 to 3 substituents selected from the group consisting of a C₁₋₂₀ alkyl group, a C₁₋₂₀ alkoxy group, an amino group, a monoalkylamino group, and a dialkylamino group. Examples of the C₁₋₂₀ alkyl group, the C₁₋₂₀ alkoxy group, the monoalkylamino group, or the dialkylamino group in the substituents which the phenyl group may have include the same groups as those exemplified for R^{g}, (p1) to (p3), and (q1) to (q3), respectively. As A¹⁵ and A¹⁶, an unsubstituted phenyl group or a phenyl group having one or two C₁₋₂₀ alkoxy groups as a substituent is preferable, an unsubstituted phenyl group or a phenyl group having one C₁₋₂₀ alkoxy group as a substituent is more preferable, and an unsubstituted phenyl group or a phenyl group having one C₁₋₁₀ alkoxy group as a substituent is still more preferable. Further, in the compound represented by the general formula (II₃-7) or the like, it is preferable that both of A¹⁵ and A¹⁶ are the same kind of functional groups.

Examples of the compound represented by any one of (II₃-1) to (II₃-6) include compounds represented by any one of the following general formulae (6-1) to (6-12) and (7-1) to (7-12). In the general formulae (6-7) to (6-12) and (7-7) to (7-12), Ph means an unsubstituted phenyl group. As the DPP-based boron complex used in the present invention, compounds represented by the general formulae (6-4), (6-5), (6-7), (6-8), (7-4), (7-5), (7-7), and (7-8) are particularly preferable, and compounds represented by the general formulae (6-4), (6-5), (6-7), and (6-8) are more preferable.

In the general formulae (6-1) to (6-12) and (7-1) to (7-12), each of P⁵ to P⁸ independently represents a halogen atom, a C₁₋₂₀ alkyl group, a C₁₋₂₀ alkoxy group, an amino group, a monoalkylamino grouop, or a dialkylamino group. Examples of the C₁₋₂₀ alkyl group, the C₁₋₂₀ alkoxy group, the monoalkylamino group, and the dialkylamino group of P⁵ to P⁸ include the same groups as those exemplified for R^{g}, (p1) to (p3), and (q1) to (q3), respectively. As P⁵ to P⁸, a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group is preferable, and from the viewpoint of safety to a living body, a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group is more preferable, a C₁₋₂₀ alkyl group or a C₁₋₂₀ alkoxy group is still more preferable, a C₁₋₁₀ alkyl group or a C₁₋₁₀ alkoxy group is even more preferable, and these substituents may further have a substituent. However, even in the case of a substituent other than these substituents, safety can be improved by further introducing an appropriate substituent, and therefore the substituent is not limited to these substituents.

In the general formulae (6-1) to (6-12) and (7-1) to (7-12), each of n5 and n8 independently represents an integer of 0 to 3. In a case where a plurality of P⁵ groups are present in one molecule (that is, in a case where n5 is 2 or 3), all of the plurality of P⁵ groups may be the same kind of functional groups or may be different kinds of functional groups, and the same applies to P⁶ to P⁸ groups.

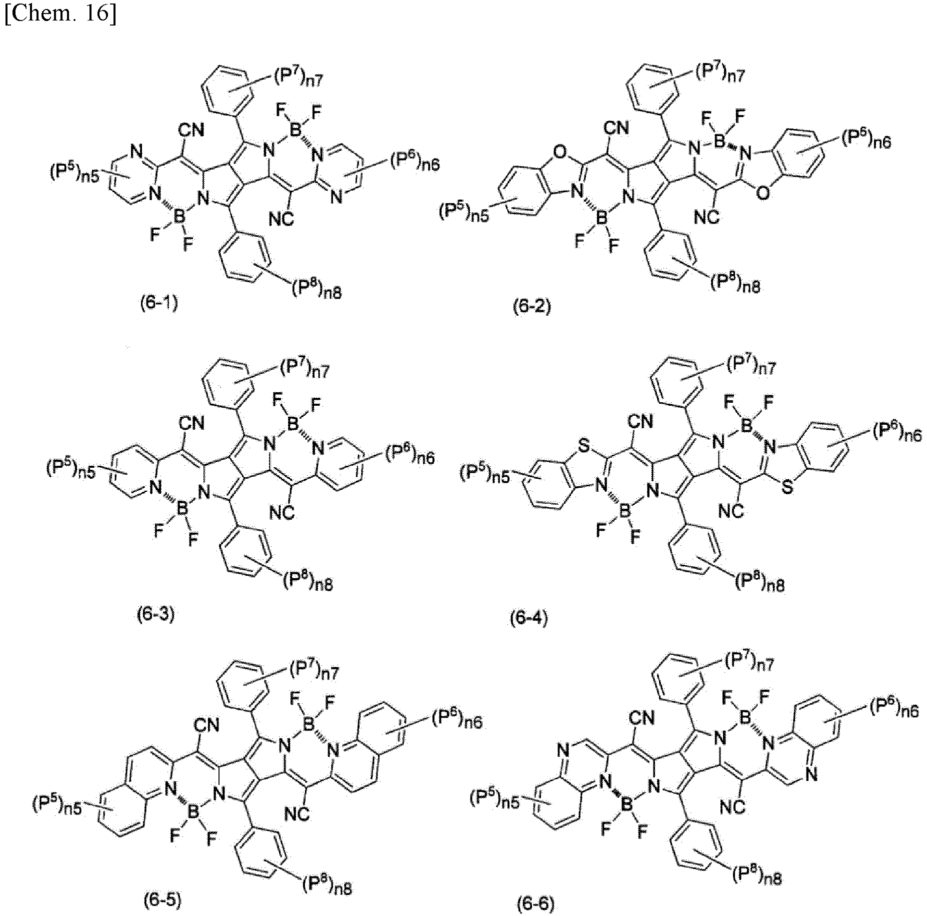

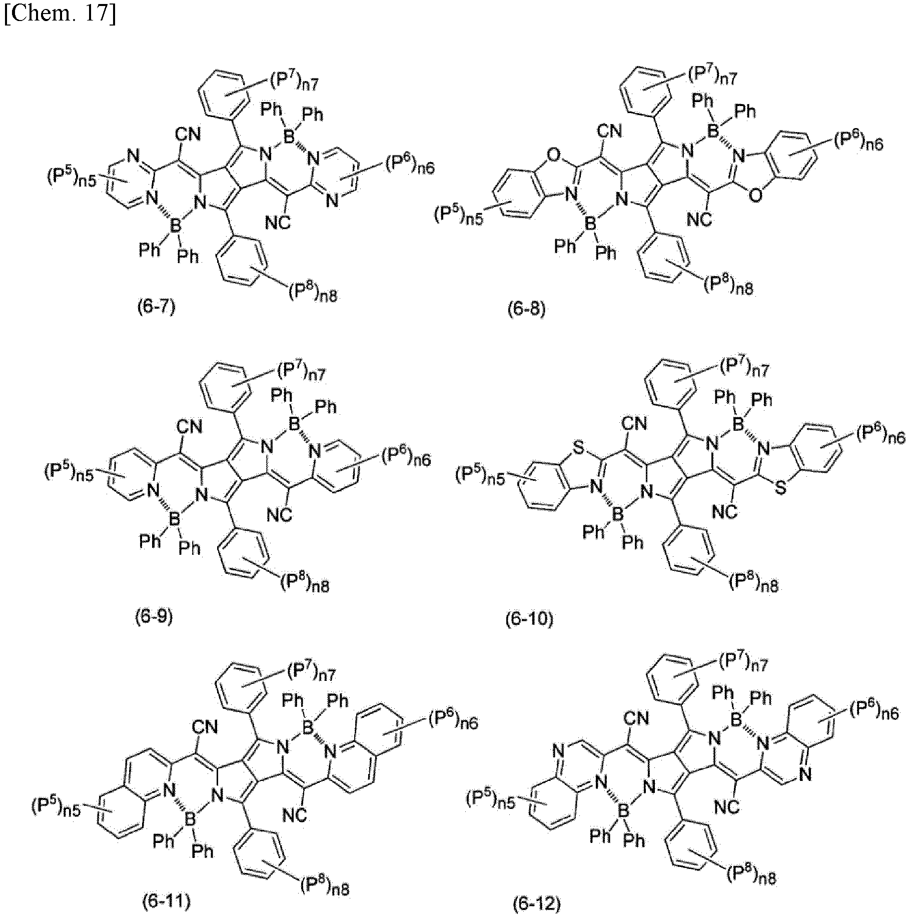

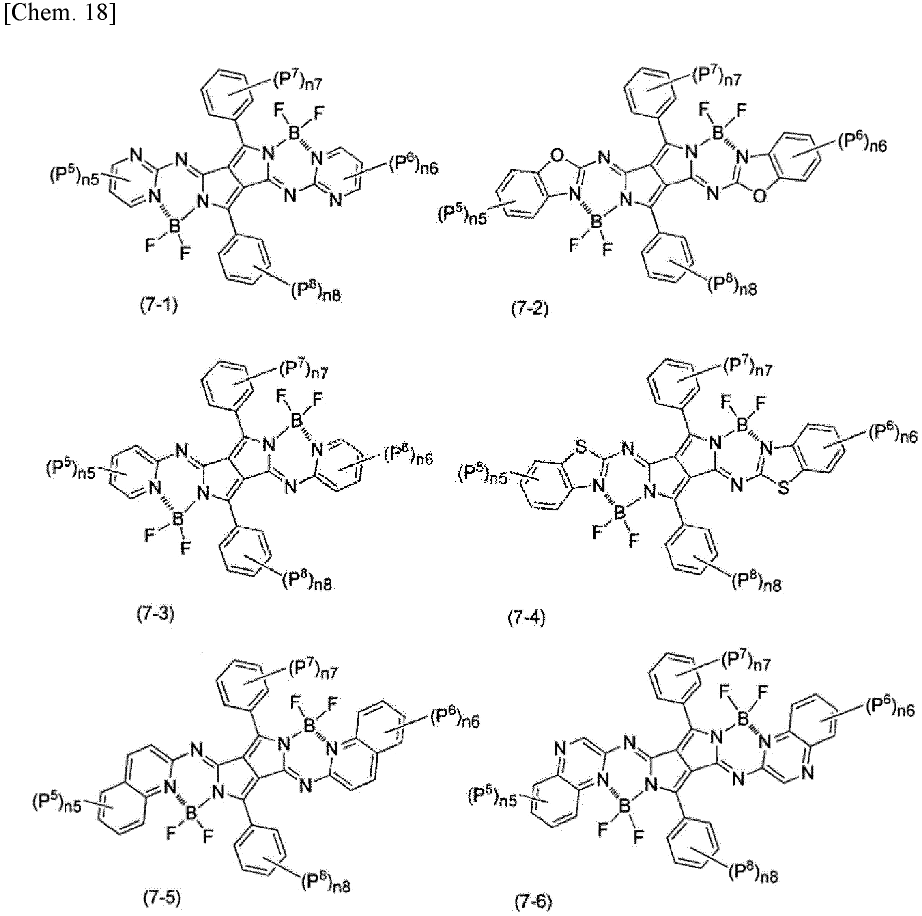

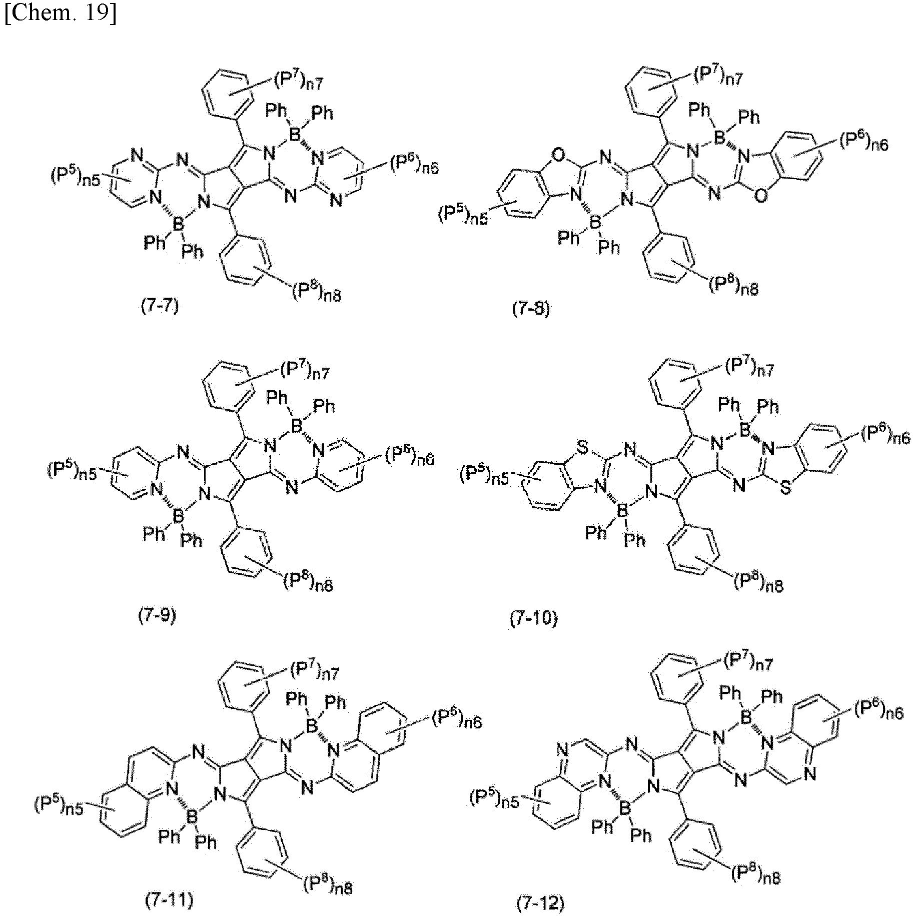

As the compounds represented by the general formulae (6-1) to (6-12) and (7-1) to (7-12), those in which P⁵ to P⁸ are each independently a C₁₋₂₀ alkyl group or a C₁₋₂₀ alkoxy group and n5 to n8 are each independently 0 to 2 are preferable, those in which P⁵ and P⁶ are each independently a C₁₋₂₀ alkyl group, n5 and n6 are each independently 0 to 2, P⁷ and P⁸ are each independently a C₁₋₂₀ alkoxy group, and n7 and n8 are each independently 0 to 1 are more preferable, and those in which P⁵ and P⁶ are each independently a C₁₋₂₀ alkyl group, n5 and n6 are each independently 1 to 2, P⁷ and P⁸ are each independently a C₁₋₂₀ alkoxy group, and n7 and n8 are each 1 are still more preferable.

Specific examples of the compounds represented by the general formulae (6-1) to (6-12) include compounds represented by the following formulae (6-1-1) to (6-12-1). "λ" is a peak wavelength of an absorption spectrum of each compound in a solution, and "Em" is a peak wavelength of a fluorescence spectrum.

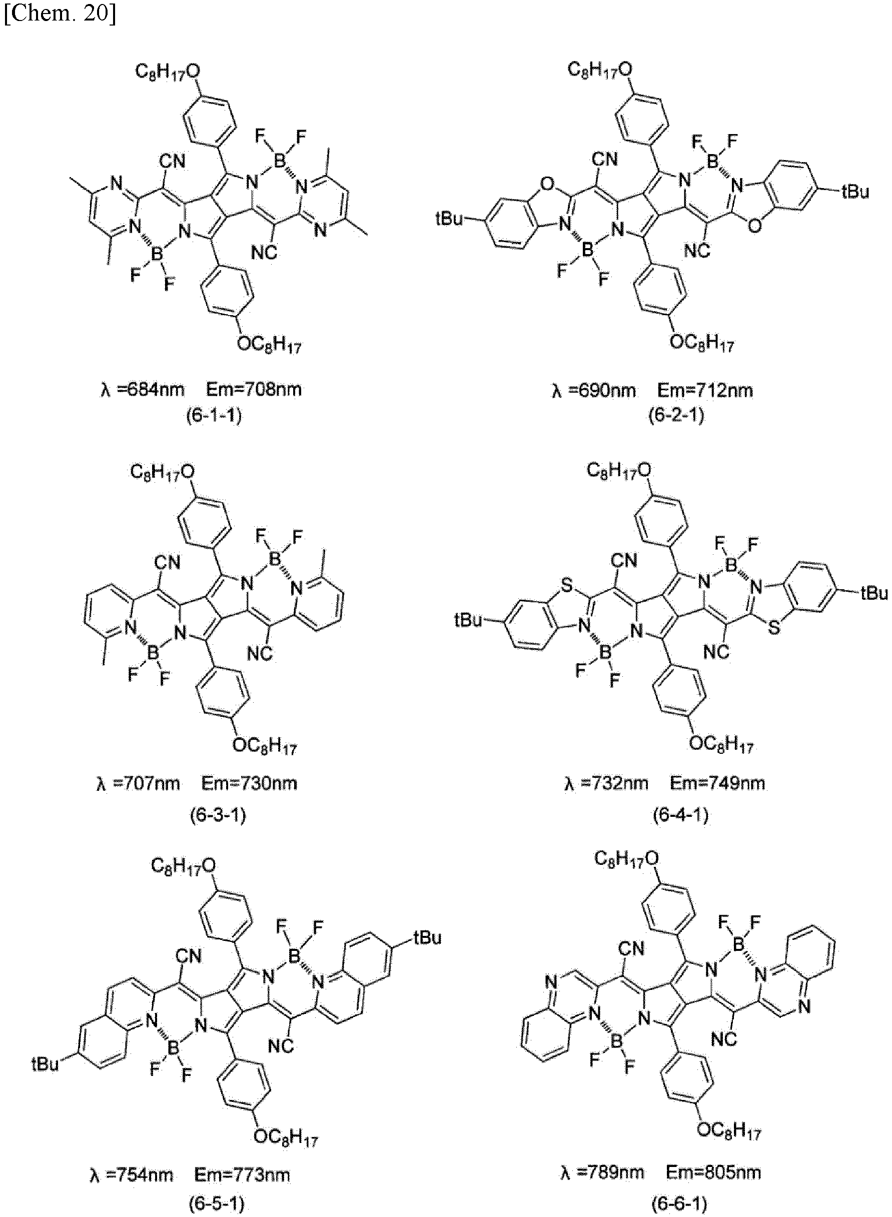

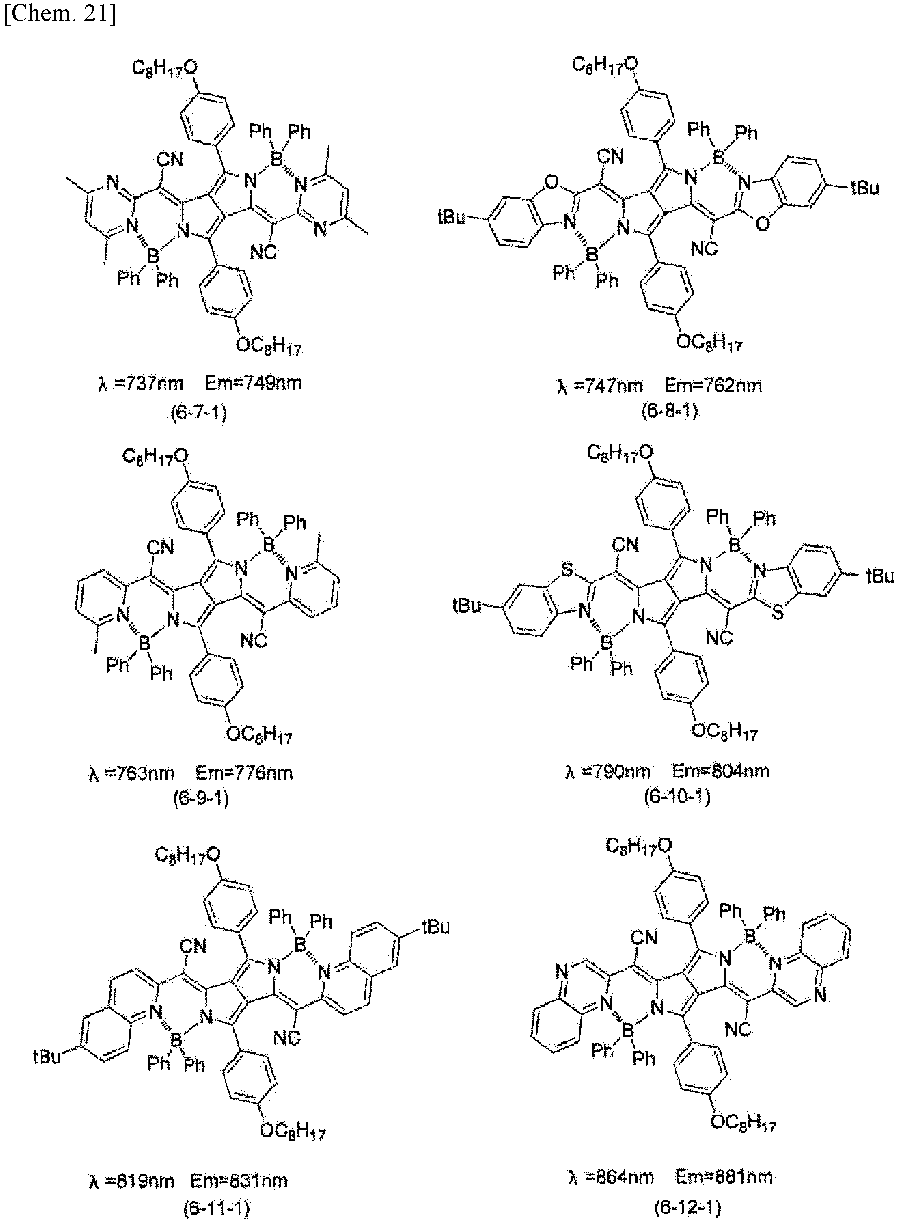

As the near-infrared fluorescent material (A) according to the present invention, a commercially available product may be used, or a synthetic product may be used. Examples of the synthetic method include a synthetic method described in, for example, Chemistry A European Journal, 2009, Vol. 15, pp. 4857-4864.

The content of the near-infrared fluorescent material (A) is not particularly limited as long as the near-infrared fluorescent material (A) can be mixed with the thermoplastic resin (B). However, from the viewpoint of fluorescence intensity and detection sensitivity thereof, the content of the near-infrared fluorescent material (A) may be in the range of preferably 0.0005% by mass or more, and more preferably 0.001% by mass or more, and from the viewpoint of detection sensitivity due to concentration quenching or fluorescence reabsorption, may be in the range of preferably 1% by mass or less, more preferably 0.8% by mass or less, and still more preferably 0.5% by mass or less, with respect to 100% by mass of the total of the near-infrared fluorescent material (A) and the thermoplastic resin (B).

Since the near-infrared fluorescent material used in the present invention has a high molar light absorption coefficient and a high quantum yield even in the resin, even in a case where the concentration of the near-infrared fluorescent material in the resin is relatively low, the light emission thereof can be sufficiently visually recognized by a camera or the like. The low concentration of the near-infrared fluorescent material is preferable from the viewpoint of a low possibility of elution, a low possibility of bleeding out from a molded object processed from the resin composition, and a possibility of processing a molded object requiring transparency.

### <Thermoplastic Resin (B) Other Than Polyamide Resin>

The thermoplastic resin (B) other than a polyamide resin used in the present invention forms a dispersed phase in the masterbatch, the resin composition, or the molded object together with the near-infrared fluorescent material.

The thermoplastic resin (B) used in the present invention is not particularly limited as long as it is a thermoplastic resin other than a polyamide resin, and can be appropriately selected from known resins in consideration of the type of near-infrared fluorescent substance to be blended, product quality required when a molded object is formed, and the like. As the thermoplastic resin (B) used in the present invention, one kind may be used alone, or two or more kinds may be mixed and used. In a case where two or more kinds are mixed, it is preferable to use resins having high compatibility in combination. Further, as the thermoplastic resin (B), a commercially available product may be used, or a synthetic product may be used.

Specific examples of the thermoplastic resin (B) used in the present invention include, for example, thermoplastic polyurethanes (TPU); polycarbonate (PC) resins; vinyl chloride resins such as polyvinyl chloride (PVC) and vinyl chloride-vinyl acetate copolymer resin; acrylic resins such as polyacrylic acid, polymethacrylic acid, polymethyl acrylate, polymethyl methacrylate (PMMA), and polyethyl methacrylate; polyester resins such as polyethylene terephthalate (PET), polybutylene terephthalate, polytrimethylene terephthalate, polyethylene naphthalate, and polybutylene naphthalate; polystyrene resins such as polystyrene (PS), imido-modified polystyrene, acrylonitrile-butadiene-styrene (ABS) resin, imido-modified ABS resin, styrene-acrylonitrile copolymer (SAN) resin, and acrylonitrile-ethylene-propylene-diene-styrene (AES) resin; olefin resins such as polyethylene (PE) resin, polypropylene (PP) resin, and cycloolefin resin; polyacetal (POM) resins; cellulose resins such as nitrocellulose and cellulose acetate; silicone resins; and fluororesins.

Among these thermoplastic resins (B), since the near-infrared fluorescent material has high dispersibility, the thermoplastic resin (B) preferably includes at least one selected from the group consisting of a thermoplastic polyurethane (TPU) resin, a polycarbonate (PC) resin, a vinyl chloride resin, an acrylic resin, a polyester resin, a polystyrene resin, an olefin resin, and a polyacetal (POM) resin. In particular, in a case where the resin composition according to the present invention is used as a medical material, TPU, PC, PVC, PMMA, PET, PS, PE, and PP are more preferable, and TPU, PC, PMMA, PS, and PE are still more preferable as the thermoplastic resin (B) from the viewpoint that the solubility in a body fluid such as blood is low and the resin composition is hardly eluted in a use environment and in consideration of biocompatibility.

The content of the thermoplastic resin (B) is not particularly limited as long as the near-infrared fluorescent material (A) can be mixed with the thermoplastic resin (B). However, from the viewpoint of fluorescence intensity and detection sensitivity thereof, the content of the thermoplastic resin (B) may be in the range of preferably 99% by mass or more, more preferably 99.2% by mass or more, and still more preferably 99.5% by mass or more, and may be in the range of preferably 99.9995% by mass or less, and more preferably 99.999% by mass or less, with respect to 100% by mass of the total of the near-infrared fluorescent material (A) and the thermoplastic resin (B).

### <Resin (C)>

The resin (C) used in the present invention is a resin different from the thermoplastic resin (B) and forms a continuous phase in the masterbatch, the resin composition, or the molded object.

The resin (C) is not particularly limited as long as it is different from the thermoplastic resin (B), and may be a thermoplastic resin or may be a thermosetting resin. A polyamide resin or a thermosetting resin capable of deactivating the above-described near-infrared fluorescent material can also be used as the resin (C) forming the continuous phase, and a resin composition having high light emitting efficiency of near-infrared fluorescence and a molded object thereof can be obtained.

As the resin (C), one kind may be used alone, or two or more kinds may be mixed and used. In addition, as the resin (C), a commercially available product may be used, or a synthetic product may be used.

Specific examples of the resin (C) used in the present invention include, for example, urethane resins such as polyurethane (PU) resins and thermoplastic polyurethane (TPU) resins; polycarbonate (PC) resins; vinyl chloride resins such as polyvinyl chloride (PVC) and vinyl chloride-vinyl acetate copolymer resin; acrylic resins such as polyacrylic acid, polymethacrylic acid, polymethyl acrylate, polymethyl methacrylate (PMMA), and polyethyl methacrylate; polyester resins such as polyethylene terephthalate (PET), polybutylene terephthalate, polytrimethylene terephthalate, polyethylene naphthalate, and polybutylene naphthalate; polyamide resins such as nylon (registered trademark); polystyrene resins such as polystyrene (PS), imido-modified polystyrene, acrylonitrile-butadiene-styrene (ABS) resin, imido-modified ABS resin, styrene-acrylonitrile copolymer (SAN) resin, and acrylonitrile-ethylene-propylene-diene-styrene (AES) resin; olefin resins such as polyethylene (PE) resin, polypropylene (PP) resin, polybutylene resin, and cycloolefin resin; cellulose resins such as nitrocellulose and cellulose acetate; silicone resins; thermoplastic resins such as fluororesin; epoxy resins such as bisphenol A-type epoxy resin, bisphenol F-type epoxy resin, isocyanurate-based epoxy resin, and hydantoin-based epoxy resin; amino resins such as melamine resin and urea resin; phenol resins; and thermosetting resins such as unsaturated polyester resin.

Among these, from the viewpoint that the near-infrared fluorescent material (A) is deactivated or the fluorescence intensity is improved, it is preferable that the resin (C) contains at least one selected from the group consisting of a polyamide resin, a polyethylene resin, a polypropylene resin, and a thermosetting resin. Furthermore, from the viewpoint of heat resistance and chemical resistance, it is more preferable that the resin (C) contains a polyamide resin. On the other hand, from the viewpoint of insulating properties and withstand voltage, it is more preferable that the resin (C) contains a thermosetting resin.

The content of the resin (C) in the masterbatch according to the present invention is not particularly limited as long as the particles (powder) containing the near-infrared fluorescent material (A) and the thermoplastic resin (B) can be mixed with the resin (C). However, since the resin (C) efficiently forms a continuous phase, and then the resin composition produced via a masterbatch and a molded object thereof can obtain an excellent light emitting efficiency, the content of the resin (C) may be in the range of preferably 20% by mass or more, and more preferably 30% by mass or more, and may be in the range of preferably 80% by mass or less, and more preferably 70% by mass or less, with respect to 100% by mass of the total of the near-infrared fluorescent material (A), the thermoplastic resin (B), and the resin (C).

Therefore, the total content of the near-infrared fluorescent material (A) and the thermoplastic resin (B) in the masterbatch according to the present invention may be in the range of preferably 20% by mass or more, and more preferably 30% by mass or more, and may be in the range of preferably 80% by mass or less, and more preferably 70% by mass or less, with respect to 100% by mass of the total of the near-infrared fluorescent material (A), the thermoplastic resin (B), and the resin (C).

### <Method for Producing Masterbatch and Resin Composition>

The method for producing a masterbatch according to the present invention includes: a step of melt-kneading a near-infrared fluorescent material (A) and a thermoplastic resin (B) other than a polyamide resin to obtain a kneaded product; a step of powdering the kneaded product obtained in the previous step to obtain particles containing the powdered near-infrared fluorescent material (A) and the powdered thermoplastic resin (B); and a step of mixing or kneading the particles obtained in the previous step with a resin (C).

First, at least the near-infrared fluorescent material (A) and the thermoplastic resin (B) are blended as essential blending components in the above-mentioned content, and uniformly mixed in a tumbler, a Henschel mixer (registered trademark) or the like, and then the mixture is charged into a melt kneading extruder such as a twin screw kneading extruder, and melt kneaded in a temperature range of the melting temperature of the thermoplastic resin (B) or higher to the temperature plus 100°C, for example, in the range of 180°C or higher and 300°C or lower, to obtain a kneaded product of the near-infrared fluorescent material and the thermoplastic resin (B) which becomes the dispersed phase. The melting temperature of the thermoplastic resin refers to a melting point in the case of a crystalline resin and a softening point (glass transition point) in the case of an amorphous resin (the same applies hereinafter).

Subsequently, the kneaded product is powdered. For example, the kneaded product can be extruded into a strand shape, and then left at room temperature or cooled by immersing in water at a temperature range of 5°C or higher and 60°C or lower, and cut to obtain a particulate shape such as a pellet shape or a chip shape. Thereafter, if necessary, the obtained particles are subjected to freeze pulverization, whereby particles (powder) containing the powdered near-infrared fluorescent material (A) and the powdered thermoplastic resin (B) having a desired size can be obtained. The average particle diameter of the particles (powder) after pulverization is not particularly limited, but is preferably in the range of 5 µm or more, more preferably in the range of 10 µm or more, and still more preferably in the range of 15 µm or more, and is preferably in the range of 500 µm or less, more preferably in the range of 200 µm or less, and still more preferably in the range of 100 µm or less.

Further, at least the thus obtained particles (powder) containing the near-infrared fluorescent material (A) and the thermoplastic resin (B) are blended with the resin (C) so as to have the above-mentioned content, and uniformly mixed in a tumbler, a Henschel mixer (registered trademark) or the like, whereby a resin mixture can be obtained.

Thereafter, when the resin (C) is a thermoplastic resin, the obtained resin mixture is charged into a melt-kneading extruder such as a twin-screw kneading extruder and melt-kneaded in a temperature range of the melting temperature of the resin (C) or higher and lower than the melting temperature of the thermoplastic resin (B), whereby the masterbatch of the present invention can be obtained. Furthermore, the masterbatch can be extruded into a strand shape, and then left at room temperature or cooled by immersing in water at a temperature range of 5°C or higher and 60°C or lower, and cut to obtain a particulate shape such as a pellet shape or a chip shape.

In a case where a thermosetting resin is used as the resin (C), since the resin (C) is still an intermediate of a prepolymer or an initial polycondensate in the obtained resin mixture, a curing agent is added to the resin mixture as necessary, the resin (C) is further molded (shaped), and then a heating step is performed, whereby the resin (C) forms a three dimensional structure, and the resin composition of the present invention can be obtained as a molded object. In the heating step in the polymerization, the temperature is preferably in a range from room temperature to lower than the melting temperature of the thermoplastic resin (B).

Subsequently, the method for producing the resin composition of the present invention includes a step of adding a resin (D) as a diluting resin to the above-described masterbatch and mixing or kneading the mixture.

The resin (D) is used as a diluting resin in the masterbatch, and the resin (D) after dilution is a resin different from the thermoplastic resin (B) and forms a continuous phase together with the resin (C) in the resin composition or the molded object.

Examples of the diluting resin (D) include the same resins as the resin (C). As the resin (C) and the diluting resin (D), different kinds of resins may be used, but it is preferable to use the same kind of resin.

In a case where an epoxy resin is used as the resin (D), the resin (D) may be in the form of an epoxy resin composition containing a curing agent.

The resin (D) may be a resin having a crosslinked structure. In this case, a crosslinking agent for forming a crosslinked structure may be added to an olefin resin such as a polyethylene resin or a polybutylene resin, and the resultant product may be molded into a molded object. Examples of the resin having a crosslinked structure include a crosslinked olefin resin such as a crosslinked polyethylene resin or a crosslinked polybutylene resin, and a silane-modified product thereof.

In addition, from the viewpoint of moldability and light emitting efficiency, preferable combinations of the thermoplastic resin (B), the resin (C), and the resin (D) include the following forms:
- A form in which the thermoplastic resin (B) is a polycarbonate resin, and the resin (D) is, and more preferably, the resin (C) and the resin (D) are polyamide resins;
- A form in which the thermoplastic resin (B) is a polycarbonate resin, and the resin (D) is, and more preferably, the resin (C) and the resin (D) are crosslinked polyethylene resins;
- A form in which the thermoplastic resin (B) is a polycarbonate resin, and the resin (D) is, and more preferably, the resin (C) and the resin (D) are epoxy resin compositions;
- A form in which the thermoplastic resin (B) is a polycarbonate resin, and the resin (D) is, and more preferably, the resin (C) and the resin (D) are thermoplastic polyurethane resins;
- A form in which the thermoplastic resin (B) is a polymethyl methacrylate resin, the resin (D) is, and more preferably, and the resin (C) and the resin (D) are crosslinked polyethylene resins;
- A form in which the thermoplastic resin (B) is a polypropylene resin, and the resin (D) is, and more preferably, the resin (C) and the resin (D) are polyethylene resins.

The content of the resin (D) in the resin composition according to the present invention is not particularly limited as long as it is a concentration at which the masterbatch can be mixed with the resin (D). However, since the resin (C) efficiently forms a continuous phase together with the resin (C), and then the resin composition and a molded object thereof can obtain an excellent light emitting efficiency, the content of the resin (D) may be in the range of preferably 20% by mass or more, and more preferably 30% by mass or more, and may be in the range of preferably 80% by mass or less, and more preferably 70% by mass or less, with respect to 100% by mass of the total of the near-infrared fluorescent material (A), the thermoplastic resin (B), the resin (C), and the resin (D).

Therefore, the total content of the near-infrared fluorescent material (A), the thermoplastic resin (B), and the resin (C) in the resin composition according to the present invention may be in the range of preferably 20% by mass or more, and more preferably 30% by mass or more, and may be in the range of preferably 80% by mass or less, and more preferably 70% by mass or less, with respect to 100% by mass of the total of the near-infrared fluorescent material (A), the thermoplastic resin (B), the resin (C), and the resin (D).

As a method for producing the resin composition, in a case where the resin (D) is a thermoplastic resin, the resin (D) is blended with the masterbatch, and the mixture is uniformly mixed in a tumbler, a Henschel mixer (registered trademark) or the like, whereby a resin mixture can be obtained. Thereafter, the obtained resin mixture is charged into a melt-kneading extruder such as a twin-screw kneading extruder and melt-kneaded in a temperature range of the melting temperature of the resin (C) and the resin (D) or higher and lower than the melting temperature of the thermoplastic resin (B), whereby the resin composition of the present invention can be obtained. Furthermore, the resin composition of the present invention can be extruded into a strand shape, and then left at room temperature or cooled by immersing in water at a temperature range of 5°C or higher and 60°C or lower, and cut to obtain a particulate shape such as a pellet shape or a chip shape.

In addition, in the case of producing a resin composition capable of forming a crosslinked structure such as a crosslinked polyolefin resin, for example, a conventionally known crosslinking method such as a chemical crosslinking method using a crosslinking agent (organic peroxide), an active energy ray crosslinking method using irradiation with an electron beam or X-ray, or a water crosslinking method using a dehydration condensation reaction of alkoxysilane after silane-modifying a polyolefin resin or the like can be adopted to obtain a resin composition as a molded object according to a conventional method. Therefore, the resin composition can be obtained as a molded object having a crosslinked structure can be obtained by a step of uniformly mixing the resin (D) (further a crosslinking agent in the case of a chemical crosslinking method) before crosslinking with a masterbatch (the thermoplastic resin (B) which has been silane-modified in advance in the case of a water crosslinking method), and then kneading and molding the obtained resin mixture using a known kneading device such as a two roll mill, a kneader, a Banbury mixer, or an extruder under conditions in which the temperature is in the range of the melting temperature of the resin (C) and the resin (D) or higher and the melting temperature of the resin (B) or lower, and further under conditions in which the temperature is in the range of lower than the thermal decomposition temperature of the crosslinking agent when the crosslinking agent is blended, and a crosslinking step according to each crosslinking method (for example, heating to the thermal decomposition temperature of the crosslinking agent or higher in the case of a chemical crosslinking method, irradiating with an active energy ray in the case of an active energy ray crosslinking method, and further exposing to an aqueous atmosphere in the case of a water crosslinking method).

On the other hand, in a case where the resin (D) is a thermosetting resin (in a preferred embodiment, when the resin (C) and the resin (D) are thermosetting resins), the resin (D) is added to the obtained masterbatch and stirred and mixed to produce a resin mixture. Since the resin (D) (in a preferred embodiment, the resin (C) and the resin (D)) is still present as an intermediate of a prepolymer or an initial polycondensate, the resin mixture obtained can be obtained as a molded object in which the resin (D) (in a preferred embodiment, the resin (C) and the resin (D)) forms a three dimensional structure by adding a curing agent to the resin mixture as necessary, further molding (shaping), and then performing a heating step. Alternatively, a molded object in which the resin (D) (in a preferred embodiment, the resin (C) and the resin (D)) forms a three dimensional structure can be obtained by adding the resin (D) and a curing agent to the obtained masterbatch, stirring and mixing, further molding (shaping), and then performing a heating step.

In the heating step in the polymerization, the temperature is preferably in a range from room temperature to lower than the melting temperature of the thermoplastic resin (B).

The content of the near-infrared fluorescent material (A) in the resin composition according to the present invention is not particularly limited, but may be in the range of preferably 0.000025% by mass or more, more preferably 0.00005% by mass or more, and still more preferably 0.0001% by mass or more, and may be in the range of preferably 0.6% by mass or less, more preferably 0.5% by mass or less, and still more preferably 0.48% by mass or less, with respect to 100% by mass of the total of the near-infrared fluorescent material (A), the thermoplastic resin (B), the resin (C), and the resin (D).

In the masterbatch according to the present invention, the diameter of the dispersed phase (dispersion diameter) formed by the near-infrared fluorescent material (A) and the thermoplastic resin (B) may be preferably in the range of 1 nm or more, and may be preferably in the range of 300 µm or less, and more preferably 200 µm or less. By setting the diameter to be in such a range, the light emitting efficiency of the resin composition and the molded object produced via the masterbatch according to the present invention is further improved.

The diameter of the dispersed phase can be controlled by the conditions of freeze-pulverization of the particles containing the near-infrared fluorescent material (A) and the thermoplastic resin (B), the conditions of melt-kneading when the resin (C) is mixed, the conditions of mixing or kneading when the resin (D) is mixed, and the like. In addition, the diameter of the dispersed phase can be measured by the method described in Examples.

In a case where a general light emission detector provided with a filter for cutting noise by the excitation light is used when the molded object is irradiated with the excitation light and the light emission thereof is detected, if the Stokes shift of the resin composition according to the present invention is small, the light emission is cut by the filter, and thus it is difficult to detect the light emission with high sensitivity. Therefore, in the resin composition according to the present invention, the Stokes shift (difference between the maximum absorption wavelength and the maximum emission wavelength) is preferably 10 nm or more, and the Stokes shift is more preferably 20 nm or more. As the Stokes shift is larger, the light emission emitted from the molded object can be detected with higher sensitivity even when a general detector provided with a filter for cutting noise due to the excitation light is used.

However, even when the Stokes shift is small, near-infrared fluorescence from the resin composition according to the present invention can be detected with high sensitivity under the following conditions. For example, if excitation can be performed with light having a wavelength shorter than the maximum absorption wavelength, fluorescence can be detected even if noise is cut. In addition, when the fluorescence spectrum is broad, it is possible to sufficiently detect fluorescence even if noise is cut. On the other hand, some fluorescent materials have a plurality of fluorescence peaks. In this case, even if the Stokes shift is small, as long as there is a fluorescent peak (second peak) on the longer wavelength side, it is possible to detect with high sensitivity even in a case where a detector provided with a filter by noise cut is used. In a case where the resin composition according to the present invention has a plurality of fluorescence, a difference between the fluorescence peak wavelength on the long wavelength side and the maximum absorption wavelength may be 30 nm or more and is preferably 50 nm or more. The conditions are not limited to the above-described conditions as long as the excitation sources and the cut filters are appropriately selected.

The resin composition according to the present invention containing the near-infrared fluorescent material (A) does not change in color in a visual state even when excited by excitation light in the near-infrared region, emits invisible fluorescence in the near-infrared region, and can be detected by a detector. Therefore, the maximum absorption wavelength may be 600 nm or longer for excitation light in the near-infrared region, but from the viewpoint of absorption efficiency, the maximum absorption wavelength is preferably close to the wavelength of the excitation light, more preferably 650 nm or longer, still more preferably 665 nm or longer, and particularly preferably 680 nm or longer. Furthermore, in the case of being used as a medical device such as an implant, the maximum absorption wavelength is preferably 700 nm or longer.

In the masterbatch and the resin composition containing the near-infrared fluorescent material (A) according to the present invention, and the molded object obtained from the composition, in a case where the color of an object to be irradiated does not change and the detection sensitivity is considered, there is no practical problem in a case where the maximum fluorescence wavelength is 650 nm or longer, but the maximum fluorescence wavelength is preferably 700 nm or longer and more preferably 720 nm or longer. In the case of having a plurality of fluorescence peaks, even in a case where the wavelength of the maximum fluorescence peak is 720 nm or shorter, it is sufficient that there is a fluorescence peak having a sufficient detection sensitivity at 740 nm or longer. In this case, the intensity of the fluorescence peak (second peak) on the long wavelength side is preferably 5% or more, and more preferably 10% or more, with respect to the intensity of the maximum fluorescence wavelength.

The resin composition according to the present invention and the molded object obtained from the composition preferably have strong absorption in the range of 650 nm or longer and 1500 nm or shorter, and emit strong fluorescence in this range. Light of 650 nm or longer is less likely to be affected by hemoglobin, and light of 1500 nm or shorter is less likely to be affected by moisture. In other words, light in the range of 650 nm or longer and 1500 nm or shorter has high skin permeability and is less likely to be affected by contaminants in a living body, and thus is suitable as a region of wavelengths of light used for visualizing a medical implant implanted under the skin or the like. In a case where the maximum absorption wavelength and the maximum fluorescence wavelength are in the range of 650 nm or longer and 1500 nm or shorter, the resin composition according to the present invention and the molded object obtained from the composition are suitable for detection by light in the range of 650 nm or longer and 1500 nm or shorter, and are suitable as a medical device or the like used in a living body.

The masterbatch or the resin composition according to the present invention may contain components other than the above-described resin component and the near-infrared fluorescent material (A) as long as the effects of the present invention are not impaired. Examples of the other components include an ultraviolet absorber, a heat stabilizer, a light stabilizer, an antioxidant, a flame retardant, a flame retardant aid, a crystallization accelerator, a plasticizer, an antistatic agent, a colorant, and a release agent.

### <Molded Object>

By molding the resin composition according to the present invention, a molded object capable of detecting light emission is obtained. That is, according to another embodiment of the present invention, a molded object obtained from the resin composition according to the present invention is provided.

The molding method is not particularly limited, and examples thereof include casting (casting method), injection molding using a mold, compression molding, extrusion molding by a T die or the like, and blow molding.

In the production of the molded object, it may be formed only from the resin composition according to the present invention, or the resin composition according to the present invention and other resin compositions may be used as raw materials. For example, the entire molded object may be molded from the resin composition according to the present invention, or only a part of the molded object may be molded from the resin composition according to the present invention. The resin composition according to the present invention is preferably used as a raw material for constituting a surface portion of the molded object. For example, in the case of molding a catheter, only the tip portion of the catheter is molded from the resin composition according to the present invention, and the remaining portion is molded from a resin composition not containing a near-infrared fluorescent material, whereby a catheter in which only the tip portion emits near-infrared fluorescence can be produced. In addition, a molded object that emits near-infrared fluorescence in a stripe shape can be produced by alternately laminating and molding the resin composition according to the present invention and a resin composition not containing a near-infrared fluorescent material. In addition, surface coating for enhancing the visibility of the molded object may be performed.

The light emission detection can be performed by a conventional method using a commercially available fluorescence or phosphorescence detection device or the like. As the excitation light used for fluorescence or phosphorescence detection, an arbitrary light source can be used, and in addition to a near-infrared lamp having a long wavelength width, a laser, an LED, or the like having a narrow wavelength width can be used.

The molded object obtained from the resin composition according to the present invention containing the near-infrared fluorescent material (A) emits near-infrared fluorescence that is not changed in color even when irradiated with light in the near-infrared region and can be detected with higher sensitivity than conventional ones. Therefore, the molded object is particularly suitable for a medical device in which at least a part thereof is inserted into or indwelled in a body of a patient.

When the molded object obtained from the resin composition according to the present invention containing the near-infrared fluorescent material (A) is subjected to fluorescence detection, it is preferable to irradiate excitation light in the near-infrared region, but when the color of the object to be irradiated may be somewhat reddish, the excitation light in the near-infrared region is not necessarily used. For example, in a case where a medical device in the body is to be subjected to fluorescence detection by irradiation with excitation light, it is necessary to use excitation light in a wavelength region having high permeability to a living body such as the skin. In this case, excitation light having a wavelength equal to or longer than 650 nm having high permeability to the living body may be used.

Examples of the medical device include a stent, a coil embolus, a catheter tube, an injection needle, an indwelling needle, a port, a shunt tube, a drain tube, and an implant.

### <Detection Method, Detection Device, and Checking System>

The detection method of the present invention includes a step of irradiating the molded object with a near-infrared light ray, and a step of detecting a near-infrared light emission emitted from the molded object with a device for detecting a near-infrared light emission.

In addition, the detection device of the present invention includes a means for irradiating the molded object with a near-infrared light ray, and a means for detecting a near-infrared light emission emitted from the molded object.

As the means for irradiating the molded object with a near-infrared light ray, any light sources can be used as long as they can irradiate exciting light used for detecting light emission, and in addition to a near-infrared lamp having a long wavelength width, a laser, an LED, or the like having a narrow wavelength width can be used. The wavelength of light sources for irradiation may be any wavelength capable of exciting a near-infrared fluorescent dye contained in the molded object, and a wavelength generally called near-infrared light is not particularly problematic. For example, the wavelength is preferably 650 nm or longer and more preferably 700 nm or longer, and is preferably 2500 nm or shorter and more preferably 1100 nm or shorter.

Irradiation of the molded object with a near-infrared light ray is not particularly limited as long as it is a conventional method, but for example, one or a plurality of light sources may be irradiated from above or below in the vertical direction of the molded object, may be irradiated from an oblique direction, or may be irradiated from different directions with respect to the molded object. When the light source and the detection device for near-infrared light emission described later are arranged at substantially the same position with respect to the molded object, it is preferable to use a ring illumination or a line illumination as the light source.

The means for detecting the near-infrared light emission may be a commercially available detection device for the near-infrared light emission, and is not particularly limited. For example, an imaging device such as a digital camera using an imaging element such as a charge coupled device (CCD) or a complementary MOS (CMOS), or a detection device such as a spectroscope, a photomultiplier tube, a PbS detector, or a photodiode can be used. The imaging device may be an area camera, and a line camera may also be used. In a case where a detector other than an imaging device such as a photodiode is used as means for detecting the near-infrared light emission, for example, an electric signal from the detector is amplified by a circuit board on which a signal amplification unit such as a head amplifier is mounted, and the presence or absence of the light emission can be detected by an output value of the electric signal after the amplification.

Further, by including a means for analyzing the presence or absence of the detection of the near-infrared light emission, it is possible to determine the presence or absence of the molded article of the present invention based on the light emission information. The analysis means may be one that is generally commercially available, and is not particularly limited, but for example, a personal computer in which image analysis software is installed, hardware capable of realizing an image processing algorithm (for example, a microcomputer, a programmable controller (PLC), a field-programmable gate array (FPGA), or the like), or the like can be used.

The position checking system of the present invention further includes a monitor that projects a captured image in addition to the detection device of the present invention. In a case where the molded object of the present invention is a medical device, it can be used as a medical device position checking system, and the position of the medical device to be inserted into or indwelled in a body by surgery or the like can be visually recognized.

### EXAMPLES

The present invention will be described in more detail with reference to the following Examples and Comparative Examples. However, the technical scope of the present invention is not limited to the following Examples only. In the following Examples, the expressions "%" and "part(s)" are used, and they represent "% by mass" and "part(s) by mass" unless otherwise specified.

### (Preparation of Near-Infrared Fluorescent Material (A))

Near-infrared fluorescent materials 1 to 3 (dyes 1 to 3 of the following formulae) were synthesized with reference to Chemistry A European Journal, 2009, Vol. 15, pp. 4857-4864.

### Dye 1 (compound of the above chemical formula 6-4-1)

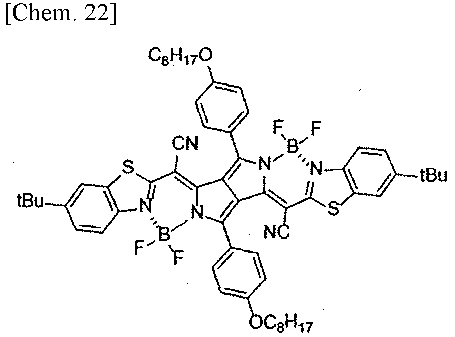

### Synthesis Example of Dye 1

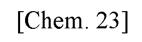

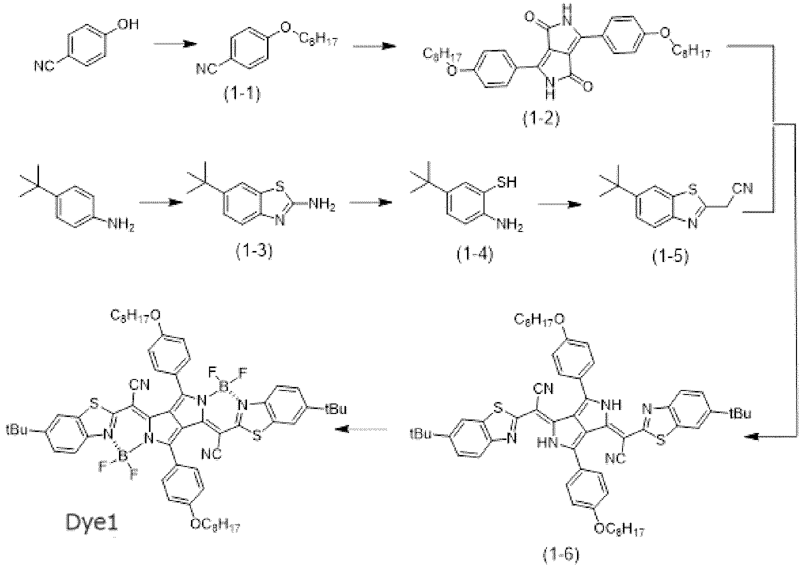

### <Synthesis of Dye 1>

The synthesis of dye 1 was carried out as follows with reference to Organic Letters, 2012, Vol. 4, pp. 2670-2673, and Chmestry A European Journal, 2009, Vol. 15, pp. 4857-4864.

4-Hydroxybenzonitrile (25.3 g, 212 mmol), acetone (800 mL), potassium carbonate (100 g, 724 mmol), and 1-bromooctane (48 g, 249 mmol) were put into a 2 L four-neck flask, followed by heating under reflux overnight. After the inorganic salt was filtered, acetone was removed under reduced pressure. Ethyl acetate was added to the obtained residue, and the organic layer was washed with water and saturated brine, and treated with anhydrous magnesium sulfate. After the magnesium sulfate was separated by filtration, the solvent was removed under reduced pressure, and the residue was purified by silica gel column chromatography (eluent: hexane/ethyl acetate) to obtain a colorless transparent liquid of 4-octoxybenzonitrile (1-1) (obtained amount: 45.2 g, yield: 92%).

Next, under an argon stream, tert-butyloxypotassium (25.18 g, 224.4 mmol) and tert-amyl alcohol (160 mL) were put into a 500 mL four-neck flask, and then a solution obtained by mixing the compound (1-1) (14.8 g, 64 mmol) synthesized above and tert-amyl alcohol (7mL) was further added thereto, followed by heating under reflux. While heating under reflux, a solution obtained by mixing succinic acid diisopropyl ester (6.5 g, 32 mmol) and tert-amyl alcohol (10 mL) was added dropwise over about 3 hours, and after completion of the dropwise addition, the mixture was heated under reflux for 6 hours. After the temperature was returned to room temperature, the obtained highly viscous reaction liquid was put into a solution of acetic acid:methanol:water = 1:1:1 (volume ratio), and the mixture was heated under reflux for several minutes, whereby a red solid was precipitated. The solid was separated by filtration and washed with heated methanol and water to obtain a red solid of 3,6-(4-octyloxyphenyl)pyrrolo[3,4-c]pyrrole-1,4(2H,5H)-dione (1-2) (obtained amount: 5.6 g, yield: 32%).

In addition, 4-tert-butylaniline (10 g, 67 mmol), acetic acid (70 mL), and sodium thiocyanate (13 g, 160 mmol) were put into a 200 mL three-neck flask. While maintaining the inside of the system at 15°C or lower, bromine (4.5 mL, 87 mmol) was added dropwise thereto over a period of about 20 minutes, and then, the resultant product was stirred at 15°C or lower for 3.5 hours. After the reaction liquid was put into 28% ammonia water (150 mL), the resultant product was stirred for a while, the precipitated solid was separated by filtration, the solid was extracted with diethyl ether, and the organic layer was washed with water. After the diethyl ether was removed under reduced pressure, the residue was purified by silica gel column chromatography (eluent: dichloromethane/ethyl acetate), whereby 2-amino-6-tert-butyl benzothiazole (1-3) was obtained as a pale yellow solid (obtained amount: 10.32 g, yield: 69%).

Next, under water-cooling, potassium hydroxide (75.4 g, 1340 mmol) and ethylene glycol (175 mL) were put into a 1 L four-neck flask. After an argon atmosphere was established in the inside of the system, the compound (1-3) (7.8 g, 37.8 mmol) was put thereinto, and the resultant product was allowed to react at 110°C for 18 hours after bubbling was performed with argon in order to remove the oxygen in the system. The reaction liquid was cooled with water to 40°C or lower, and 2 mol/L hydrochloric acid which was subjected to argon bubbling in advance was added dropwise to the inside of the system to neutralize the reaction liquid (around pH 7). The precipitated white solid was separated by filtration, washed with water, and dried under reduced pressure. And then, the white solid was purified by silica gel column chromatography (eluent: hexane/ethyl acetate) to obtain a white solid of 4-tert-butyl-2-mercaptoaniline (1-4) (obtained amount: 2.39 g, yield: 35%).

Furthermore, acetic acid (872 mg, 14.5 mmol) and acetonitrile (30 mL) were put into a 100 mL three-neck flask, and an argon atmosphere was established in the inside of the system. Under the argon atmosphere, malononitrile (2.4 g, 36.3 mmol) and the compound (1-4) (2.39 g, 13.2 mmol) were added thereto, followed by heating under reflux for 2 hours. After the acetonitrile was removed under reduced pressure, the residue was dissolved in ethyl acetate, then, the organic layer was washed with water and saturated brine, and treated with anhydrous magnesium sulfate. After the magnesium sulfate was separated by filtration, the solvent was removed under reduced pressure, and the residue was purified by silica gel column chromatography (eluent: hexane/ethyl acetate) to obtain a pale yellow solid of 2-(6-tert-butylbenzothiazol-2-yl) acetonitrile (1-5) (obtained amount: 1.98 g, yield: 65%).

Subsequently, under an argon stream, the compound (1-2) (1.91 g, 3.5 mmol), the compound (1-5) (1.77 g, 7.68 mmol), and dehydrated toluene (68 mL) were put into a 200 mL three-neck flask, followed by heating under reflux. While heating under reflux, phosphoryl chloride (2.56 mL, 27.4 mmol) was added dropwise thereto using a syringe, followed by further heating under reflux for 2 hours. After completion of the reaction, dichloromethane (40 mL) and a saturated sodium hydrogen carbonate aqueous solution (40 mL) were added thereto while ice-cooling, and the resultant product was extracted with dichloromethane. The organic layer was treated with anhydrous magnesium sulfate, the magnesium sulfate was separated by filtration, the solvent was removed under reduced pressure, and silica gel column chromatography (eluent: hexane/ethyl acetate) was used to roughly remove the impurities in the residue. The residue obtained by distilling off the solvent was purified again by silica gel column chromatography (eluent: hexane/dichloromethane) to obtain a green solid of a precursor (1-6) (obtained amount: 1.56 g, yield: 46%).

Finally, under an argon stream, the precursor (1-6) (1.52 g, 1.57 mmol), toluene (45 mL), triethylamine (4.35 mL, 31.4 mmol), and boron trifluoride diethyl ether complex (7.88 mL, 62.7 mmol) were put into a 200 mL three-neck flask, followed by heating under reflux for 1 hour. The reaction liquid was cooled with ice, and the precipitated solid was separated by filtration, and the solid was washed with water, a saturated sodium hydrogen carbonate aqueous solution, a 50% methanol aqueous solution and methanol, and dried under reduced pressure. The obtained residue was dissolved in toluene, and methanol was added thereto to precipitate a solid, whereby a dark green solid of dye 1 was obtained (obtained amount: 1.25 g, yield: 75%).

### Dye 2 (compound of the above chemical formula 6-5-1)

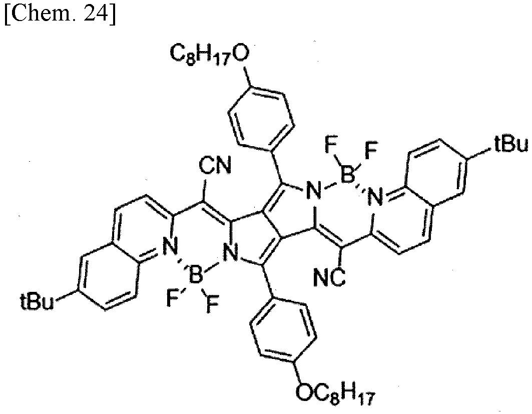

### Synthesis Example of Dye 2

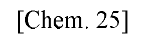

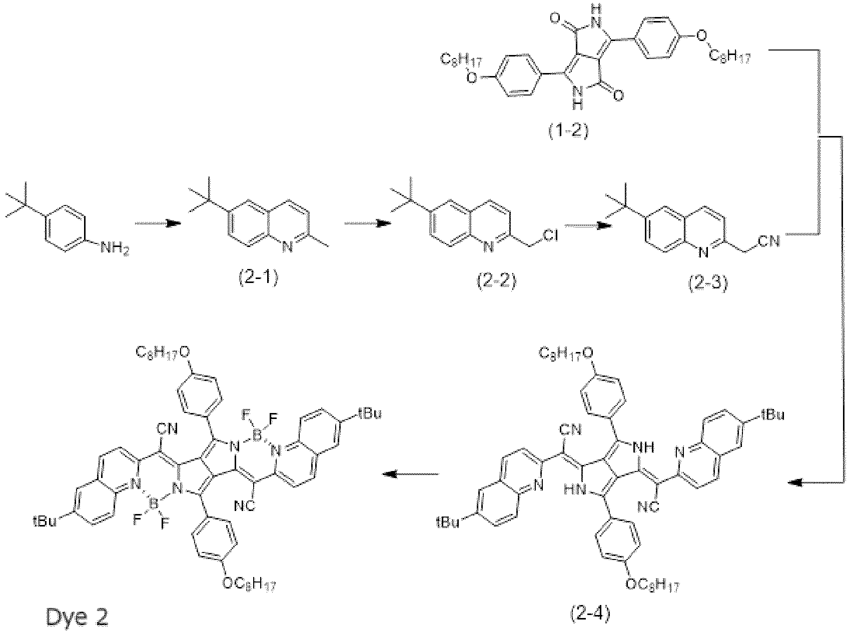

### <Synthesis of Dye 2>

The synthesis of dye 2 was carried out as follows with reference to Organic Letters, 2012, Vol. 4, pp. 2670-2673, and Chmestry A European Journal, 2009, Vol. 15, pp. 4857-4864.

4-tert-Butyl aniline (29.8 g, 0.2 mol) and 6 mol/L hydrochloric acid (100 mL) were put into a 300 mL three-neck flask, and crotonaldehyde (15.4 g, 0.22 mol) was added dropwise thereto while refluxing, followed by further refluxing for 2 hours. The refluxing was stopped, and when being hot, zinc chloride (27.2 g, 0.2 mol) was added thereto, followed by stirring at room temperature overnight. The supernatant was removed, and isopropanol was added to the yellow syrupy residue, followed by refluxing for 2 hours. After the mixture was cooled to 70°C, petroleum ether (200 mL) was added thereto, and the precipitated crystal was collected by filtration, washed with diethyl ether, and dried, whereby zinc complex was obtained. This zinc complex was added to a mixed liquid of water/ammonia (120 mL/60 mL), and the resultant product was extracted three times with diethyl ether (80 mL). The obtained organic layer was dried over anhydrous magnesium sulfate, and concentrated, whereby 6-tert-butyl-2-methyl-quinoline (2-1) was obtained as yellow liquid (obtained amount of 16.2 g, yield of 41%).

Next, the compound (2-1) (16.0 g, 80 mmol) and chloroform (50 mL) were put into a 200 mL two-neck flask, followed by stirring, and trichloroisocyanuric acid (6.52 g, 28 mmol) was added thereto by being divided into several portions. After the obtained mixture was refluxed for 1 hour, the precipitated solid was filtered and washed with chloroform, and the obtained organic layer was extracted three times with 1 mol/L sulfuric acid. The collected aqueous layers were combined, and the resultant product was adjusted to pH 3 with sodium carbonate aqueous solution, and extracted three times with diethyl ether. The organic layer was dried over anhydrous magnesium sulfate, and concentrated, whereby a pale yellow crystal of 2-chloromethyl-6-tert-butyl-quinoline (2-2) was obtained (obtained amount of 4.8 g, yield of 25.7%).

Furthermore, the compound (2-2) (4.7 g, 20 mmol), sodium cyanide (1.47 g, 30 mmol), a small amount of sodium iodide, and DMF (50 mL) were put into a 100 mL three-neck flask, and the resultant product was allowed to react at 60°C for 2 hours. The reaction liquid was cooled and extracted with water (200 mL)/ethyl acetate (300 mL), and the obtained ethyl acetate layer was further washed with water. The organic layer was dried over anhydrous magnesium sulfate and concentrated, and the resultant product was recrystallized from petroleum ether, whereby a white crystal of 2-(6-tert-butyl quinolin-2-yl)acetonitrile (2-3) was obtained (obtained amount of 1.9 g, yield of 42.4%).

Subsequently, under an argon stream, the compound (1-2) (2.18 g, 4.0 mmol) used in Synthesis of Dye 1, the compound (2-3) (1.9 g, 8.5 mmol), and dehydrated toluene (68 mL) were put into a 200 mL three-neck flask, followed by heating to reflux. While heating under reflux, phosphorus oxychloride (2.62 mL, 28 mmol) was added dropwise thereto using a syringe, followed by further heating under reflux for 2 hours. After completion of the reaction, dichloromethane (40 mL) and a saturated sodium hydrogen carbonate aqueous solution (40 mL) were added thereto while ice-cooling, and the resultant product was extracted with dichloromethane. The organic layer was treated with anhydrous magnesium sulfate, after the magnesium sulfate was separated by filtration, the solvent was removed under reduced pressure, and silica gel column chromatography (eluent: hexane/ethyl acetate) was used to roughly remove the impurities in the residue. The residue obtained by distilling off the solvent was purified again by silica gel column chromatography (eluent: hexane/dichloromethane) to obtain a green solid of a precursor (2-4) (obtained amount: 1.84 g, yield: 48%).

Finally, under an argon stream, the precursor (2-4) (1.72 g, 1.8 mmol), toluene (45 mL), triethylamine (4.35 mL, 31.4 mmol), and boron trifluoride diethyl ether complex (7.88 mL, 62.7 mmol) were put into a 200 mL three-neck flask, followed by heating under reflux for 1 hour. The reaction liquid was cooled with ice, and after the precipitated solid was separated by filtration, the solid was washed with water, a saturated sodium hydrogen carbonate aqueous solution, a 50% methanol aqueous solution and methanol, and dried under reduced pressure. The obtained residue was dissolved in toluene, and methanol was added thereto to precipitate a solid, whereby a dark green solid of dye 2 was obtained (obtained amount: 1.10 g, yield: 58%).

### Dye 3 (compound of the above chemical formula 6-11-1)

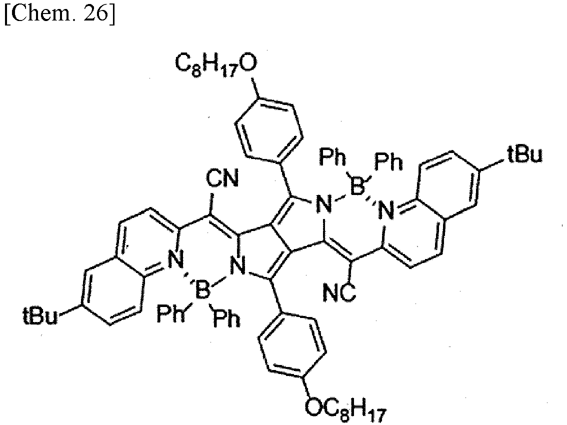

### <Synthesis of Dye 3>

As dye 3, the precursor 2-4 used in the synthesis of the dye 2 was used. Under an argon stream, the precursor (2-4) (630 mg, 0.65 mmol), N,N-diisopropylethylamine (258 mg, 2.0 mmol), and dichloromethane (20 mL) were put into a 100 mL two-neck flask, and chlorodiphenylborane (600 mg, 3.0 mmol) was added thereto while refluxing, and the resultant product was reacted overnight. The reaction liquid was washed with water, and the organic layer was dried over anhydrous magnesium sulfate and concentrated. The residue was washed with methanol, and then purified by column chromatography (eluent: dichloromethane/ethyl acetate = 100/10) to obtain a brown solid of dye 3 (obtained amount: 186 mg, yield: 22%).

### (Production Examples 1 to 9)

### •Preparation of resin composition for dispersed phase

The near-infrared fluorescent material (A) and the thermoplastic resin (B) were premixed in a tumbler in a blending amount shown in Table 1 below, and then melt-kneaded in a twin-screw vented extruder having an inner diameter of 30 mm at a set temperature shown in Table 1. The obtained kneaded product was cooled, and then pelletized by a pelletizer to produce pellets of Production Examples 1 to 8 (pellets (1) to (8)).

As the thermoplastic resin (B), the following resins were used.
The numerical values in Table 1 are based on parts by mass.
- B1: Polycarbonate resin (manufactured by Sumika Polycarbonate Ltd., SD POLYCA (trademark) 301-4)
- B2: Polymethyl methacrylate (PMMA) resin (manufactured by Mitsubishi Chemical Corporation, ACRYPET (trademark) VH 001)
- B3: Polystyrene resin (manufactured by DIC Corporation, DICSTYRENE CR-4500)
- B4: Polypropylene resin (manufactured by Prime Polymer Co., Ltd., Prime Polypro (registered trademark) J106G)

### •Pulverization of resin composition for dispersed phase

Next, the pellets (1) to (8) obtained above were pulverized using a freezing pulverizer JFC-2000 manufactured by Japan Analytical Industry Co., Ltd. That is, a pellet and a tungsten steel ball were put in a stainless steel container, the container was covered with a lid, and freezing pulverization was performed under the conditions of preliminary cooling with liquid nitrogen for 10 minutes, a pulverization time of 15 minutes, and the number of reciprocating motions of 1200 times/minute to obtain a powder. Next, the powder was dispersed in ethanol, and the obtained dispersion liquid was subjected to pressure filtration using a filter having a predetermined capture particle diameter (300 µm) to obtain powders (1) to (8) having average particle diameters shown in Table 1.

Separately, the pellet (1) was subjected to freeze pulverization using the same freeze pulverizer under the conditions of preliminary cooling with liquid nitrogen for 5 minutes, a pulverization time of 8 minutes, and the number of reciprocating motions of 1200 times/minute to obtain a powder. Next, the powder was dispersed in ethanol, and the obtained dispersion liquid was subjected to pressure filtration using a filter having a predetermined capture particle diameter (500 µm) to obtain a powder (9) having an average particle diameter shown in Table 1. The maximum particle diameter of the powder (9) measured by the method described below (Measurement of Average Particle Diameter of Pulverized Product) was 324 µm.

### (Measurement of Average Particle Diameter of Pulverized Product)

The volume average particle diameter of the obtained powder was measured by an image analysis particle size distribution meter (manufactured by JASCO International Co., Ltd.: IF-3200) using SOLMIX (registered trademark) A-7 (manufactured by Japan Alcohol Trading CO.,LTD.). For the powder (9), the maximum particle diameter (cumulative 100%) was also measured.

### (Light Emission Evaluation)

Light emission evaluation of the obtained powders (1) to (9) was performed by the following method.

Camera: STC-MBCM200U3 V-NIR manufactured by Omron Sentech Co., Ltd.
Light source unit: SPL-CC manufactured by REVOX Inc., Lamps having wavelengths of 720 to 850 nm were installed on the substrate.

The distance between the light source and the sample (0.5 g of powder was placed flat on a glass plate of 52 × 76 mm) was set to 20 cm, the sample was placed horizontally, the sample was installed at the distance of 30 cm from the camera at a vertical position, and the imaging state of the camera was visually evaluated based on the following criteria.
A: Very clear
B: Clear
C: Light emission was observed
NG: Light emission was not observed (no light emission).

The constitution and evaluation results of the powders (1) to (9) are shown in Table 1 below. A blank space in Table 1 indicates that the materials are not used.

**[Table 1]**

| | | Production Example | | | | | | | | |
|---|---|---|---|---|---|---|---|---|---|---|
| | | 1 | 2 | 3 | 4 | 5 | 6 | 7 | 8 | 9 |
| Pellet No. | | (1) | (2) | (3) | (4) | (5) | (6) | (7) | (8) | (9) |
| Dye | Dye 1 | 0.005 | 0.005 | 0.005 | 0.005 | 0.200 | 0.001 | | | 0.005 |
| | Dye 2 | | | | | | | 0.005 | | |
| | Dye 3 | | | | | | | | 0.005 | |
| Resin | B1 | 99.995 | | | | 99.800 | 99.999 | 99.995 | 99.995 | 99.995 |
| | B2 | | 99.995 | | | | | | | |
| | B3 | | | 99.995 | | | | | | |
| | B4 | | | | 99.995 | | | | | |
| Set temperature (°C) | | 300 | 220 | 200 | 200 | 300 | 300 | 300 | 300 | 300 |
| Powder No. | | (1) | (2) | (3) | (4) | (5) | (6) | (7) | (8) | (9) |
| Light emission evaluation | | A | A | A | B | A | C | A | A | A |
| Volume average particle diameter (µm) | | 49 | 27 | 19 | 32 | 51 | 51 | 49 | 49 | 152 |

### (Example 1: MB and sheet formed of island of Production Example 1 (dye-encapsulated PC) and sea of polyamide)

60 parts by mass of the powder (1) obtained in Production Example 1 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 220°C), and then pelletized to produce a masterbatch (1).

33.4 parts by mass of the masterbatch (1) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (1) having a length of 127 mm × a width of 12.7 mm × a thickness of 1 mm.

### (Example 2: MB and sheet formed of island of Production Example 1 (dye-encapsulated PC) and sea of crosslinked polyethylene)

60 parts by mass of the powder (1) obtained in Production Example 1 and 40 parts by mass of a polyethylene resin (NOVATEC (trademark) LL UJ580, linear low-density polyethylene, manufactured by Japan Polyethylene Corporation) were stirred and mixed in a tumbler, and then melt-kneaded in a twin-screw vented extruder having an inner diameter of 30 mm (set temperature: 140°C) and pelletized to produce a masterbatch (2).

33.4 parts by mass of the masterbatch (2), 64.6 parts by mass of a polyethylene resin (NOVATEC (trademark) LL UJ580, linear low-density polyethylene, manufactured by Japan Polyethylene Corporation), and 2 parts by mass of a crosslinking agent (PERHEXA (registered trademark) 25B-40, 2,5-dimethyl-2,5-di(t-butylperoxy)hexane, manufactured by NOF Corporation) were blended in a tumbler, and the blended product was kneaded with a two-roll mill in an environment of 125°C and hot pressed at 200°C for 2 minutes at 10 MPa to prepare a sheet sample (2) having a length of 127 mm × a width of 12.7 mm × a thickness of 1 mm.

### (Example 3: island of Production Example 2 (dye-encapsulated PMMA) and sea of crosslinked polyethylene)

60 parts by mass of the powder (2) obtained in Production Example 2 and 40 parts by mass of a polyethylene resin (NOVATEC (trademark) LL UJ580, linear low-density polyethylene, manufactured by Japan Polyethylene Corporation) were stirred and mixed in a tumbler, melt-kneaded in a twin-screw vented extruder having an inner diameter of 30 mm (set temperature: 140°C), and pelletized to produce a masterbatch (3).

33.4 parts by mass of the masterbatch (3), and 64.6 parts by mass of a polyethylene resin (NOVATEC (trademark) LL UJ580, linear low-density polyethylene, manufactured by Japan Polyethylene Corporation) were blended in a tumbler, and the blended product was kneaded with a two-roll mill in an environment of 125°C and hot pressed at 200°C for 2 minutes at 10 MPa to prepare a sheet sample (3) having a length of 127 mm × a width of 12.7 mm × a thickness of 1 mm.

### (Example 4: MB and sheet formed of island of Production Example 3 (dye-encapsulated PS) and sea of crosslinked polyethylene)

60 parts by mass of the powder (3) obtained in Production Example 3 and 40 parts by mass of a polyethylene resin (NOVATEC (trademark) LL UJ580, linear low-density polyethylene, manufactured by Japan Polyethylene Corporation) were stirred and mixed in a tumbler, and then melt-kneaded in a twin-screw vented extruder having an inner diameter of 30 mm (set temperature: 140°C) and pelletized to produce a masterbatch (4).

33.4 parts by mass of the masterbatch (4), 64.6 parts by mass of a polyethylene resin (NOVATEC (trademark) LL UJ580, linear low-density polyethylene, manufactured by Japan Polyethylene Corporation), and 2 parts by mass of a crosslinking agent (PERHEXA (registered trademark) 25B-40, 2,5-dimethyl-2,5-di(t-butylperoxy)hexane, manufactured by NOF Corporation) were blended in a tumbler, and the blended product was kneaded with a two-roll mill in an environment of 125°C and hot pressed at 200°C for 2 minutes at 10 MPa to prepare a sheet sample (4) having a length of 127 mm × a width of 12.7 mm × a thickness of 1 mm.

### (Example 5: island of Production Example 1 (dye-encapsulated PC) and sea of epoxy resin)

60 parts by mass of the powder (1) obtained in Production Example 1 and 40 parts by mass of an epoxy resin composition (EPICLON (registered trademark) 850, manufactured by DIC Corporation) were stirred and mixed with a stirrer, and then defoamed under reduced pressure to obtain a masterbatch (5).

Next, 33.4 parts by mass of the obtained masterbatch (5) and 66.6 parts by mass of an epoxy resin composition [a mixture of 100 parts by mass of EPICLON (registered trademark) 850 manufactured by DIC Corporation and 90 parts by mass of a curing agent (EPICLON (registered trademark) B-5001 manufactured by DIC Corporation)] were stirred and mixed with a stirrer, and then defoamed under reduced pressure to obtain a resin composition (5). Next, the obtained resin composition (5) was injected into a mold, and then heated and cured at 120°C for 1 hour to prepare a sheet sample (5) having a length of 127 mm × a width of 12.7 mm × a thickness of 1 mm.

### (Example 6: MB and sheet formed of island of Production Example 4 (dye-encapsulated PP) and sea of polyethylene resin)

60 parts by mass of the powder (4) obtained in Production Example 4 and 40 parts by mass of a polyethylene resin (NOVATEC (trademark) LL UJ580, linear low-density polyethylene, manufactured by Japan Polyethylene Corporation) as the resin (C) were stirred and mixed in a tumbler, and then melt-kneaded in a twin-screw vented extruder having an inner diameter of 30 mm (set temperature: 140°C), and then pelletized to produce a masterbatch (6).

33.4 parts by mass of the masterbatch (6) and 66.6 parts by mass of a polyethylene resin (NOVATEC (trademark) LL UJ580, linear low-density polyethylene, manufactured by Japan Polyethylene Corporation) were blended in a tumbler, and the blended product was melt-molded in an extruder (set temperature: 140°C) equipped with a T-die to prepare a sheet sample (6) having a length of 127 mm × a width of 12.7 mm × a thickness of 1 mm.

### (Example 7: MB and sheet formed of island of Production Example 1 (dye-encapsulated PC) and sea of TPU resin)

60 parts by mass of the powder (1) obtained in Production Example 1 and 40 parts by mass of a thermoplastic polyurethane resin (Tecoflex EG65D, manufactured by Lubrizol Corporation) as the resin (C) were stirred and mixed in a tumbler, melt-kneaded in a twin-screw vented extruder having an inner diameter of 30 mm (set temperature: 190°C), and then pelletized to produce a masterbatch (7).

33.4 parts by mass of the masterbatch (7) and 66.6 parts by mass of a thermoplastic polyurethane resin (Tecoflex EG65D, manufactured by Lubrizol Corporation) were blended in a tumbler, and the blended product was melt-molded in an extruder (set temperature: 200°C) equipped with a T-die to prepare a sheet sample (7) having a length of 127 mm × a width of 12.7 mm × a thickness of 1 mm.

### (Example 8: MB and sheet formed of island of Production Example 5 (dye-encapsulated PC) and sea of polyamide)

60 parts by mass of the powder (5) obtained in Production Example 5 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 200°C), and then pelletized to produce a masterbatch (8).

33.4 parts by mass of the masterbatch (8) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (8) having a length of 127 mm × a width of 12.7 mm × a thickness of 1 mm.

### (Example 9: MB and sheet formed of island of Production Example 6 (dye-encapsulated PC) and sea of polyamide)

60 parts by mass of the powder (6) obtained in Production Example 6 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 200°C), and then pelletized to produce a masterbatch (9).

33.4 parts by mass of the masterbatch (9) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (9) having a length of 127 mm × a width of 12.7 mm × a thickness of 1 mm.

### (Example 10: MB and sheet formed of island of Production Example 7 (dye-encapsulated PC) and sea of polyamide)

60 parts by mass of the powder (7) obtained in Production Example 7 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 200°C), and then pelletized to produce a masterbatch (10).

33.4 parts by mass of the masterbatch (10) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (10) having a length of 127 mm × a width of 12.7 mm × a thickness of 1 mm.

### (Example 11: MB and sheet formed of island of Production Example 8 (dye-encapsulated PC) and sea of polyamide)

60 parts by mass of the powder (8) obtained in Production Example 8 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 200°C), and then pelletized to produce a masterbatch (11).

33.4 parts by mass of the masterbatch (11) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (11) having a length of 127 mm × a width of 12.7 mm × a thickness of 1 mm.

### (Example 12: MB and sheet formed of island of Production Example 9 (dye-encapsulated PC coarse product) and sea of polyamide)

60 parts by mass of the powder (9) obtained in Production Example 9 and 40 parts by mass of a polyamide resin (PEBAX (registered trademark) 4033SA01, manufactured by Arkema) were stirred and mixed in a tumbler, melt-kneaded in a twin-screw vented extruder having an inner diameter of 30 mm (set temperature: 200°C), and then pelletized to produce a masterbatch (12).

33.4 parts by mass of the masterbatch (12) and 66.6 parts by mass of a polyamide resin (PEBAX (registered trademark) 4033SA01, manufactured by Arkema) were blended in a tumbler, and the blended product was melt-molded in an extruder (set temperature: 220°C) equipped with a T-die to prepare a sheet sample (12) having a length of 127 mm × a width of 12.7 mm × a thickness of 1 mm.

### [Evaluation]

### (Diameter of Dispersed Phase)

The average diameter of the dispersed phase of each of the obtained sheet samples (1) to (12) was evaluated by the following method.

That is, each of the sheet samples (1) to (12) was cut in a direction perpendicular to the surface thereof, and the exposed cut surface was subjected to a polishing treatment to be smoothed. Thereafter, the cut surface was observed with a digital microscope (VHX - 7000, manufactured by Keyence Corporation), and an image was captured. Next, at a magnification (200 times), 50 arbitrary dispersed phases (island portions of the sea-island structure) that did not overlap were selected and measured as circle equivalent diameters, and the particle size distribution thereof was determined. The average diameter was calculated as the number average.

### (Light Emitting Efficiency)

The light emitting efficiency of each of the obtained sheet samples (1) to (12) was evaluated by the following method.
Camera: STC-MBCM200U3V-NIR manufactured by Sentech Co., Ltd.
Light source unit: SPL-CC manufactured by REVOX Inc., Lamp having wavelengths of 720 to 850 nm were installed on the substrate.

The distance between the light source and the sheet sample was set to 20 cm, the sheet sample was placed horizontally, the sample was placed at the distance of 30 cm from the camera in the vertical position, and the image was captured by the camera (see Fig. 1). The obtained image was processed in 256 stages from 0 to 255 by image processing software "Image" and evaluated. A case where no light was emitted was defined as stage 0, and the highest stage number in the image was defined as the light emitting efficiency of the sheet. A higher stage number indicates a higher light emitting efficiency.

The evaluation results are shown in Table 2 below.

**[Table 2]**

| | Sheet sample No. | Average diameter of dispersed phase (µm) | Light emitting efficiency (stage number) |
|---|---|---|---|
| Example 1 | (1) | 49 | 98 |
| Example 2 | (2) | 51 | 86 |
| Example 3 | (3) | 25 | 85 |
| Example 4 | (4) | 20 | 83 |
| Example 5 | (5) | 48 | 95 |
| Example 6 | (6) | 50 | 55 |
| Example 7 | (7) | 78 | 53 |
| Example 8 | (8) | 112 | 57 |
| Example 9 | (9) | 52 | 45 |
| Example 10 | (10) | 48 | 100 |
| Example 11 | (11) | 49 | 97 |
| Example 12 | (12) | 151 | 35 |

As is clear from Table 2 above, it was found that the resin compositions of Examples 1 to 12 exhibited excellent light emitting efficiency.

### REFERENCE SIGNS LIST

1: Camera
2: Analysis device
3: Light source unit
4: Sample (sheet sample)

## Claims

1. A masterbatch comprising: a near-infrared fluorescent material (A); a thermoplastic resin (B) other than a polyamide resin; and a resin (C) different from the thermoplastic resin (B), wherein the resin (C) forms a continuous phase, and a dispersed phase containing the near-infrared fluorescent material (A) and the thermoplastic resin (B) is formed in the continuous phase.

2. The masterbatch according to claim 1, wherein the near-infrared fluorescent material (A) is at least one compound selected from the group consisting of a compound represented by the following general formula (II₁), a compound represented by the following general formula (II₂), a compound represented by the following general formula (II₃), and a compound represented by the following general formula (II₄): 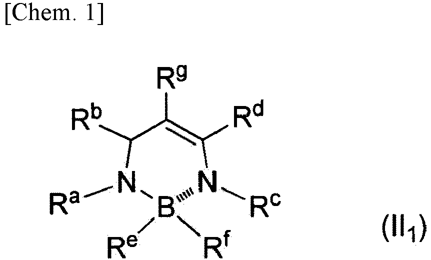 wherein
R^{a} and R^{b} form an aromatic 5-membered ring, an aromatic 6-membered ring, or a condensed aromatic ring formed by condensation of two or three 5-membered rings or 6-membered rings, together with the nitrogen atom to which R^{a} is bonded and the carbon atom to which R^{b} is bonded;
R^{c} and R^{d} form an aromatic 5-membered ring, an aromatic 6-membered ring, or a condensed aromatic ring formed by condensation of two or three 5-membered rings or 6-membered rings, together with the nitrogen atom to which R^{c} is bonded and the carbon atom to which R^{d} is bonded;
each of R^{e} and R^{f} independently represents a halogen atom or an oxygen atom; and
R^{g} represents a hydrogen atom or an electron withdrawing group,
provided that, in a case where each of R^{e} and R^{f} is an oxygen atom, R^{e}, the boron atom bonded to R^{e}, R^{a}, and the nitrogen atom bonded to R^{a} may together form a ring, and R^{f}, the boron atom bonded to R^{f}, R^{c}, and the nitrogen atom bonded to R^{c} may together form a ring, in a case where R^{e} is an oxygen atom and does not form a ring, R^{e} is an oxygen atom having a substituent, and in a case where R^{f} is an oxygen atom and does not form a ring, R^{f} is an oxygen atom having a substituent; 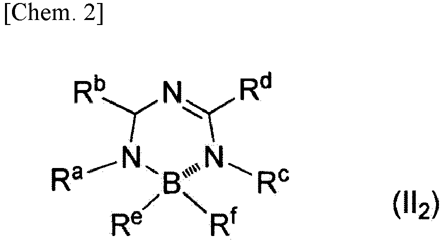 wherein each of R^{a} to R^{f} is the same as in the formula (II₁); 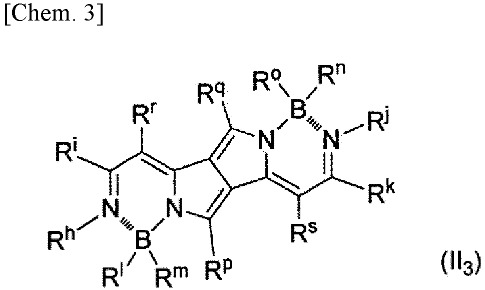 wherein
R^{h} and Rⁱ form an aromatic 5-membered ring, an aromatic 6-membered ring, or a condensed aromatic ring formed by condensation of two or three 5-membered rings or 6-membered rings, together with the nitrogen atom to which R^{h} is bonded and the carbon atom to which Rⁱ is bonded;
R^{j} and R^{k} form an aromatic 5-membered ring, an aromatic 6-membered ring, or a condensed aromatic ring formed by condensation of two or three 5-membered rings or 6-membered rings, together with the nitrogen atom to which R^{j} is bonded and the carbon atom to which R^{k} is bonded;
each of R^{l}, R^{m}, Rⁿ, and R^{o} independently represents a halogen atom, a C₁₋₂₀ alkyl group, a C₁₋₂₀ alkoxy group, an aryl group, or a heteroaryl group;
each of R^{p} and R^{q} independently represents a hydrogen atom, a halogen atom, a C₁₋₂₀ alkyl group, a C₁₋₂₀ alkoxy group, an aryl group, or a heteroaryl group; and
each of R^{r} and R^{s} independently represents a hydrogen atom or an electron withdrawing group; 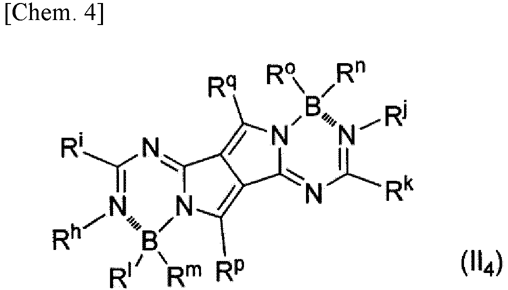
wherein each of R^{h} to R^{q} is the same as in the formula (II₃), and
wherein the masterbatch has a maximum fluorescence wavelength of 650 nm or longer.

3. The masterbatch according to claim 2, wherein the near-infrared fluorescent material (A) contains at least one compound selected from the group consisting of compounds represented by any of the following general formulae (II₃-1) to (II₃-6) and compounds represented by any of the following general formulae (II₄-1) to (II₄-6): 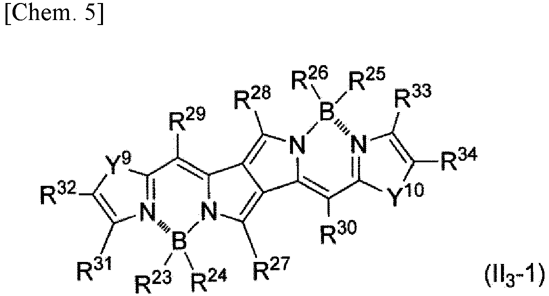 wherein
each of R²³, R²⁴, R²⁵, and R²⁶ independently represents a halogen atom, a C₁₋₂₀ alkyl group, a C₁₋₂₀ alkoxy group, an aryl group, or a heteroaryl group;
each of R²⁷ and R²⁸ independently represents a hydrogen atom, a halogen atom, a C₁₋₂₀ alkyl group, a C₁₋₂₀ alkoxy group, an aryl group, or a heteroaryl group;
each of R²⁹ and R³⁰ independently represents a hydrogen atom or an electron withdrawing group;
each of Y⁹ and Y¹⁰ independently represents a sulfur atom, an oxygen atom, a nitrogen atom, or a phosphorus atom;
(p4) each of R³¹ and R³² independently represents a hydrogen atom, a halogen atom, a C₁₋₂₀ alkyl group, a C₁₋₂₀ alkoxy group, an aryl group, or a heteroaryl group, or
(p5) R³¹ and R³² together form an aromatic 5-membered ring which may have a substituent or an aromatic 6-membered ring which may have a substituent;
(q4) each of R³³ and R³⁴ independently represents a hydrogen atom, a halogen atom, a C₁₋₂₀ alkyl group, a C₁₋₂₀ alkoxy group, an aryl group, or a heteroaryl group, or
(q5) R³³ and R³⁴ together form an aromatic 5-membered ring which may have a substituent or an aromatic 6-membered ring which may have a substituent; 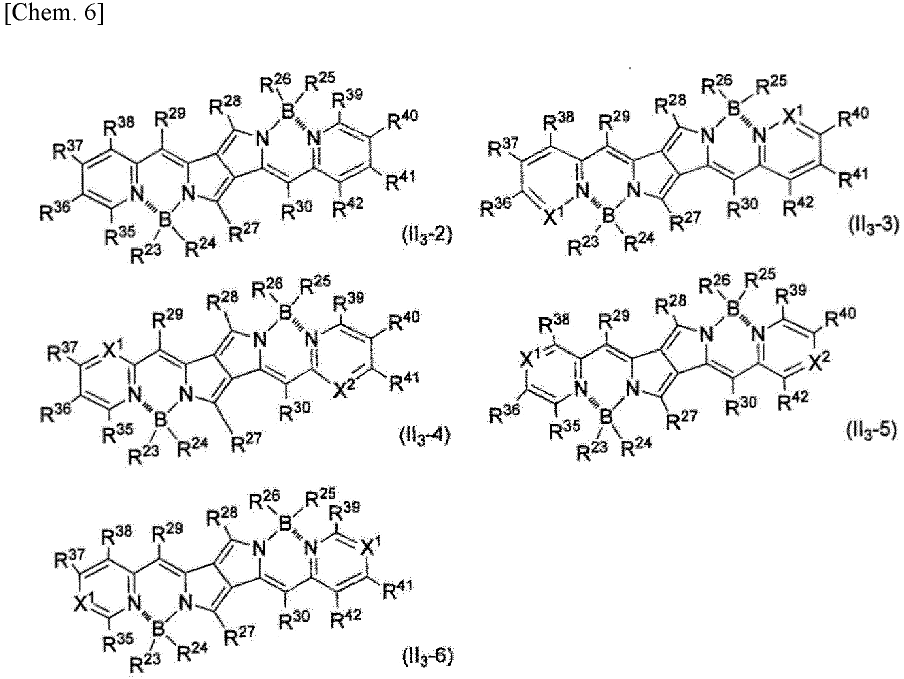
wherein each of R²³ to R³⁰ is the same as in the formula (II₃-1);
each of X¹ and X² independently represents a nitrogen atom or a phosphorus atom;
(p6) each of R³⁵, R³⁶, R³⁷, and R³⁸ independently represents a hydrogen atom, a halogen atom, a C₁₋₂₀ alkyl group, a C₁₋₂₀ alkoxy group, an aryl group, or a heteroaryl group, or
(p7) R³⁵ and R³⁶ together form an aromatic 5-membered ring which may have a substituent or an aromatic 6-membered ring which may have a substituent, and each of R³⁷ and R³⁸ independently represents a hydrogen atom, a halogen atom, a C₁₋₂₀ alkyl group, a C₁₋₂₀ alkoxy group, an aryl group, or a heteroaryl group, or
(p8) R³⁶ and R³⁷ together form an aromatic 5-membered ring which may have a substituent or an aromatic 6-membered ring which may have a substituent, and each of R³⁵ and R³⁸ independently represents a hydrogen atom, a halogen atom, a C₁₋₂₀ alkyl group, a C₁₋₂₀ alkoxy group, an aryl group, or a heteroaryl group, or
(p9) R¹⁷ and R³⁸ together form an aromatic 5-membered ring which may have a substituent or an aromatic 6-membered ring which may have a substituent, and each of R³⁵ and R³⁶ independently represents a hydrogen atom, a halogen atom, a C₁₋₂₀ alkyl group, a C₁₋₂₀ alkoxy group, an aryl group, or a heteroaryl group;
(q6) each of R³⁹, R⁴⁰, R⁴¹, and R⁴² independently represents a hydrogen atom, a halogen atom, a C₁₋₂₀ alkyl group, a C₁₋₂₀ alkoxy group, an aryl group, or a heteroaryl group, or
(q7) R³⁹ and R⁴⁰ together form an aromatic 5-membered ring which may have a substituent or an aromatic 6-membered ring which may have a substituent, and each of R⁴¹ and R⁴² independently represents a hydrogen atom, a halogen atom, a C₁₋₂₀ alkyl group, a C₁₋₂₀ alkoxy group, an aryl group, or a heteroaryl group, or
(q8) R⁴⁰ and R⁴¹ together form an aromatic 5-membered ring which may have a substituent or an aromatic 6-membered ring which may have a substituent, and each of R³⁹ and R⁴² independently represents a hydrogen atom, a halogen atom, a C₁₋₂₀ alkyl group, a C₁₋₂₀ alkoxy group, an aryl group, or a heteroaryl group, or
(q9) R⁴¹ and R⁴² together form an aromatic 5-membered ring which may have a substituent or an aromatic 6-membered ring which may have a substituent, and each of R³⁹ and R⁴⁰ independently represents a hydrogen atom, a halogen atom, a C₁₋₂₀ alkyl group, a C₁₋₂₀ alkoxy group, an aryl group, or a heteroaryl group; 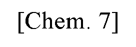 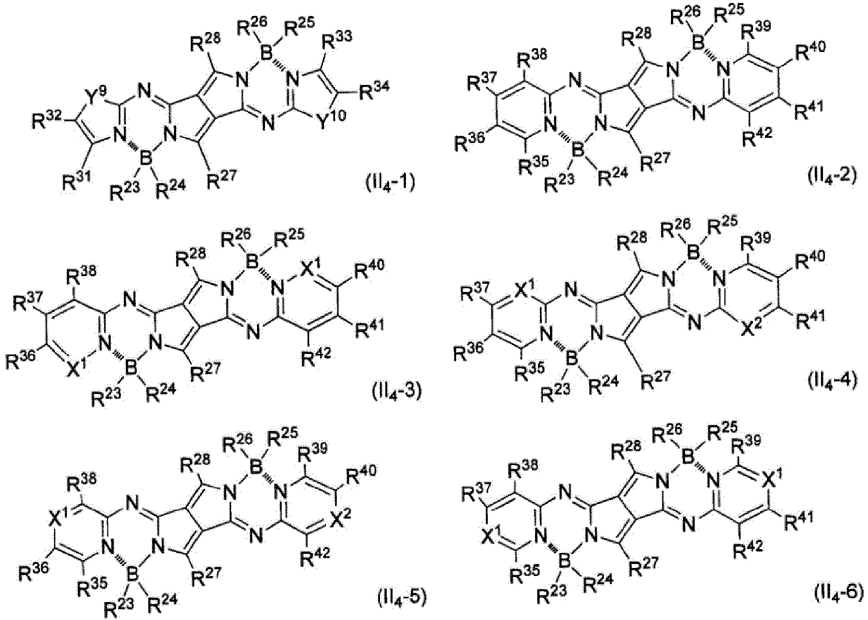
wherein each of R²³ to R²⁸ is the same as in the formula (II₃-1);
each of R³¹ to R³⁴, Y⁹, and Y¹⁰ in the formula (II₄-1) is the same as in the formula (II₃-1), each of R³⁵ to R⁴² in the formulae (II₄-2) to (II₄-6) is the same as in the formula (II₃-2), and each of X¹ and X² in the formulae (II₄-3) to (II₄-6) is the same as in the formula (II₃-3).

4. The masterbatch according to claim 3, wherein the near-infrared fluorescent material (A) contains at least one compound selected from the group consisting of compounds represented by any of the following general formulae (II₃-7) to (II₃-9) and (II₄-7) to (II₄-9): 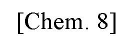 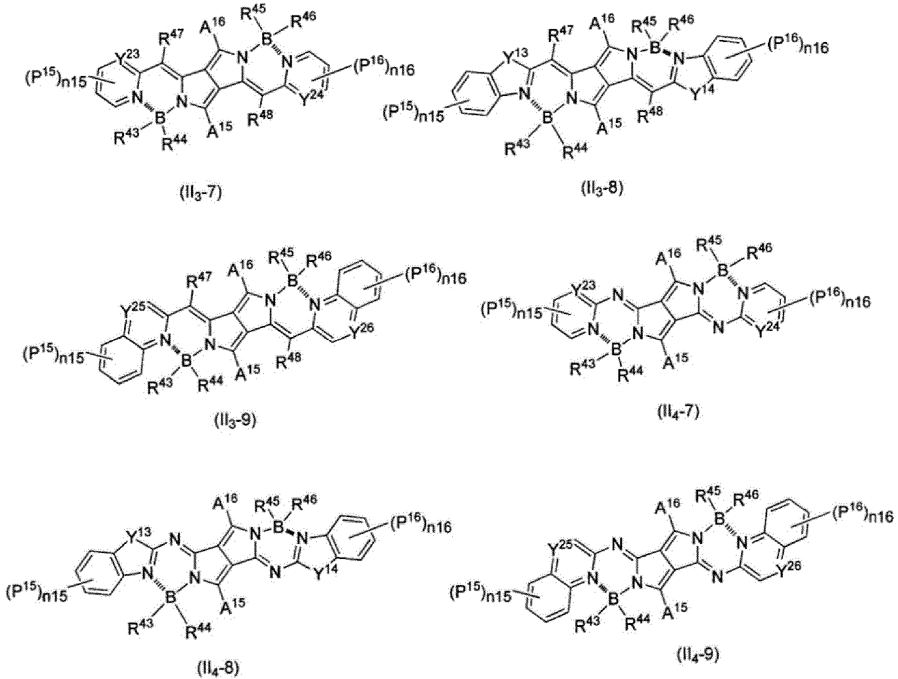
wherein each of Y²³ and Y²⁴ independently represents a carbon atom or a nitrogen atom;
each of Y¹³ and Y¹⁴ independently represents an oxygen atom or a sulfur atom;
each of Y²⁵ and Y²⁶ independently represents a carbon atom or a nitrogen atom;
each of R⁴⁷ and R⁴⁸ independently represents a hydrogen atom or an electron withdrawing group;
each of R⁴³, R⁴⁴, R⁴⁵, and R⁴⁶ independently represents a halogen atom or an aryl group which may have a substituent;
each of P¹⁵ and P¹⁶ independently represents a halogen atom, a C₁₋₂₀ alkyl group, a C₁₋₂₀ alkoxy group, an amino group, a monoalkylamino grouop, or a dialkylamino group;
each of n15 and n16 independently represents an integer of 0 to 3;
each of A¹⁵ and A¹⁶ independently represents a hydrogen atom, a halogen atom, or a phenyl group which may have 1 to 3 substituents selected from the group consisting of a C₁₋₂₀ alkyl group, a C₁₋₂₀ alkoxy group, an amino group, a monoalkylamino group, and a dialkylamino group.

5. The masterbatch according to any one of claims 1 to 4, wherein a content of the near-infrared fluorescent material (A) is 0.001% by mass or more and 0.5% by mass or less with respect to 100% by mass of a total of the near-infrared fluorescent material (A) and the thermoplastic resin (B) other than a polyamide resin.

6. The masterbatch according to any one of claims 1 to 5, wherein the thermoplastic resin (B) other than a polyamide resin comprises at least one selected from the group consisting of a thermoplastic polyurethane (TPU) resin, a polycarbonate (PC) resin, a vinyl chloride resin, an acrylic resin, a polyester resin, a polystyrene resin, an olefin resin, and a polyacetal (POM) resin.

7. The masterbatch according to any one of claims 1 to 6, wherein the resin (C) comprises at least one selected from the group consisting of a polyamide resin, a polyethylene resin, a polypropylene resin, and a thermosetting resin.

8. The masterbatch according to claim 7, wherein the resin (C) comprises a polyamide resin.

9. The masterbatch according to claim 7, wherein the resin (C) comprises a thermosetting resin.

10. The masterbatch according to any one of claims 1 to 9, wherein a total content of the near-infrared fluorescent material (A) and the thermoplastic resin (B) is in the range of 20% by mass or more and 80% by mass or less with respect to 100% by mass of a total of the near-infrared fluorescent material (A), the thermoplastic resin (B), and the resin (C).

11. A method for producing a masterbatch, comprising: a step of melt-kneading a near-infrared fluorescent material (A) and a thermoplastic resin (B) other than a polyamide resin to obtain a kneaded product; a step of powdering the kneaded product obtained in the previous step to obtain particles containing the powdered near-infrared fluorescent material (A) and the powdered thermoplastic resin (B); and a step of mixing or kneading the particles obtained in the previous step with a resin (C), wherein the resin (C) forms a continuous phase and a dispersed phase containing the near-infrared fluorescent material (A) and the thermoplastic resin (B) is formed in the continuous phase.

12. A method for producing a resin composition, the method comprising a step of adding a diluting resin (D) to the masterbatch according to any one of claims 1 to 10 and mixing or kneading the mixture, wherein the resin composition contains a near-infrared fluorescent material (A), a thermoplastic resin (B) other than a polyamide resin, a resin (C) different from the thermoplastic resin (B), and a resin (D) different from the thermoplastic resin (B), the resins (C) and (D) form a continuous phase, and a dispersed phase containing the near-infrared fluorescent material (A) and the thermoplastic resin (B) is formed in the continuous phase.

13. The method for producing a resin composition according to claim 12, wherein the resin (D) comprises at least one selected from the group consisting of a polyamide resin, a polyethylene resin, a polypropylene resin, a thermosetting resin, and a crosslinked polyethylene resin.

14. The method for producing a resin composition according to claim 12 or 13, wherein a content of the resin (D) is in the range of 20% by mass or more and 80% by mass or less with respect to 100% by mass of a total of the near-infrared fluorescent material (A), the thermoplastic resin (B), the resin (C), and the resin (D).

15. The method for producing a resin composition according to any one of claims 12 to 14, wherein the resin composition is used as a medical material.

16. The method for producing a resin composition according to any one of claims 12 to 15, wherein at least a part of the resin composition is used as a material for a medical device used in a body of a patient.

17. A method for producing a molded object, comprising a step of melt-molding the resin composition obtained by the production method according to any one of claims 12 to 16.
